# EUROPEAN PATENT APPLICATION

(11) **EP 4 696 390 A1**
(43) Date of publication of application: **18.02.2026**
(21) Application number: 25189324.4
(22) Date of filing: 14.07.2025
(51) Int. Cl.: A63F 13/24

(54) **GAME CONTROLLER**

(30) Priority: 17.07.2024 JP 2024114282; 17.07.2024 JP 2024114283; 17.07.2024 JP 2024114284
(71) Applicant: Nintendo Co., Ltd., Kyoto 601-8501 (JP)
(72) Inventor: OKAMURA, Takanori, Kyoto, 601-8501 (JP); JINGUJI, Gagaku, Kyoto, 601-8501 (JP); TAKEI, Masaya, Kyoto, 601-8501 (JP); MINAGAWA, Shinta, Kyoto, 601-8501 (JP)
(74) Representative: Bardehle Pagenberg Partnerschaft mbB Patentanwälte Rechtsanwälte

(57) **Abstract**

A game controller configured to be grasped by a user to provide an input comprises a first input section, a housing and a first lid. The first input section is at a front side of the game controller. The housing is a single component comprising a first grip portion and a second grip portion and having an opening that spans between the front side and an upper side of the game controller, wherein the first grip portion and the second grip portion extend at least partly downward at a left side and at a right side, respectively, of the housing. The first lid at least partly covers the opening of the front side of the game controller.

## Description

### BACKGROUND OF THE INVENTION

### Field of the Invention

The present invention relates to a controller for a user to perform input operations.

### Description of the Background Art

Conventionally, there are controllers that can be grasped by the user with both hands by grasping the grips provided on the left side and on the right side (see, for example, International Publication WO2017/212663).

There are controllers having a front side housing and a back side housing fitted together, and separate grips attached thereto. With such a controller, there is a seam between the attached grip and the front side or back side housing, and the user may possibly touch the seam when grasping the controller.

### SUMMARY OF THE INVENTION

The present invention employs the following configurations (1) to (33) to solve the problem mentioned above.
(1)
   An example of the present invention is a game controller configured to be grasped by a user to provide an input. The game controller comprises a first input section, a housing, and a first lid. The first input section is at a front side of the game controller. The housing is a single-component housing comprising a first grip portion and a second grip portion and having an opening that spans between the front side and an upper side of the game controller, wherein the first grip portion and the second grip portion extend at least partly downward at a left side and at a right side, respectively, of the housing. The first lid at least partly covers the opening of the front side of the game controller.
(2)
   In configuration (1) described above, the housing may at least partly form a back surface of the game controller.
(3)
   In configuration (1) or (2) described above, the housing may form a left side surface and a right side surface of the game controller and a part of the front surface of the game controller, spanning from the back side of the game controller to left edge and right edge the opening at the front side of the game controller.
(4)
   In any of configurations (1) to (3) described above, the first lid may have a first hole through which the first input section passes. The game controller may further comprise a second lid that at least partly covers the opening of the upper side of the game controller.
(5)
   In configuration (4) described above, the second lid may be shaped to divide the opening of the upper side of the game controller in a forward-rearward direction and a left-right direction, thereby a right front side opening, a right rear side opening, a left front side opening, and a left rear side opening may be formed. At a right side of the upper surface of the game controller, the right front side opening may be formed by the second lid, the first lid and the housing. At a right side of the upper surface of the game controller, the right rear side opening rearward of the right front side opening may be formed by the second lid and the housing. At a left side of the upper surface of the game controller, the left front side opening may be formed by the second lid, the first lid and the housing. At a left side of the upper surface of the game controller, the left rear side opening rearward of the left front side opening may be formed by the second lid and the housing. The game controller comprises: a second input section at the right front side opening; a third input section at the left front side opening; a fourth input section at the right rear side opening; and a fifth input section at the left rear side opening.
(6)
   In any of configurations (1) to (5) described above, the first lid may be assembled directly or indirectly to the housing.
(7)
   In any of configurations (1) to (6) described above, the first lid may have a first hole through which the first input section passes. A detection circuit configured to detect an input to the first input section may be housed in a cavity formed by at least the housing and the first lid.
(8)
   In configuration (7) described above, the game controller may comprise a first frame on which the detection circuit is positioned, and a second frame having a second hole, the first input section passing through the second hole. The first input section is positioned at the second frame, and the second frame at least partly covers a front surface of the first frame. The first lid at least partly covers a front surface of the second frame.
(9)
   In configuration (8) described above, the first frame and the second frame may be fixed together by a first fixing member. The first lid may at least partly cover the first fixing member.
(10)
   In configuration (8) or (9) described above, the first lid may be fixed to the second frame and the housing.
(11)
   In configuration (10) described above, a back surface of the first lid and a front surface of the second frame may be fixed together with an adhesive. A first engagement portion on an outer edge of the opposing surface of the first lid may be engaged with a second engagement portion of the housing.
(12)
   In any of configurations (8) to (11) described above, the game controller may comprise a second fixing member. The second fixing member extends across an edge of the opening at the front side of the game controller and joins an inner surface of the housing and the second frame.
(13)
   In configuration (12) described above, the second fixing member may include a housing opposing portion that opposes the inner surface of the housing and a second frame opposing portion that opposes the second frame. The housing opposing portion may have an opening into which a projecting portion that projects from the inner surface of the housing is inserted. The second frame opposing portion may include a fastened portion that is fastened to the second frame with a fastener.
(14)
   In configuration (12) or (13) described above, the edge of the opening at the front side of the game controller may include a first edge portion extending in a left-right direction and a second edge portion extending upward from an end of the first edge portion. The second fixing member may extend across the second edge portion.
(15)
   In any of configurations (12) to (14) described above, one second fixing member may be positioned above the first grip portion and another second fixing member may be positioned above the second grip portion.
(16)
   In any of configurations (12) to (15) described above, at least a part of the second fixing member may be covered by the first lid.
(17)
   In any of configurations (12) to (16) described above, one second fixing member may be at a right side of the game controller and extends across a right side edge of the opening at the front side of the game controller and another second fixing member may be at a left side of the game controller and extend across a left side edge of the opening at the front side of the game controller. The inner surface of the housing may be fixed to a fixing portion at a left side portion of the first frame and a fixing portion at a right side portion of the first frame upward relative to the second fixing member, when viewing the front side of the game controller.
(18)
   In any of configurations (1) to (3) described above, the edge of the opening may include a first edge portion, a second edge portion, a third edge portion, and a fourth edge portion. The first edge portion extends upward and rightward on the front side and on a left side of the game controller. The second edge portion extends rearward and leftward from an upper end of the first edge portion on the upper side and on the left side of the game controller. The third edge portion extends upward and leftward on the front side and on a right side of the game controller. The fourth edge portion extends rearward and rightward from the upper end of the third edge portion on the upper side and on the right side of the game controller.
(19)
   In configuration (18) described above, on the front side of the game controller, the edge of the opening may include a fifth edge portion, a sixth edge portion, and a seventh edge portion. The fifth edge portion extends in a left-right direction. The sixth edge portion extends upward and leftward from a left end of the fifth edge portion. The seventh edge portion extends upward and rightward from a right end of the fifth edge portion. The first edge portion may extend upward and rightward from an upper end of the sixth edge portion. The third edge portion may extend upward and leftward from an upper end of the seventh edge portion.
(20)
   In configuration (18) or (19) described above, the game controller may further comprise a second lid that at least partly covers the opening and is shaped to divide, left and right, the opening at the upper side of the game controller. The second lid may be shaped to divide the opening of the upper side of the game controller in a left-right direction. At a left side of the upper surface of the game controller, a left side opening may be formed by the second lid, the first lid and the second edge portion of the housing. At a right side of the upper surface of the game controller, a right side opening may be formed by the second lid, the first lid and the fourth edge portion of the housing. The game controller may comprise a second input section positioned in the left side opening, and a third input section positioned in the right side opening. The upper end of the first edge portion may be located forward relative to a left end of the second input section. The upper end of the third edge portion may be located forward relative to a right end of the third input section.
(21)
   In any of configurations (1) to (3) described above, the edge of the opening may include a front left edge portion, an upper left edge portion, a front right edge portion, and an upper right edge portion. The front left edge portion extends in an up-down direction on a left side of the front side of the game controller. The upper left edge portion extends in a front-rear direction on a left side of the upper side of the game controller so as to form, together with the front left edge portion, a first corner that protrudes toward an inner side of the game controller in a left-right direction. The front right edge portion extends in the up-down direction on a right side of the front side of the game controller. The upper right edge portion extends in the front-rear direction on a right side of the upper side of the game controller so as to form, together with the front right edge portion, a second corner that protrudes toward the inner side of the game controller in the left-right direction.
(22)
   In configurations (21) described above, the game controller may further comprise a second lid that at least partly covers the opening and is shaped to divide, left and right, the opening at the upper side of the game controller. The second lid may be shaped to divide the opening of the upper side of the game controller in a left-right direction. At a left side of the upper surface of the game controller, a left side opening may be formed by the second lid, the first lid and the upper left edge portion. At a left side of the upper surface of the game controller, a right side opening may be formed by the second lid, the first lid and the upper right edge portion. The game controller may comprise a second input section positioned in the left side opening, and a third input section positioned in the right side opening. The first corner may be located forward relative to a left end of the second input section. The second corner may be located forward relative to a right end of the third input section.
(23)
   In any of configurations (1) to (3) described above, the edge of the opening may include an upper left edge portion and an upper right edge portion. The upper left edge portion extends in a front-rear direction on a left side of the upper side of the game controller from an upper end of a first seam located between the housing and a front left portion of the first lid. The front left portion is on the front side and on a left side of the game controller. The upper right edge portion extends in the front-rear direction on a right side of the upper side of the game controller from an upper end of a second seam located between the housing and a front right portion of the first lid. The front right portion is on the front side and on a right side of the game controller.
(24)
   In configurations (23) described above, the game controller may further comprise a second lid that at least partly covers the opening and is shaped to divide, left and right, the opening at the upper side of the game controller. The second lid may be shaped to divide the opening of the upper side of the game controller in a left-right direction, thereby the opening may include a left side opening and a right side opening. At a left side of the upper surface of the game controller, the left side opening may be formed by the second lid, an upper edge left portion extending in a right direction from the upper end of the first seam of the first lid and the upper left edge portion of the housing. At a right side of the upper surface of the game controller, the right side opening may be formed by the second lid, an upper edge right portion extending in a left direction from the upper end of the second seam of the first lid and the upper right edge portion of the housing. The game controller may comprise a second input section comprising a button and positioned in the left side opening, and a third input section comprising a button and positioned in the right side opening. The upper end of the first seam may be located forward relative to a left end of the second input section. The upper end of the second seam may be located forward relative to a right end of the third input section.
(25)
   In any of configurations (1) to (24) described above, a cavity formed by the housing may extend to a position inside the first grip portion and to a position inside the second grip portion.
(26)
   In configuration (20), (22), or (24) described above, the second input section and the third input section may have a greater length in a left-right direction than in a front-rear direction.
(27)
   Another example of a game controller described herein is a game controller configured to be grasped by a user to provide an input. The game controller comprises a housing, a first lid, and a first input section. The housing includes a base portion, a first grip portion, and a second grip portion. The first grip portion and the second grip portion extend at least partly downward from a left side and a right side, respectively, of the base portion. The base portion, the first grip portion, and the second grip portion are constructed as a unitary piece. The base portion, the first grip portion, and the second grip portion at least partly form a cavity that is open at an upper side and a front side. The first lid at least partly covers the cavity at the front side. The first input section is positioned to be operable from the front side of the game controller and includes at least one of a button and a directional input section.
(28)
   In configuration (27) described above, the base portion may include at least a part of a back surface of the game controller, at least a part of a left side surface of the game controller, at least a part of a right side surface of the game controller, and at least a part of a front surface of the game controller, the front surface including left and right edges of the opening.
(29)
   In configuration (27) or (28) described above, the game controller may comprise a second lid that at least partly covers the cavity at the upper side.
(30)
   In configuration (29) described above, the second lid may be shaped to divide an opening at the upper side of the cavity in a forward-rearward direction and a left-right direction. A right front side opening may be formed by the second lid, the first lid and the housing. A right rear side opening rearward of the right front side opening may be formed by the second lid and the housing. A left front side opening may be formed by the second lid, the first lid and the housing. A left rear side opening rearward of the left front side opening may be formed by the second lid and the housing. The game controller may comprise a second input section at the right front side opening, a third input section at the left front side opening, a fourth input section at the right rear side opening, and a fifth input section at the left rear side opening.
(31)
   In any of configurations (27) to (30) described above, an edge of the housing that bounds the cavity may include a first edge portion, a second edge portion, a third edge portion, and a fourth edge portion. The first edge portion extends at least partly upward and rightward on the front side and a left side of the game controller. The second edge portion extends at least partly rearward and leftward from an upper end of the first edge portion on an upper side and the left side of the game controller. The third edge portion extends at least partly upward and leftward on the front side and a right side of the game controller. The fourth edge portion extends at least partly rearward and rightward from an upper end of the third edge portion on the upper side and the right side of the game controller.
(32)
   In configuration (31) described above, on the front side of the game controller, the edge of the housing that bounds the cavity may include a fifth edge portion, a sixth edge portion, and a seventh edge portion. The fifth edge portion extends in a left-right direction. The sixth edge portion extends at least partly upward and leftward from a left end of the fifth edge portion. The seventh edge portion extends at least partly upward and rightward from a right end of the fifth edge portion. The first edge portion may extend at least partly upward and at least partly rightward from an upper end of the six edge portion. The third edge portion may extend at least partly upward and at least partly leftward from an upper end of the seventh edge portion.
(33)
   Another example of the present invention is a game controller that comprises a faceplate, an upper lid, and a body. The body includes a rear portion, a first grip portion formed so as to cover periphery of a first internal space, and a second grip portion formed so as to cover the periphery of a second internal space. The first grip portion and the second grip portion extend from opposite sides of the rear portion. The rear portion, the first grip portion and the second grip portion are formed seamlessly. A first valley is formed in a transition portion from the rear portion of the body to the first grip portion, wherein the first valley has a first valley bottom that at least partly extends upward in an up-down direction and at least partly extends leftward in a left-right direction. A second valley is formed in a transition portion from the rear portion of the body to the second grip portion, wherein the second valley has a second valley bottom that at least partly extends upward in the up-down direction and at least partly extends rightward in the left-right direction. The game controller further comprises an operation section that is located at a front side of the game controller, is configured to be operated by a user, and includes at least one of a button and a directional input section.

With the controller described above, it is possible to suppress the formation of a seam at such a position that the user is likely to touch.

These and other features, aspects, and advantages of the subject matter described herein will become more apparent from the following detailed description when taken in conjunction with the accompanying drawings.

### BRIEF DESCRIPTION OF THE DRAWINGS

FIG. 1 is a view showing an example of a game controller according to the present example;
FIG. 2 is a view showing an example of a housing of the game controller;
FIG. 3 shows six orthogonal views of an example of the game controller;
FIG. 4 is a view showing an example of the game controller being grasped by the user as viewed from the front side;
FIG. 5 is a view showing an example of the game controller being grasped by the user as viewed from the back side;
FIG. 6 is a view showing an example of the game controller being grasped by the user as viewed from the front side;
FIG. 7 is a view showing an example of the game controller being grasped by the user as viewed from the back side;
FIG. 8 is a view showing an example of the game controller being grasped by the user as viewed from the front side;
FIG. 9 is a view showing an example of the game controller being grasped by the user as viewed from the back side;
FIG. 10 is an image view showing an example of a first menu;
FIG. 11 is an image view showing an example of a second menu;
FIG. 12 is an enlarged view of a right side area of an upper surface of an example of the game controller;
FIG. 13 is a back view showing an example of a game controller according to a variation of the present example;
FIG. 14 is a view showing an example of a finger operating a right grip button as viewed from the side;
FIG. 15 is an enlarged view of an example of the game controller around the right grip button;
FIG. 16 is an exploded perspective view of an example of a first frame and a membrane sheet;
FIG. 17 is an exploded perspective view showing an example of how analog sticks and components related to buttons on the upper surface are attached to the first frame;
FIG. 18 is an exploded perspective view showing an example of how components provided on the back side of the first frame are attached to the first frame;
FIG. 19 is an exploded perspective view showing an example of the right grip button and a flange rubber included in a right grip unit;
FIG. 20 is an exploded perspective view showing an example of components of a component holder unit of the right grip unit;
FIG. 21 is an exploded perspective view showing an example of components of a vibration holder unit of the right grip unit;
FIG. 22 is a view showing an example of how the right grip button shown in FIG. 19 is attached to the housing;
FIG. 23 is a view showing an example of how the component holder unit shown in FIG. 20 is attached to the housing;
FIG. 24 is an exploded perspective view of an example of the right grip button and the component holder unit as viewed from the front side;
FIG. 25 is a view showing an example of how the vibration holder unit shown in FIG. 21 is attached to the component holder unit;
FIG. 26 is a view showing an example of a connector connected to a grip substrate and a vibration motor;
FIG. 27 is a view showing an example of a cross section of the game controller near the right grip button;
FIG. 28 is a cross-sectional view of an example of the game controller near the right grip unit according to a variation;
FIG. 29 is a view showing an example of how the first frame is attached to the housing;
FIG. 30 is a view showing an example of a state in which the first frame is fixed to the housing;
FIG. 31 is a view showing an example of a state in which the first frame is fixed to the housing;
FIG. 32 is an exploded perspective view showing an example of how an upper lid, etc., are attached to the first frame;
FIG. 33 is a view showing an example of a configuration around the rotation axis of an R button;
FIG. 34 is an exploded perspective view showing an example of a second frame and components held by the second frame;
FIG. 35 is a view showing an example of how the second frame is attached to the first frame;
FIG. 36 is a cross-sectional view of an example of the game controller along a plane that is perpendicular to the left-right direction and passes through the position of the directional pad;
FIG. 37 is a view showing an example of the positional relationship between protruding portions of the second frame and shafts of a ZR button and a ZL button;
FIG. 38 is a view showing an example of the game controller before locking parts are attached;
FIG. 39 is a view showing an example of the game controller after the locking parts are attached;
FIG. 40 is a view showing an example of how a front lid is attached to the housing 2;
FIG. 41 is a view showing an example of the housing of the game controller according to a variation of the embodiment described above;
FIG. 42 is a view showing an example of the game controller according to a variation of the embodiment described above; and
FIG. 43 is a view showing an example of the game controller according to a variation of the embodiment described above.

### DESCRIPTION OF THE PREFERRED EMBODIMENTS

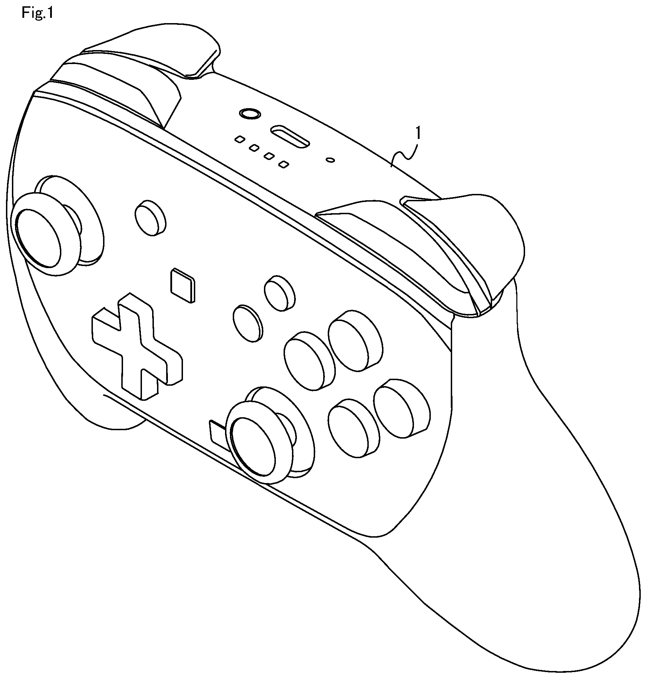

A game controller, which is an example of a controller according to the present embodiment, will now be described with reference to the drawings. FIG. 1 is a view showing an example of the game controller according to the present embodiment. In the present example, the game controller 1 shown in FIG. 1 is used, for example, by the user to perform operations on a game device (not shown). The game controller 1 can communicate with the game device, and transmits to the game device operation data representing input operations to the input members of the game controller 1 (specifically, buttons and analog sticks, etc., to be described below). In the present example, the game controller 1 communicates wirelessly with the game device. In other embodiments, the game controller 1 may communicate with the game device over a wired connection.

### [1. Outline of game controller]

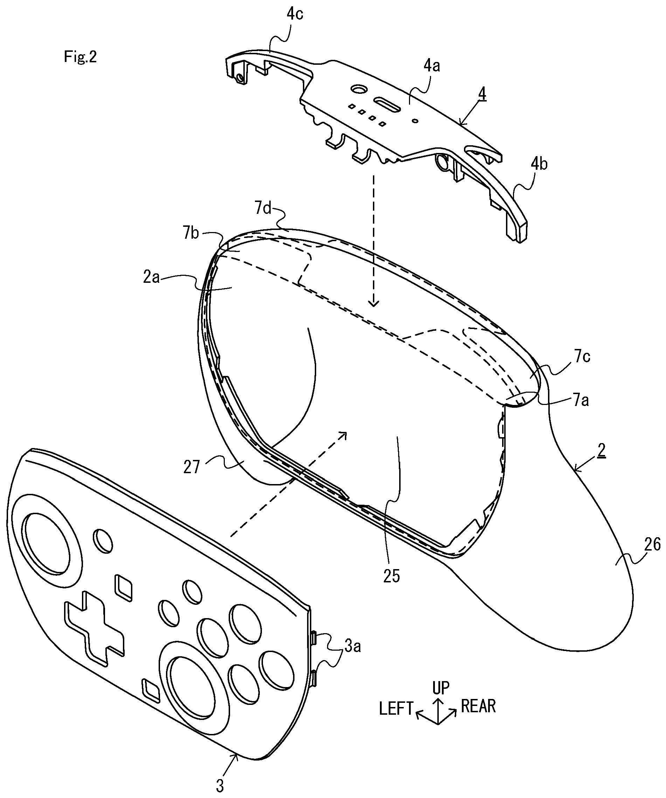

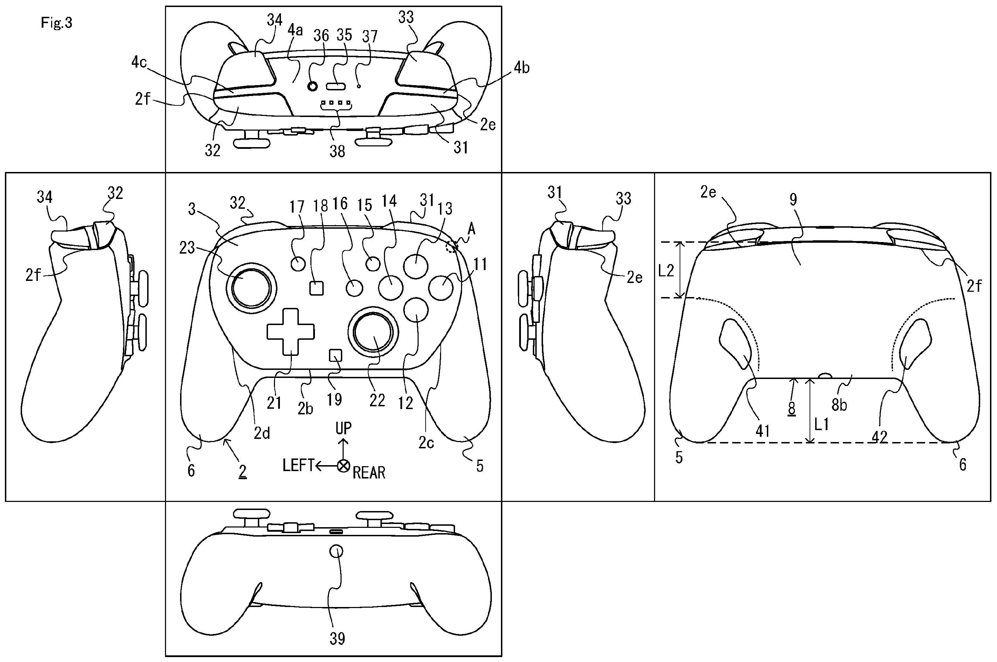

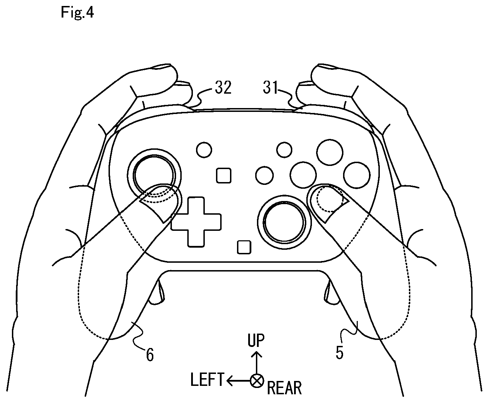

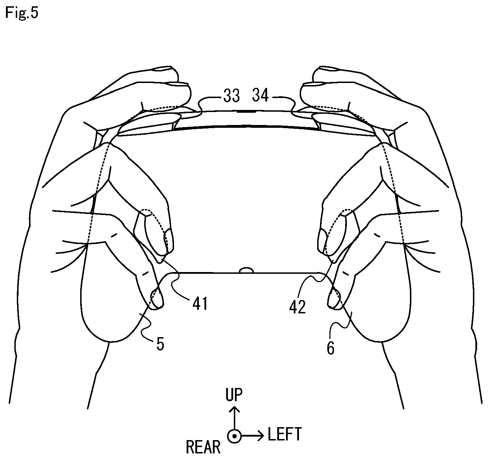

First, referring to FIG. 2 to FIG. 5, a general configuration of the game controller 1 will be described. FIG. 2 is a view showing an example of a housing of the game controller. FIG. 3 shows six orthogonal views of an example of the game controller. FIG. 4 to FIG. 9 are views showing an example of the game controller 1 being grasped by the user. FIG. 4, FIG. 6 and FIG. 8 are views of the game controller 1 being held in the hands of the user and showing the front side of the game controller 1, and FIG. 5, FIG. 7 and FIG. 9 are views of the game controller 1 being held in the hands of the user and showing from the back side of the game controller 1. FIGS. 4 and 5, FIGS. 6 and 7 and FIGS. 8 and 9 respectively show three examples of different ways of operating the game controller 1 and different sizes of the hands of the user grasping the game controller 1.

As shown in FIG. 3, the game controller 1 includes two grips 5 and 6. As shown in FIG. 4 to FIG. 9, the user can grasp the game controller 1 while gripping one grip 5 with the right hand and the other grip 6 with the left hand. In the following, the direction in which the game controller 1 faces the user while being grasped by the user, as shown in FIGS. 4 and 5, FIGS. 6 and 7 or FIGS. 8 and 9, is the front surface direction (also referred to as the front direction) of the game controller 1, and the opposite direction is the back surface direction (also referred to as the rear direction). The direction in which the game controller 1 is vertically upward in the above state is the upward direction of the game controller 1. In the following, the left-right direction of the game controller 1 refers to left and right as a housing 2 is viewed from the front side. In the following, the grip 5 located on the right side portion of the game controller 1 will be referred to as the right grip 5 and the grip 6 located on the left side portion of the game controller 1 will be referred to as the left grip 6.

As shown in FIG. 2 and FIG. 3, the game controller 1 includes the housing 2. As shown in FIG. 2, the housing 2 forms an opening 2a. In the present example, the opening 2a extends between the front surface and the upper surface of the game controller 1. The game controller 1 includes two separate lids 3 and 4 that are provided to cover the opening 2a. As shown in FIG. 2, the front lid 3 covers the front side portion of the opening 2a, and the upper lid 4 covers the upper side portion of the opening 2a.

As described above, in the present example, at least a part of the opening 2a of the housing 2 is covered by the two lids 3 and 4. This reduces the complexity of the cover for the opening 2a and simplifies the production (e.g., molding) of the lids. Note that the number and shape of lids for covering the opening 2a of the housing 2 is arbitrary. For example, in other example, a single lid may cover the front surface portion and the upper surface portion of the opening 2a of the housing 2, or three or more lids may cover the opening 2a. Note that a single lid or a plurality of lids covering the opening 2a may be referred to collectively as a lid or a cover.

The lids 3 and 4 may cover at least a portion of the opening 2a of the housing 2, and may not completely cover the opening 2a. For example, in the present example, in the upper surface of the game controller 1, openings (7a to 7d shown in FIG. 2) are formed by the housing 2, the front lid 3 and the upper lid 4. In the present example, a part of the edge of the opening 2a is not covered by the lid 4 (e.g., the lid does not touch a part of the edge). However, in other embodiments, the entire circumference of the edge of the opening 2a may be completely covered by one or more lids (e.g., the entire circumference of the edge is in contact with the lids).

As shown in FIG. 3, the game controller 1 includes the right grip 5 and the left grip 6. The right grip 5 is a portion that protrudes downward in the right side portion of the game controller 1. The left grip 6 is a portion that protrudes downward in the left side portion of the game controller 1. The right grip 5 and the left grip 6 are portions that are formed to protrude downward from a main body portion 9 of the game controller 1.

As shown in FIG. 3, various input members are positioned on the front side of the game controller 1. Specifically, the game controller 1 includes buttons 11 to 19, a directional pad 21 and analog sticks 22 and 23 as input members positioned on the front side. In the present example, input members positioned on the front side are positioned on the front lid 3. Specifically, input members positioned on the front side are positioned so as to be exposed through the respective holes in the front lid 3. As shown in FIG. 4, FIG. 6 and FIG. 8, input members positioned on the front side are positioned such that they can be operated by the right thumb or the left thumb of the user when grasping the game controller 1.

The game controller 1 includes the buttons 11 to 14 positioned at the right side area of the front side of the game controller 1 (specifically, the area on the right side of the game controller 1 relative to the center of the front side of the game controller 1 in the left-right direction). With a reference point positioned centrally between these four buttons 11 to 14, the button 11 is positioned rightward of the reference point, the button 12 is positioned downward of the reference point, the button 13 is positioned upward of the reference point, and the button 14 is positioned leftward of the reference point.

The game controller 1 includes the button 15 and the button 16 positioned at the right side area described above. The buttons 15 and 16 are positioned to the left of the four buttons 11 to 14. Specifically, the button 15 is positioned leftward of the button 13. The position of the button 15 in the left-right direction is to the left of the button 14. The button 16 is positioned to the left of the button 14. The position of the button 16 in the left-right direction is to the left of the button 15.

The game controller 1 includes the right analog stick 22 positioned at the right side area. The right analog stick 22 is positioned downward and to the left of the four buttons 11 to 14.

The game controller 1 includes the left analog stick 23 positioned at the left side area of the front side of the game controller 1 (specifically, the area on the left side of the game controller 1 relative to the center of the front side of the game controller 1 in the left-right direction). The left analog stick 23 is positioned farthest to the left of the input members positioned in the left side area of the game controller 1.

The game controller 1 includes the button 17 and the button 18 positioned at the left side area of the game controller 1. The button 17 and the button 18 are positioned to the right of the left analog stick 23. The button 17 is provided at a position overlapping with the button 15 for the up-down direction (e.g., the position of the button 17 for the up-down direction overlaps with the position of the button 15 for the up-down direction). The button 18 is provided at a position overlapping with the button 16 for the up-down direction. The position of the button 17 in the left-right direction is to the left of the button 18.

The game controller 1 includes the directional pad 21 positioned at the left side area of the game controller 1. The directional pad 21 is positioned downward and to the right of the left analog stick 23.

The buttons 11 to 15 and 17 are used, for example, to give instructions defined in a game application executable by the game device. The buttons 11 to 15 and 17 are each assigned a function set in the game application. The directional pad 21 and the analog sticks 22 and 23 are used, for example, to give directional instructions defined in a game application executable by the game device. Note that in the present example, the analog sticks 22 and 23 can be tilted in any direction for directional input, as well as for input by pressing down the stick top. Note that the analog sticks 22 and 23 may be of a type that does not allow input by pressing down the stick top. The buttons 16 and 18 are each assigned a predetermined function set in the game device. While the buttons 16 and 18 are each basically assigned a function independent of the application being executable by the game device, but may be assigned a function specific to the application. The button 16 is used, for example, to give instructions for displaying the menu screen of the game device (the first menu to be described below) while a game application is being executed on the game device. The button 18 is used, for example, to provide instructions for capturing an image generated and displayed by the game device (e.g., the display screen of the game device or the image displayed on the screen of a display device connected to the game device).

In the present example, the game controller 1 includes the button 19 on the front side of the game controller 1. The button 19 is provided at the center of the front side of the game controller 1 in the left-right direction. Specifically, the operation surface of the button 19 is provided at a position overlapping with the central axis of the game controller 1 for the left-right direction as the game controller 1 is viewed from the front side. The user can operate the button 19 with the right thumb or with the left thumb. In the present example, the button 19 is provided in the lower side area of the front surface of the game controller 1. The button 19 is provided lowermost among the input members provided on the front surface of the game controller 1. The button 19 is located at a position closest to the lower end of the front lid 3 among the input members provided on the front surface of the game controller 1 as the game controller 1 is viewed from the front side. The lower end of the operation surface of the button 19 is located on the lower side relative to the lower end of the head of the right analog stick 22 when no operation is being performed, and on the lower side relative to the lower end of the operation surface of the directional pad 21. The upper end of the operation surface of the button 19 is located on the upper side relative to the lower end of the operation surface of the directional pad 21 and the lower end of the head of the right analog stick 22 when being not operated, and on the lower side relative to the center of the operation surface of the directional pad 21 and the center of the head of right analog stick 22. The operation surface of the button 19 is provided between the operation surface of the directional pad 21 and the head of the right analog stick 22 when being not operated (more specifically, between the right end of the operation surface of the directional pad 21 and the left end of the head of the right analog stick 22) for the left-right direction. The operation surface of the button 19 is provided between the operation surface of the button 15 and the operation surface of the button 17 (more specifically, between the left end of the operation surface of the button 15 and the right end of the operation surface of the button 17) in the left-right direction. The operation surface of the button 19 is provided between the operation surface of the button 16 and the operation surface of the button 18 (more specifically, between the left end of the operation surface of the button 16 and the right end of the operation surface of the button 18) in the left-right direction. The operation surface of the button 19 is provided at a position overlapping with an audio terminal 39 (details to be described later) for the up-down direction as the game controller 1 is viewed from the front side.

Note that while there is no particular limitation on the shape of the front surface of the game controller 1 (e.g., the front surface of the front lid 3), in the present example, it is shaped protruding toward the front side and inclined so as to extend rearward while extending toward the outer side for the up-down direction and the left-right direction. The operation surface of the button 19 is provided along the surface of the front lid 3 around the button 19 (e.g., inclined along the inclination of that surface). From a different point of view, the operation surface of the button 19 is parallel (or generally parallel) to the surface of the front lid 3 around the button 19. This improves the feel of the button 19 when being pressed, and also reduces the risk of the user unintentionally pressing the button 19. Note that, in the present example, the operation surface of the button 19 faces downward from the operation surface of at least one of the buttons 15 to 18. For example, the normal at the center of the operation surface of the button 19 faces more downward relative to the normal at the center of the operation surface of at least one of the buttons 15 to 18.

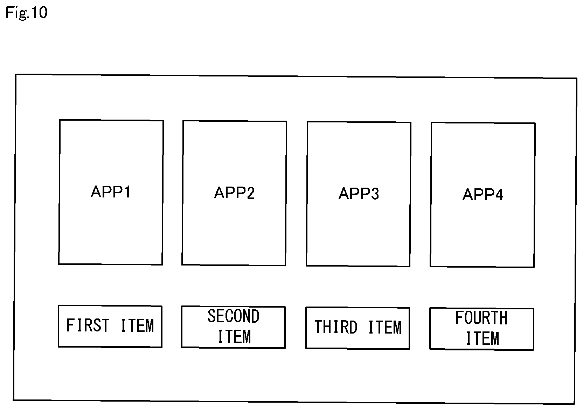

FIG. 10 is an image view showing the first menu. The first menu is, for example, a home menu. The first menu opens when the user operates the button 16. The first menu includes, for example, a plurality of game application selecting sections. In the first menu, the user can select a game application selecting section corresponding to the game application to be played from among the plurality of game application selecting sections. The game device opens the first menu in response to the operation of the button 16 even during execution of a game application. At this time, the game device may put the game application in a paused state. Note that the game device may continue to execute the game application without pausing the game application. The game device may open the first menu in any case when the button 16 is operated, or may not open the first menu in some cases.

The first menu has a plurality of items, including a fourth item. The first menu has, for example, a first item, a second item, a third item and a fourth item. The first item is an item that executes a first function when selected. The first function is, for example, a function to open a second menu for a communication function. The user may use the game device to communicate with a user using another game device. Communication according to the present example includes, for example, video chat, voice chat and text chat. A game screen may be used in the communication. The second item is an item that executes a second function when selected. The second function is, for example, a function to open an album. The album stores screenshots, videos, etc., that have been taken by the user. The third item is an item that executes a third function when selected. The third function is, for example, a function to access an online store. The fourth item is an item that executes a fourth function when selected. The fourth function is, for example, a function to change settings of the game device. The first function, the second function, the third function and the fourth function are different from each other.

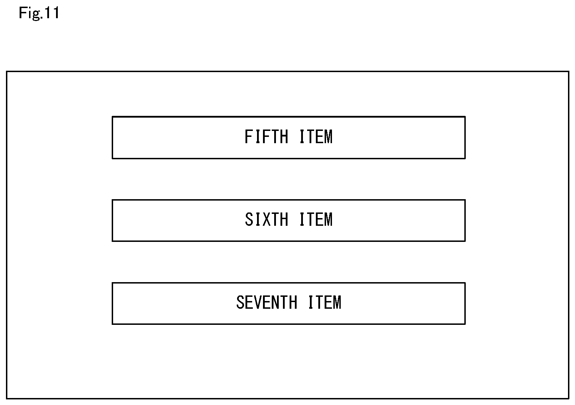

FIG. 11 is an image view showing the second menu. The second menu is, for example, a communication menu. The second menu opens when the user operates the button 19. The button 19 is used, for example, to give an instruction for displaying the second menu during execution of a game application by the gaming device. When the user operates the button 19, the menu screen for communication opens. The game device may open the second menu in response to the operation of the button 19 even during execution of a game application. At this time, the game device may open the second menu while continuing to execute the game application without putting the game application in a paused state. Note that the game device may put the game application in a paused state when opening the second menu. The second menu may display a plurality of menu items. For example, it may have a fifth item, a sixth item and a seventh item. The fifth item is an item that executes a fifth function when selected. The fifth function is, for example, a function to open a screen for selecting users to invite to a chat. The sixth item is an item that executes the sixth function when selected. The sixth function, for example, is a function to open a screen for selecting a chat in which the user can participate. The seventh item is an item that executes the seventh function when selected. The seventh function, for example, is a function to open a screen for changing communication settings. The fifth function, the sixth function and the seventh function are different from each other. Note that the game device may open the menu screen for communication in any case when the button 19 is operated, or may not open the menu screen in some cases. As an example, if the game device is already executing a communication function with another game device, a main body apparatus 3 may open a menu for changing settings for the communication being executed in response to the operation of the button 19.

In the present example, there are two methods to open the menu screen for communication. First, the first method will be described. The first menu is opened when the user operates the button 16. The first menu is displayed, for example, on the display of the game device. The controller sends a signal to the game device indicating that the button 16 has been pressed. Based on the signal, the game device executes the process of opening the first menu, which is a process associated with the input of the signal. That is, the game device calls the first menu in response to the operation of the button 16. Next, the user selects the first item to execute the first function from among a plurality of items included in the first menu. For example, the first item may be selected by moving the cursor to the first item and then pressing a predetermined button (e.g., the button 11), or the first item may be selected by touching an area on the display where the first item is displayed with a finger. Based on the signal that the first item is selected, the game device executes the first function, which is a process associated with the signal. Specifically, the game device executes the process of opening the second menu for communication based on the signal. The second menu is displayed, for example, on the display of the game device. The second menu is displayed in place of the first menu. The second menu may be superimposed on the first menu.

Next, the second method will be described. The first function is executed directly when the user operates the button 19. Specifically, the controller sends a signal to the game device that the button 19 has been pressed. Based on the signal, the game device executes the process of opening the second menu, which is a process associated with the input of the signal. That is, the game device calls the second menu in response to the operation of the button 19. Note that, as another embodiment, the controller may generate a command to "open the second menu" based on the pressing of the button 19, and send the command to the game device. With the controller according to the present example, by providing the button 19 for directly executing the first function, the user can access the first function in a short time than as compared with a case where the user once operates the button 16 to open the first menu and select an item from there to execute the first function.

As described above, in the present example, the second menu for communication is displayed also by an instruction to open the second menu in the first menu that is displayed in response to an instruction given by using the button 16, and also by an instruction given by using the button 19. That is, the button 19 functions as a shortcut key for displaying the second menu with a single input.

While the button 16 for opening the first menu with a plurality of items, including an item for executing the first function executed by the button 19, may be used more frequently than the button 19, it is located upward relative to the button 19 and close to the buttons 11 to 14, and the operability is high because it only requires the thumb to be moved slightly from the buttons 11 to 14 for operation. On the other hand, the button 19 for executing the specific first function is arranged at a position further away from the button 16 with respect to the buttons 11 to 14, and it is required to extend the finger further when the user intends to execute the first function, thereby suppressing the possibility of an erroneous operation when the user does not intend to execute the first function. Even if the user mistakenly operates the button 16 in an attempt to execute the first function, since the first function can be executed also from the first menu, it is possible to arrive at the intended function without having to return or cancel.

In the present example, the operation surface of the button 19 has a different shape (e.g., a rectangular shape) than the shape of the operation surface of the button 16 (e.g., a circular shape) (see the front view of FIG. 3). This reduces the risk of the user mistakenly pressing the button 16 and the button 19 for each other. Note that the button 19 is provided on the lower side relative to the center of the right analog stick 22, while the button 16 is located on the upper side relative to the center of the right analog stick 22. Therefore, in the present example, also by arranging the button 16 and the button 19 on opposite sides with respect to the right analog stick 22, it is possible to reduce the possibility of mistakenly pressing the button 16 and the button 19 for each other, assuming that the user operates the button 16 and the button 19 with the right thumb, for example.

Note that, in the present example, the operation surface of the button 18 is a rectangular shape, and the shapes of the operation surfaces of the button 18 and the button 19 are similar. Now, while the user may possibly be confused if there are too many types of shapes of the operation surfaces of the buttons on the game controller 1, this possibility can be reduced by suppressing the number of types in the present example. Note that the shapes of the buttons included in the game controller 1 are arbitrary, and the shapes are not limited to the shapes in the present example.

In the present example, the amount of protrusion from the housing 2 (more precisely, the amount of protrusion when not pressed) for the buttons 16, 18 and 19 is smaller than the amount of protrusion from the housing 2 for the buttons 11 to 15 and 17. As described above, while the buttons 11 to 15 and 17 are each used to give a predetermined instruction defined in the game application, the buttons 16, 18 and 19 are each used to execute a function defined in the game device or the game controller 1. Therefore, the protrusion for the buttons 16, 18 and 19 is set to be relatively small in order to reduce the possibility of the buttons 16, 18 and 19 being unintentionally operated by the user during execution of the game application.

In the present example, the amount of protrusion of the button 19 is smaller than the amount of protrusion of the button 16. The amount of protrusion of the button 19 is larger than the amount of protrusion of the button 18. As described above, for the buttons 16, 18 and 19, it is possible to make it easier to operate buttons that are assumed to be operated more frequently. For example, the amount of protrusion of the button 19 is 0.6 [mm], the amount of protrusion of the button 16 is 0.7 [mm], and the amount of protrusion of the button 18 is 0.5 [mm].

As shown in FIG. 3, the game controller 1 includes an R button 31 and an L button 32 on the upper side. The R button 31 is provided in the right side area of the upper side of the game controller 1 (specifically, the area on the right side relative to the center of the upper surface for the left-right direction). The L button 32 is provided in the left side aera of the upper side of the game controller 1 (specifically, the area on the left side relative to the center of the upper surface for the left-right direction). The game controller 1 includes a ZR button 33 and a ZL button 34 on the upper side of the game controller 1. The ZR button 33 is provided rearward of the R button 31 in the right side area of the upper surface of the game controller 1. The ZL button 34 is provided rearward of the L button 32 in the left side area of the upper surface of the game controller 1. The buttons 31 to 34 each have a larger length for the left-right direction than for the front-rear direction. Thus, it is possible to realize a shape such that it is easier for the user to operate the buttons 31 to 34 when the user grasps the game controller 1 shown in FIG. 4 to FIG. 9, for example. The buttons 31 to 34 are each used, for example, to give a predetermined instruction defined in a game application executed on the game device.

As shown in FIG. 2 and FIG. 3, in the present example, the upper lid 4 has a generally cross shape. Specifically, the upper lid 4 includes a central portion 4a extending in the front-rear direction, and a right bridge portion 4b and a left bridge portion 4c extending in the left-right direction.

The central portion 4a is provided in a central portion for the left-right direction of the upper portion of the opening 2a. In the present example, the central portion 4a extends to the front edge and the rear edge of the upper portion of the opening 2a. In the present example, the central portion 4a has a width (e.g., the length in the left-right direction) increasing while extending rearward. In other words, the central portion 4a has a width decreasing while extending forward. Note that, as a variation, the central portion 4a may have a shape such that the width increases while extending rearward and in a portion on the rear side relative to the position of the right bridge portion 4b and the left bridge portion 4c to be described below and the width increases while extending forward in a portion on the front side relative to this position. For example, the central portion 4a may have a shape such that the width decreases while extending rearward in a portion on the rear side relative to this position and the width decreases while extending forward in a portion on the front side relative to this position. In the present example, the front end of the central portion 4a extends to the front side edge of the upper portion of the opening 2a, and the rear end of the central portion 4a extends to the rear side edge of the upper portion of the opening 2a. Note however that the front end or the rear end of the central portion 4a does not need to extend to the front side edge or the rear side edge of the upper portion of the opening 2a (e.g., does not need to touch the edge of the opening 2a). The front end of the central portion 4a may be in contact with the front lid 3, or there may be a gap therebetween. The rear end of the central portion 4a may be in contact with the housing 2, or there may be a gap therebetween.

Note that, in the present example, the portion of the upper surface of the game controller 1 on which the upper lid 4 is provided may be provided with the housing 2. That is, no opening may be provided in the upper surface of the game controller 1, and the upper surface of the game controller 1 may be formed of the housing 2. A single lid may be provided for the opening 2a as described above, and the upper lid 4 may be integral with the front lid 3.

The right bridge portion 4b is provided to extend rightward from the right side portion of the central portion 4a. The left bridge portion 4c is provided to extend leftward from the left side portion of the central portion 4a. The right bridge portion 4b and the left bridge portion 4c extend from a position that is on the rear side relative to the front end of the central portion 4a and on the front side relative to the rear end of the central portion 4a (in the present example, a position near the center of the central portion 4a for the front-rear direction). The right bridge portion 4b and the left bridge portion 4c extend from the same position for the front-rear direction. The right bridge portion 4b extends to the right side edge of the upper portion of the opening 2a. The left bridge portion 4c extends to the left side edge of the upper portion of the opening 2a. Note however that the right bridge portion 4b and the left bridge portion 4c do not need to extend to the edge of the upper portion of the opening 2a (e.g., do not need to be in contact with the edge of the opening 2a).

In the present example, the right bridge portion 4b is provided between the operation surface of the R button 31 and the operation surface of the ZR button 33 for the front-rear direction, and the left bridge portion 4c is provided between the operation surface of the L button 32 and the operation surface of the ZL button 34 (see the plan view of FIG. 3). As shown in FIG. 4 to FIG. 9, the user can operate the R button 31 with the right index finger, the L button 32 with the left index finger, the ZR button 33 with the right index finger or the right middle finger, and the ZL button 34 with the left index finger or the left middle finger. In the present example, since the upper lid 4 includes the bridge portions 4b and 4c, the user can place the index finger or the middle finger on the area upward of the bridge portions 4b and 4c (e.g., the area between the operation surface of the R button 31 and the operation surface of the ZR button 33 as the game controller 1 is viewed from above, and the area between the operation surface of the L button 32 and the operation surface of the ZL button 34 as the game controller 1 is viewed from above). With the bridge portion 4b or 4c, it is possible to form a gap between a front side button (e.g., the R button 31 or the L button 32) and a rear side button (e.g., the ZR button 33 or the ZL button 34), making it easier for the user to know which button the finger is on. It is possible to reduce the possibility of the user unintentionally pressing both the front side button and the rear side button. In the present example, it is possible to reduce the number of components because the central portion 4a and the bridge portions 4b and 4c are one component (e.g., an integral piece). Note that, in other embodiments, the upper lid 4 may not have the bridge portions 4b and 4c, but may be formed only of the central portion 4a. In this case, the ZR button 33 (or the ZL button 34) may be located rearward of the R button 31 (or the L button 32) with no other component therebetween. In other embodiments, the bridge portions 4b and 4c may be provided separately from the central portion 4a. In other embodiments, the housing 2 may have generally the same function as the bridge portions 4b and 4c. That is, instead of the upper lid 4 having no bridge portions 4b and 4c, the housing 2 may be configured to extend to positions corresponding to the bridge portions 4b and 4c.

The game controller 1 includes a connector 35 on the upper side of the game controller 1. The connector 35 is provided on the central portion 4a of the upper lid 4. The connector 35 is a connector, e.g., a USB connector, for electrically connecting the game controller 1 to other devices. For example, an AC adapter for charging the game controller 1 may be connected to the connector 35. Note that the game controller 1 may transmit operation data to the main body apparatus by wired communication via the connector 35. In the present example, the connector 35 is located at the center of the upper surface for the left-right direction. For the front-rear direction, the connector 35 is provided rearward relative to the operation surface of the R button 31 (and the L button 32).

The game controller 1 includes a button 36 on the upper side of the game controller 1. The button 36 is provided on the central portion 4a of the upper lid 4. The button 36 is a button for giving an instruction to synchronize communication between the game controller 1 and the game device. In the present example, the button 36 is provided leftward of the connector 35.

The game controller 1 includes a first light-emitting portion 37 and a second light-emitting portion 38. The first light-emitting portion 37 and the second light-emitting portion 38 are provided on the inner side of the housing 2 and emit light to the outside of the game controller 1 through a hole in the central portion 4a of the upper lid 4. The light-emitting portions 37 and 38 each emit light that is visible to the user and function as a notification section to notify the user of the status of the game controller 1. Specifically, in the present example, the first light-emitting portion 37 includes an LED, and the LED emits light when the game controller 1 is charging. In the present example, the hole through which the light of the first light-emitting portion 37 is emitted is located rightward of the connector 35. In the present example, the second light-emitting portion 38 includes four LEDs, and the number assigned to identify each game controller in a situation where a plurality of game controllers are communicating with the game device is notified by how the four LEDs are lit. Note that the second light-emitting portion 38 may notify the remaining battery level of the game controller 1 and the communication status with the game device. In the present example, the four holes through which the light of the second light-emitting portion 38 is emitted are located forward of the connector 35. This makes the light from the second light-emitting portion 38 easier for the user to see even when the cable is connected to the connector 35.

As shown in FIG. 3, the game controller 1 includes the audio terminal 39 on the lower side of the game controller 1. In the present example, the audio terminal 39 is a terminal capable of outputting audio and is an earphone jack to which an earphone, a headphone, or the like, can be connected. The audio terminal 39 is located on the lower surface at the center of the game controller 1 for the left-right direction. Note that the audio terminal 39 may be capable of inputting audio instead of or in addition to outputting audio.

In the present example, the button 19 is provided in the lower side area of the front side of the game controller 1 and the audio terminal 39 is provided on the lower side of the game controller 1. In the present example, the button 19, among the buttons 15 to 19, is provided at a position closest to the audio terminal 39. Now, as described above, the button 19 is a button that is operated when the user engages in communication such as voice chat with other users, and it is possible that the user may attach an earphone, a headphone, or the like, to the audio terminal 39 when operating the button 19. Therefore, by arranging the button 19 and the audio terminal 39 in the vicinity of each other as in the present example, it becomes easier to perform a series of operations of pressing the button 19 with an earphone, a headphone, or the like, inserted in the audio terminal 39, thereby improving the operability of the game controller 1. Note that in the present example, the button 19 and the audio terminal 39 are provided at positions overlapping with each other for the left-right direction (see FIG. 3). This makes it easier to perform the series of operations.

As shown in FIG. 3, the game controller 1 includes a right grip button 41 and a left grip button 42. The right grip button 41 is provided on the back side of the right grip 5. The left grip button 42 is provided on the back side of the left grip 6. As shown in FIG. 5, FIG. 7 and FIG. 9, the user can, for example, operate the right grip button 41 with the middle finger or the ring finger of the right hand grasping the game controller 1 and the left grip button 42 with the middle finger or the ring finger of the left hand grasping the game controller 1. The grip button 41 or 42 may also be operated with the index finger or the little finger of the hand grasping the grip. Note that the details of the grip buttons 41 and 42 will be described below.

The grip buttons 41 and 42 are each assigned, for example, an operation input to the game controller 1 (e.g., pressing one of other buttons different from the grip buttons 41 and 42). That is, when the grip buttons 41 and 42 are operated, the same process may be executed as when one of the other buttons assigned thereto is operated. The assignment of other buttons to the grip buttons 41 and 42 may be predetermined by the game device or by the game application executed on the game device, or may be user-configurable. The assignment settings may be stored in the game device or in the game controller 1. When the assignment is stored in the game device, the game device having received from the game controller 1 operation data indicating that the grip button 41 or 42 has been operated may instruct the game program that the button assigned to the operated grip button has been operated. On the other hand, if the assignment is stored in the game controller 1, in response to the grip button 41 or 42 being operated, the game controller 1 may send operation data to the game device indicating that the button assigned to the operated grip button has been operated. Note that a grip button may be assigned a simultaneous operation on two buttons instead of an operation on one button. A grip button does not need to be assigned any other button. That is, for example, depending on the application, when the grip button is operated, a different process may be executed than when the other buttons are operated.

The type, function, position, number, shape, size, etc., of each component (as an example, an input member such as a button or an analog stick, a notification section, a connector and an audio terminal) provided in the game controller 1 are arbitrary and are not limited to the above. For example, in other embodiments, the position of the left analog stick 23 and the position of the directional pad 21 on the front side of the game controller 1 may be reversed. For example, the game controller 1 may include four buttons corresponding to four directions of up, down, left and right, instead of the directional pad 21. The game controller does not need to include at least one of the components described above, or may include another component having a function other than the components described above.

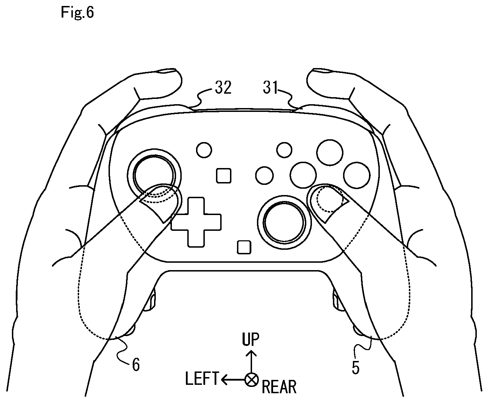

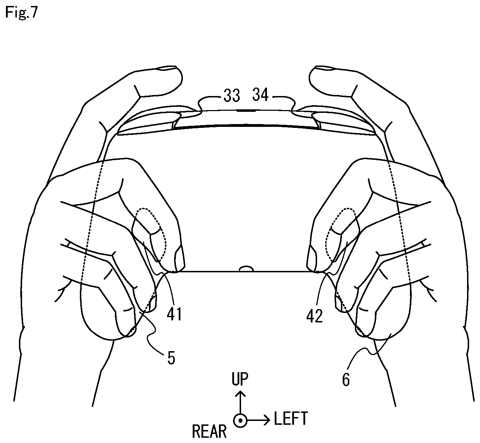

For example, the user may grasp the game controller 1 as shown in FIG. 4 to FIG. 9. FIG. 4 and FIG. 5 show an example of how the game controller 1 is grasped where the buttons on the upper side of the game controller 1 are operated with the index fingers and the middle fingers. As shown in FIG. 4 and FIG. 5, the user can grasp the game controller 1 so that the buttons 31 to 34 on the upper side of the game controller 1 are operated with the left and right index fingers and middle fingers, and the grip buttons 41 and 42 are operated with the left and right ring fingers. FIG. 6 and FIG. 7 show an example of how the game controller 1 is grasped where the buttons on the upper side of the game controller 1 are operated with the index fingers. As shown in FIG. 6 and FIG. 7, the user can grasp the game controller 1 so that the buttons 31 to 34 on the upper side of the game controller 1 are operated with the left and right index fingers, and the grip buttons 41 and 42 are operated with the left and right middle fingers.

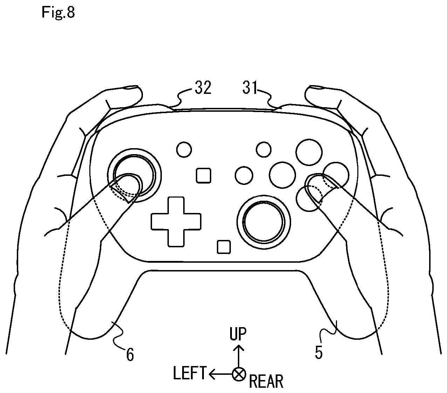

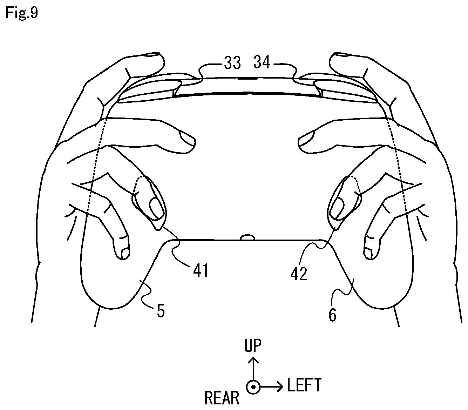

FIG. 8 and FIG. 9 are views showing an example where a user with smaller hands grasps the game controller 1 as compared with the examples shown in FIG. 4 to FIG. 7. As shown in FIG. 8 and FIG. 9, a user with relatively small hands can grasp the game controller 1 so as to operate the buttons 31 to 34 on the upper side of the game controller 1 with the left and right index fingers, and operate the grip buttons 41 and 42 with the left and right ring fingers while keeping the left and right middle fingers on the back side of the game controller 1. Note that, although not shown in the figures, even a user with relatively small hands can grasp the game controller 1 in the manner shown in FIG. 4 and FIG. 5 or in FIG. 6 and FIG. 7. In this case, the user may place the game controller 1, for example, on their lap or on a desk (e.g., with the lower ends of the grips 5 and 6 in contact with the lap or the desk) for a stable grasp. As described above, the game controller 1 is configured to be easy to grasp even for a user with relatively small hands.

### [2. Configuration of housing eliminating seams on side surfaces]

Next, the detailed configuration of the housing 2 will be described. In the present example, the housing 2 is constructed as a single component. That is, the housing 2 is not formed by combining two components such as a front housing and a rear housing, for example. In the present example, the housing 2 has no seam. That is, the housing 2 is seamless. For example, the housing 2 is not formed by fixing together a plurality of parts by means of fastening, an adhesive, or engagement. For example, the housing 2 cannot be disassembled. The housing 2 is produced by molding, for example. The housing 2 may be produced from resin, for example. The housing 2 may be produced by single injection molding or by using a plurality of resin materials, such as double injection molding. There is no limitation on the method of producing the housing 2. For example, the housing 2 may be produced by a 3D printer or by injection molding using a water-soluble resin as a core.

The housing 2 includes a base portion 25, a right grip portion 26, and a left grip portion 27 (see FIG. 2). The right grip portion 26 and the left grip portion 27 extend from the lower right portion and the lower left portion of the base portion 25, respectively. In the present example, a portion upward of the right grip portion 26 and the left grip portion 27 may be the base portion 25. In the present example, an opening 2a may be provided in the base portion 25. Note that in the present example, the right grip 5 and the right grip portion 26 may be considered to be substantially the same, and the left grip 6 and the left grip portion 27 may be considered to be substantially the same.

The housing 2 has an opening 2a spanning from the front side to the upper side of the game controller 1. That is, the housing 2 has a cavity that is open on the front side and the upper side of the game controller 1. The cavity can be said to be defined by the housing 2 including the edge of the opening 2a. The housing 2 forms at least a part of the back surface of the game controller 1. The housing 2 forms at least a part of the side surfaces of the game controller 1. Note that the housing 2 forms at least a part of an outer surface of the game controller 1 extending from one of the left and right edges of the opening 2a of the front surface around onto the back side to reach the other edge (e.g., a surface including a portion of the front surface, the right side surface, the back surface and the left side surface of the game controller 1). The housing 2 forms at least a part of the side surfaces and the front surface extending from the back surface of the game controller 1 to the edges of the opening 2a of the front surface. The housing 2 may form the outer surface that spans the entire circumference of the grip. The inside of the left grip portion 27 and the right grip portion 26 may be a space. That is, the inside of the left grip portion 27 and the inside of the right grip portion 26 may be a part of the cavity that is defined by the housing 2 and is open on the front side and the upper side of the game controller 1. In the present example, due to such a configuration of the housing 2, the game controller 1 has no seam on the grips or the side surfaces. Therefore, it is possible to suppress the possibility that the hand of the user may touch a seam when the user grasps the housing 2. Note that a seam refers to a border between objects. Note that, in the present example, the border between a button and the housing 2 around the button is not included as a seam. In the present example, the border between the housing 2 and the lid 3 or 4 is an example of a seam.

As shown in FIG. 3, on the front side of the game controller 1, the opening 2a accounts for equal to or more than half of the front side area of the main body portion 9. Note that, in the present example, the main body portion 9 refers to a portion where the right grip 5 and the left grip 6 extend from the lower right portion and the lower left portion, respectively. The main body portion 9 may include the base portion 25, the front lid 3, and the upper lid 4. As the game controller 1 is viewed from the front side, the lower end of the opening 2a is located on the lower side relative to the center of the main body portion 9 for the up-down direction. As the game controller 1 is viewed from the front surface, the left end of the opening 2a is located on the left side relative to the center of the main body portion 9 for the left-right direction, and the right end of the opening 2a is located on the right side relative to the center of the main body portion 9 for the left-right direction. The length of the opening 2a of the front side for the up-down direction is larger than half the length of the main body portion 9 for the up-down direction. The length of the opening 2a of the front side for the left-right direction is larger than half the length of the main body portion 9 for the left-right direction. As the game controller 1 is viewed from the upper side, the left end of the opening 2a is located on the left side relative to the center of the main body portion 9 for the left-right direction, and the right end of the opening 2a is located on the right side relative to the center of the main body portion 9 for the left-right direction. The length of the opening 2a of the upper side for the front-rear direction is larger than half the length of the main body portion 9 for the front-rear direction. The length of the opening 2a of the upper side for the left-right direction is larger than half the length of the main body portion 9 for the left-right direction. As described above, in the present example, the opening 2a is large on the front side and the upper side of the game controller 1. Therefore, components to be provided inside the housing 2 (e.g., a first frame 51 and a main body substrate 66 to be described below) can easily be put into the housing 2 through the opening 2a, thus facilitating the assembly on the game controller 1. When the housing 2 is produced by molding, for example, the mold located inside the grip portions 26 and 27 can be easily pulled out through the opening 2a. Therefore, it is easy to provide a space inside the grip portions 26 and 27.

In the present example, the opening 2a formed so that a portion thereof provided on the front side of the game controller 1 is larger than a portion thereof provided on the upper side of the game controller 1. Note that, in other embodiments, the opening 2a may be formed so that a portion thereof provided on the upper side of the game controller 1 is larger than a portion thereof provided on the front side of the game controller 1.

As shown in FIG. 3, of the housing 2, an edge portion of the lower side of the opening 2a (hereinafter referred to as the "lower edge portion") 2b is formed so as to extend in the left-right direction as the game controller 1 is viewed from the front side (see the front view of FIG. 3). In the present example, the lower edge portion 2b extends straight in the left-right direction as the game controller 1 is viewed from the front side. The right end position of the lower edge portion 2b for the left-right direction is in the vicinity of the left end of the base of the right grip 5. The left end position of the lower edge portion 2b for the left-right direction is in the vicinity of the right end of the base of the left grip 6. If opposite ends of the lower edge portion 2b are too close to the left and right opposite ends of the game controller 1 (e.g., if the lower edge portion 2b is too long), it is possible that the hands of the user grasping the game controller 1 can easily touch the seam formed by the lower edge portion 2b. In this regard, in the present example, by making the lower edge portion 2b an appropriate length, it is possible to suppress the possibility that the hands of the user may touch the seam.

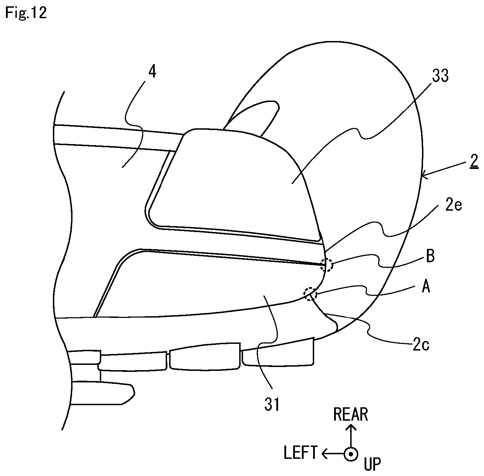

The edges of the opening 2a of the housing 2 extend upward from the left end and the right end of the lower edge portion 2b. Hereinafter, a portion 2c of the edge of the opening 2a of the housing 2 that extends from the right end of the lower edge portion 2b to the button 31 (specifically, the portion up to the position A shown in FIG. 3 and FIG. 12) will be referred to as the front right edge portion, and a portion 2d of the edge of the opening 2a of the housing 2 that extends from the left end of the lower edge portion 2b to the L button 32 will be referred to as the front left edge portion (see the front view of FIG. 3). The front right edge portion 2c and the front left edge portion 2d are seams between the housing 2 and a portion of the lid covering the opening 2a that is on the front surface of the game controller 1.

As shown in FIG. 3, the front right edge portion 2c extends initially in a diagonal upper right direction from the right end of the lower edge portion 2b and then extends in a diagonal upper left direction from the middle. The front left edge portion 2d extends initially in a diagonal upper left direction from the left end of the lower edge portion 2b and then extends in a diagonal upper right direction from the middle. In the present example, a portion to be the right end of the front right edge portion 2c and a portion to be the left end of the front left edge portion 2d are points, but these portions may be lines (specifically, straight lines extending in the up-down direction) in other embodiments. Note that the front right edge portion 2c and the front left edge portion 2d are left-right symmetrical, and the right end of the front right edge portion 2c and the left end of the front left edge portion 2d are the same position for the up-down direction.

As described above, in the present example, on the front side of the game controller 1, the opening 2a has a shape such that the width thereof at the portion to be the right end of the front right edge portion 2c and the portion to be the left end of the front left edge portion 2d (e.g., the length for the left-right direction) is wider than the width at the upper end portion and the width at the lower end portion. Therefore, while increasing the width of the opening 2a at this portion, the edges of the opening 2a can be separated from the side surfaces on the upper side and the lower side of this portion, thereby suppressing the possibility that the hands of the user grasping the game controller 1 may touch the seams. Note that this portion is located on the upper side relative to the center of the opening 2a for the up-down direction. That is, the length of the front right edge portion 2c from the right end to the lower end for the up-down direction is longer than the length thereof from the right end to the upper end for the up-down direction. The length of the front left edge portion 2d from the left end to the lower end for the up-down direction is longer than the length thereof from the left end to the upper end for the up-down direction. In the present example, the right end of the front right edge portion 2c is at a position overlapping with the button 11 for the up-down direction. The left end of the front left edge portion 2d is at a position overlapping with the left analog stick 23 for the up-down direction.

As the game controller 1 is viewed from the side surface, the edge portions 2c and 2d extend initially in the forward direction from the end portion of the lower edge portion 2b and then in the rear direction from the middle (see the side view of FIG. 3). In the present example, a portion to be the right end of the front right edge portion 2c is located on the upper side relative to a portion to be the front end of the front right edge portion 2c. A portion to be the left end of the front left edge portion 2d is located on the upper side relative to a portion to be the front end of the front right edge portion 2c.

According to the above description, the space for arranging input members on the front lid 3 can be increased. Specifically, of the front lid 3, the length for the left-right direction is longer in the upper area thereof than the area near the lower end thereof, so that the space for arranging input members in this area is wider than the area on the lower side. This improves the degree of freedom in arranging input members on the front side of the game controller 1. For example, in the present example, in the right side area of the front side of the game controller 1, the four buttons 11 to 14 can be arranged in the upper right direction from the right analog stick 22, which is arranged near the lower end of the front lid 3, so the right analog stick 22 and the four buttons 11 to 14 can be arranged at such positions that they can be easily operated with the right thumb of the user. For example, in the present example, in the left side area of the front side of the game controller 1, the left analog stick 23 can be arranged in the upper left direction from the directional pad 21, which is arranged near the lower end of the front lid 3, so the directional pad 21 and the left analog stick 23 can be arranged at such positions that they can easily be operated with the left thumb of the user.

As described above, on the front side of the game controller 1, a portion of the edge of the opening 2a of the housing 2 that is on the upper side relative to the right end of the front right edge portion 2c and the left end of the front left edge portion 2d is formed to be narrowed toward the inner side while extending upward. Thus, in the area near the upper end of the front side of the game controller 1, the seam between the housing 2 and the front lid 3 is located away from the side surface of the game controller 1. Now, while the upper side area on the side surface of the game controller 1 is such a position that the hand of the user is likely to touch when grasping the game controller 1 as shown in FIG. 4, the seam can be located away from such a position in the present example.

On the upper side of the game controller 1, the edge of the opening 2a of the housing 2 has a portion (hereinafter referred to as the "upper right edge portion") 2e that extends rearward from the upper end of the front right edge portion 2c (the position A shown in FIG. 3 and FIG. 12) (see the right view and the plan view of FIG. 3). The front right edge portion 2c and the upper right edge portion 2e together form an angle that points toward the inner side of the game controller 1 for the left-right direction. The upper right edge portion 2e extends from the upper end of the front right edge portion 2c initially in a diagonal right rear direction and then in a diagonal left rear direction from the middle. On the upper side of the game controller 1, the edge of the opening 2a of the housing 2 has a portion (hereinafter referred to as the "upper left edge portion") 2f that extends rearward from the upper end of the front left edge portion 2d (see the left side view and the plan view of FIG. 3). The front left edge portion 2d and the upper left edge portion 2f together form an angle that points toward the inner side of the game controller 1 for the left-right direction. The upper left edge portion 2f extends from the upper end of the front left edge portion 2d initially in a diagonal left rear direction and then in a diagonal right rear direction from the middle. In the present example, the portion to be the right end of the upper right edge portion 2e and the portion to be the left end of the upper left edge portion 2f are points, but these portions may be lines (specifically, straight lines extending in the front-rear direction) in other embodiments. Note that the upper right edge portion 2e and the upper left edge portion 2f are left-right symmetrical, and the right end of the upper right edge portion 2e and the left end of the upper left edge portion 2f are the same position for the front-rear direction. The rear end of the upper right edge portion 2e and the rear end of the upper left edge portion are connected together (see the back view of FIG. 3).

As described above, in the present example, on the upper side of the game controller 1, the opening 2a has a shape such that the width (e.g., the length for the left-right direction) thereof at the portion to be the right end of the upper right edge portion 2e and the portion to be the left end of the upper left edge portion 2f is wider than the width thereof at the end portion for the front-rear direction. Therefore, also on the upper side of the game controller 1 as with the front side, the opening 2a can be made larger at this potion, and so that the components to be provided inside the housing 2 can be more easily put into the housing 2 through the opening 2a. Note that, in the present example, on the upper side of the game controller 1, this portion is located on the front side relative to the center for the front-rear direction. That is, the length of the upper right edge portion 2e from the right end to the rear end for the front-rear direction is longer than the length from the right end to the front end for the front-rear direction. The length of the upper left edge portion 2f from the left end to the rear end for the front-rear direction is longer than the length from the left end to the front end for the front-rear direction.

In the present example, the rear end of the edge of the opening 2a (e.g., the rear end of the upper right edge portion 2e and the upper left edge portion 2f) is located on the rear side relative to the center for the front-rear direction on the upper side of the game controller 1. Therefore, in the present example, also on the upper side of the game controller 1 as with the front side, the components can be more easily put into the housing 2 through the opening 2a, thus facilitating the production of the game controller 1.

As the game controller 1 is viewed from the back side, the rear end of the edge of the opening 2a is located on the upper side relative to the center of the main body portion 9 for the up-down direction. In the present example, the rear end of the edge of the opening 2a is located on the upper side relative to the input members provided on the front lid 3 (see the front view and the back view of FIG. 3). Thus, in the present example, it is possible to maintain the strength of the housing 2. Even when the user grasps the game controller 1 with fingers (e.g., middle fingers or ring fingers) on the back surface of the game controller 1, it is possible to reduce the possibility that the seam by a rear edge portion of the opening 2a may hit the fingers. Note that, in other embodiments, the opening 2a may be provided to extend to the back side of the housing 2.

As shown in FIG. 2, in the present example, the upper portion of the opening 2a is divided into four openings 7a to 7d by the upper lid 4. Specifically, the front portion of the opening 2a is covered by the front lid 3 and the upper portion of the opening 2a is covered by the upper lid 4, which is cross-shaped as described above, to form the four openings 7a to 7d.

In the right side portion of the upper side of the game controller 1, on the front side of the right bridge portion 4b, the housing 2 (more specifically, the upper right edge portion 2e), the front lid 3 and the upper lid 4 together form the right front side opening 7a. The R button 31 is provided in the right front side opening 7a (e.g., so as to be exposed through the right front side opening 7a). In the present example, the R button 31 is provided at a position such that the operation surface thereof protrudes from the right front side opening 7a.

In the left side portion of the upper side of the game controller 1, on the front side of the left bridge portion 4c, the housing 2 (more specifically, the upper left edge portion 2f), the front lid 3 and the upper lid 4 together form the left front side opening 7b (see FIG. 2). The L button 32 is provided in the left front side opening 7b (e.g., so as to be exposed through the left front side opening 7b). In the present example, the L button 32 is provided at a position such that the operation surface thereof protrudes from the left front side opening 7b.

According to the above description, the front right edge portion 2c is at a position on the front side relative to the rear end of the operation surface of the R button 31, and the front left edge portion 2d is at a position on the front side relative to the rear end of the operation surface of the L button 32. Now, the fingers of the user (e.g., the index fingers) operating the R button 31 and the L button 32 may contact the side surface of the game controller 1. Note however that in the present example, as the front right edge portion 2c and the front left edge portion 2d are arranged as described above, the fingers are less likely to contact the seams of the housing 2 formed along the front right edge portion 2c and the front left edge portion 2d. This improves the comfort of holding the game controller 1.

In the present example, the right front side opening 7a and the left front side opening 7b are formed at the portion to be the right end of the upper right edge portion 2e and the portion to be the left end of the upper left edge portion 2f (e.g., the portion where the length of the opening 2a for the left-right direction is the widest) (see the plan view of FIG. 3). Thus, the R button 31 and the L button 32 can be arranged more outward for the left-right direction of the game controller 1, making it easier for the user to operate the R button 31 and the L button 32.

FIG. 12 is an enlarged view of the right side area of the upper side of the game controller 1. As shown in FIG. 12, in the present example, the front right edge portion 2c extends rearward and inward for the left-right direction while extending toward the upper end (the position A shown in FIG. 12). Then, the upper right edge portion 2e extends rearward and outward for the left-right direction from the position A. At the position A, the front right edge portion 2c and the upper right edge portion 2e intersect to form an angle that points toward the inner side for the left-right direction. The upper edge of the front lid 3 and the upper right edge portion 2e are linearly connected at the position A. From a different point of view, the front right edge portion 2c intersects a line that is formed by the upper edge of the front lid 3 and the upper right edge portion 2e at the position A. This configuration is similar also with the left side area of the upper side of the game controller 1.

As shown in FIG. 12, in the present example, the upper end of the front right edge portion 2c (the position A shown in FIG. 12, which can be said to be the corner between the front right edge portion 2c and the upper right edge portion 2e) is located on the front side relative to the right end of the operation surface of the R button 31 (the position B shown in FIG. 12). Note that, although not shown in FIG. 12, the upper end of the front left edge portion 2d is located on the front side relative to the left end of the operation surface of the L button 32. Thus, the fingers of the user operating the R button 31 and the L button 32 are less likely to contact the seams of the housing 2 formed along the front right edge portion 2c and the front left edge portion 2d, thereby improving the comfort of holding the game controller 1.

Note that, in the present example, the front right edge portion 2c and the front left edge portion 2d can be said to be located on the front side relative to the bridge portions 4b and 4c of the upper lid 4. Therefore, in the present example, also when the user puts their fingers on the bridge portions 4b and 4c, or when the user puts their fingers on the area between the R button 31 and the ZR button 33 and the area between the L button 32 and the ZL button 34, which are upward of the bridge portions 4b and 4c, the fingers are less likely to contact the seams of the housing 2.

As shown in FIG. 2, in the present example, in the right side area of the upper side of the game controller 1, the right rear side opening 7c is formed by the housing 2 and the upper lid 4 on the back side of the right bridge portion 4b. The ZR button 33 is provided in the right rear side opening 7c (e.g., so as to be exposed from the right rear side opening 7c). In the present example, the ZR button 33 is provided so that the operation surface thereof is at a position protruding from the right rear side opening 7c.

In the left side area of the upper side of the game controller 1, the left rear side opening 7d is formed by the housing 2 and the upper lid 4 on the back side of the left bridge portion 4c (see FIG. 2). The ZL button 34 is provided in the left rear side opening 7d (e.g., so as to be exposed from the left rear side opening 7d). In the present example, the ZL button 34 is provided so that the operation surface thereof is at a position protruding from the left rear side opening 7d.

According to the above description, the front right edge portion 2c is at a position on the front side relative to the ZR button 33 and the front left edge portion 2d at a position on the front side relative to the ZL button 34. Thus, in the present example, the fingers of the user (e.g., middle fingers) operating the ZR button 33 and the ZL button 34 are less likely to contact the seams of the housing 2 formed along the front right edge portion 2c and the front left edge portion 2d. This improves the comfort of holding the game controller 1.

Note that, in other embodiments, the positional relationship between the opening 2a (specifically, the front right edge portion 2c and the front left edge portion 2d) of the housing 2 and the buttons 31 to 34 is arbitrary. For example, the upper edges of the front right edge portion 2c and the front left edge portion 2d may be located overlapping with the bridge portions 4b and 4c for the up-down direction or may be located overlapping with the ZR button 33 and the ZL button 34 for the up-down direction.

Next, the details of the right grip 5 and the left grip 6 of the game controller 1 will be described. The right grip 5 is provided so that at least a portion thereof extends downward from the lower right portion of the main body portion. In the present example, the right grip 5 is provided so that at least a portion thereof extends rearward and rightward while extending downward (see FIG. 3). The left grip 6 is provided so that at least a portion thereof extends downward from the lower left portion of the main body portion 9. In the present example, the left grip 6 is provided so that at least a portion thereof extends rearward and leftward while extending downward (see FIG. 3). Note that, in other embodiments, the grips 5 and 6 may be provided so as to extend in a directly downward direction, or may be provided so as to extend downward and rearward without extending in the left-right direction.

Note that the grips 5 and 6 are provided with such a length that allows the user to grasp them with two fingers of the ring finger and the little finger, or three fingers of the middle finger, the ring finger and the little finger. For example, the grips 5 and 6 may each have a length L1 for the up-down direction (see the back view of FIG. 3) of 3 to 6 [cm] from the lower end of the main body portion 9 to the lower end of the grip.

In the present example, on the back side of the game controller 1, the border between the back side portion of the main body portion 9 (hereinafter referred to as the "main body back portion") 8 and the grip 5 or 6 forms a valley (see the back view shown in FIG. 3). In the back view of FIG. 3, the deepest parts of the valleys (called the "valley bottoms") around the grip buttons 41 and 42 are shown by dotted lines. The valley formed along the border between the right grip 5 and the main body back portion 8 extends in an upper right direction from near the lower end of the main body portion 9. The valley formed along the border between the left grip 6 and the main body back portion 8 extends in an upper left direction from near the lower end of the main body portion 9. Thus, the valley formed at the border between the grip 5 or 6 and the main body back portion 8 extends toward the outer side for the left-right direction while extending upward. Therefore, the user can rest the finger holding near the base of the grip (the ring finger in FIG. 5) on the valley, thereby grasping the grip, with the second joint of the finger moderately bent. This improves the ease of holding the game controller 1.

In the present example, the line formed by the valley bottom (the dotted line shown in FIG. 3) as the game controller 1 is viewed from the back side is a curved line (see the back view shown in FIG. 3). More specifically, as the game controller 1 is viewed from the back side, the curved line is curved so as to bulge toward the center of the main body portion 9 (more specifically, toward the upper left side for the valley of the right grip 5 and toward the upper right side for the valley of the left grip 6). Thus, when the user rests fingers (the ring fingers in FIG. 5) holding near the bases of the grips on the valleys, the user can have the first j oints of the fingers slightly bent, making it easier for the user to grasp the game controller 1. Since the fingers holding near the bases of the grips can be more easily placed along the surface of the grips, it is easier to grasp the grip firmly.

In the present example, the valley bottoms extend to the left and right opposite ends of the game controller 1 (see the back view shown in FIG. 3). In other words, the main body back portion 8 extends to the left and right opposite ends of the game controller 1 upward of the grips 5 and 6. That is, as the game controller 1 is viewed from the back side, there is an interval between the upper end of the grip 5 or 6 and the upper end of the main body portion 9. In the present example, the main body back portion 8 is inclined to extend forward while extending outward for the left-right direction. Therefore, the area of the main body back portion 8 between the right grip 5 and the left grip 6 is formed less sloped, and the main body back portion 8 in this area does not protrude in the back direction. A portion of the main body back portion 8 above the valley bottom is curved toward the front side while extending toward the side surface from the center of the game controller 1 in the left-right direction. Therefore, when grasping the game controller 1, the user can easily place their fingers on the area of the main body back portion 8 between the upper end of the grip 5 or 6 and the upper end of the main body portion 9. For example, it is easy for the user to place fingers not used for button operations (the middle fingers in the example shown in FIG. 9) on this area, or place fingers used for grip button operations (the ring fingers in the example shown in FIG. 5, the middle fingers in the example shown in FIG. 7) on this area by slightly unbending the fingers in situations where the grip buttons are not operated. Then, it is possible to stably grasp the game controller 1 by supporting the main body portion 9 with these fingers. For example, the game controller 1 may include an inertial sensor such as an acceleration sensor or a gyro sensor to enable an operation of moving the game controller 1 itself. The user can perform such an operation by stably grasping the game controller 1 by placing their fingers along the main body back portion 8. On the other hand, when the user attempts to operate the grip button 41 or 42 by bending the fingers, having been placed along the main body back portion 8, the main body back portion 8 is less likely to get in the way, thereby improving the operability of the grip buttons. Note that, for the up-down direction, the length L2 (see the back view of FIG. 3) from the upper end of the grip 5 or 6 to the upper end of the main body portion 9 may be a length that is generally the width of one or two fingers of the user (for example, 1 to 3 [cm]). Note that the valley bottoms do not need to extend to the left and right opposite ends of the game controller 1.

In the present example, the area of the main body back portion 8 between the right grip 5 and the left grip 6 is formed flat. Thus, when the user attempts to operate the grip button 41 or 42 by bending the fingers, having been placed along the main body back portion 8, the main body back portion 8 is less likely to get in the way, thereby improving the operability of the grip buttons. There is no protrusions/recesses (e.g., recesses formed by screw holes, connectors, etc., or protrusions formed by buttons, etc.) in the area of the main body back portion 8 between the right grip button 41 and the left grip button 42. Thus, when the user attempts to operate the grip button 41 or 42 by bending their finger, having been placed along the main body back portion 8, no protrusions/recesses contact the finger, thereby improving the operating feel of the grip buttons. Note that the area between the right grip 5 and the left grip 6 does not need to be formed flat.

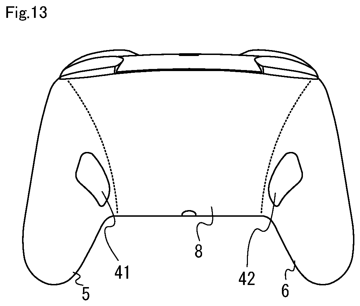

FIG. 13 is a back view showing an example of a game controller according to a variation of the present example. Also in the back view shown in FIG. 13, as in the back view shown in FIG. 3, a dotted line is drawn at the position of the valley bottom formed along the border between the grip 5 or 6 and the main body back portion 8. In other embodiments, as shown in FIG. 13, the valley bottom may be formed so as to extend up to the top of the main body back portion 8 rather than extending up to the left or right end portion of the main body back portion 8.

### [3. Details of grip buttons]

Next, the details of the grip buttons 41 and 42 provided on the grips will be described. The right grip button 41 is provided so as to pass through a hole provided in the back side of the right grip 5 of the housing 2. The left grip button 42 is provided so as to pass through a hole provided in the back side of the left grip 6 of the housing 2. As described above, in the present example, the housing 2 is configured so that there is no seam on the side surface and the back surface, including the portion of the grip 5 or 6, so that when the user operates the grip button 41 or 42, no seam contacts the hands of the user. This improves the usability of the game controller 1 when operating the grip button 41 or 42. Note that in other embodiments, the shape of the housing 2 is not limited to the above, and the grip 5 or 6 may be formed of a plurality of housings and there may be seams of the housings at the grip 5 or 6.

The user can press the grip button 41 or 42, for example, by moving a finger, having been placed along the main body back portion 8, so as to squeeze the grip 5 or 6. Thus, since the grip button 41 or 42 is unlikely to be operated with the finger placed along the main body back portion 8, it is possible to reduce the possibility of unintended operation of the grip button 41 or 42.

In the present example, the grip button 41 and 42 is provided along the valley bottom formed by the grip 5 or 6 and the main body back portion 8 (see the back view of FIG. 3). In the present example, the grip buttons 41 and 42 do not overlap with the valley bottoms formed by the grips 5 and 6 and the main body back portion 8, but are provided on the side of the grips 5 and 6. A portion of the outer edge of the operation surface of the grip buttons 41 and 42 that is close to the valley bottom extends generally in the same direction as the valley bottom in the vicinity of the valley bottom. Therefore, it is easy for the user to grasp the game controller 1 while resting the fingers on the valley bottoms without unintentionally pressing the grip buttons 41 and 42, and it is easy for the user to stably grasp the game controller 1. The user can easily operate these grip buttons 41 and 42 with the fingers resting on the valley bottoms.

For "the outer edge extending generally in the same direction as the valley bottom" of a grip button, the distance from the valley bottom does not need to be strictly constant. As an example, the outer edge of the valley bottom of each of the grip buttons 41 and 42 may extend away from the valley bottom while extending upward. Note that "the same direction" as used herein is not limited to strictly the same direction but may include generally the same direction.

Note that in the present example, a gap is provided between the valley bottom and each of the grip buttons 41 and 42 such that the grip buttons 41 and 42 are not unintentionally pressed by the fingers of the user grasping the game controller 1. For example, when the user grasps the game controller 1 with their fingers resting on the valley bottoms, the side surfaces of the fingers rest on the valley bottom, and in such a state, a part of the side surface side of the finger belly (e.g., the surface opposite to the fingernail) will touch the grip. This gap may be set to a length such that a part of the side surface side of the finger belly does not touch the grip button, or even if it does, it does not transmit enough force to press the grip button. As an example, the gap may be 1 mm or more, 2 mm or more, or 3 mm or more. In the present example, the gap is set to a length such that the finger resting on the valley bottom can press the grip buttons 41 and 42 by squeezing the grips 5 and 6. More specifically, when the user squeezes with the finger from a state where the side surface of the finger is resting on the valley bottom and a part of the side surface side of the finger belly is touching the grip, a portion of the finger belly that is on the center side in the width direction is strongly pressed against the grip side. The gap is set to a length such that the grip buttons 41 and 42 are pressed by this portion. As an example, the gap may be set to a length of 1 cm or less, 9 mm or less, or 8 mm or less. Thus, the gap may be set to a length (e.g., 1 mm or more and 1 cm or less) such that the grip buttons 41 and 42 are not unintentionally operated when the user is grasping the game controller 1 with their fingers resting on the valley bottom, and that the grip buttons 41 and 42 can easily be operated in response to the user squeezing the grip 5 or 6.

In the present example, the grip buttons 41 and 42 are provided on the upper side relative to the center of the grips 5 and 6 for the up-down direction (see the back view of FIG. 3). That is, the lower ends of the grip buttons 41 and 42 are located on the upper side relative to the center of the grips 5 and 6 for the up-down direction. That is, in the present example, the grip buttons are not provided on a portion of the grips 5 and 6 that is on the lower side relative to the center of the grips 5 and 6 for the up-down direction. According to the above description, it is easier to grasp the grips 5 and 6 with fingers different from the fingers for operating the grip buttons 41 and 42 (e.g., the ring finger and the little finger when operating the grip buttons 41 and 42 with the middle finger, or the little finger when operating the grip buttons 41 and 42 with the ring finger). Note that as shown in FIG. 3, the grip buttons 41 and 42 may be provided on the side of the valley bottoms, from among the end portions of the grips 5 and 6 and the valley bottoms.

In the present example, the grip buttons 41 and 42 are provided on the upper side relative to the lower end of the main body portion 9. More specifically, as the game controller 1 is viewed from the back side, the lower end of the grip buttons 41 and 42 is located on the upper side relative to the lower end of the central portion of the game controller 1 in the left-right direction. That is, in the present example, the grip buttons are not provided in a portion of the grips 5 and 6 that is on the lower side relative to the lower end of the central portion. According to the above description, when the user grasps the grips 5 and 6 without operating the grip buttons 41 and 42 (e.g., when the buttons 41 and 42 are not used), it is possible to reduce the risk that the user may unintentionally press the grip buttons 41 and 42 with fingers that are holding the grips 5 and 6 (e.g., the ring finger or the little finger).

In the present example, the grip buttons 41 and 42 are provided at positions that are invisible as the game controller 1 is viewed from the front side (see the front view of FIG. 3). That is, the grip buttons 41 and 42 do not extend outward and inward from the grips 5 and 6 so as to be visible as the game controller 1 is viewed from the front side. According to the above description, it is possible to suppress the grip buttons 41 and 42 from being unintentionally operated by the fingers or the palm grasping the grips 5 and 6.

In the present example, the grip buttons 41 and 42 are provided at positions that are invisible as the game controller 1 is viewed from the side surface (see the right view and the left view of FIG. 3). Note that the grip buttons 41 and 42 may be provided on surfaces of the housing 2 that face inward of the game controller 1. The operation surfaces of the grip buttons 41 and 42 will be provided so as to face inward of the game controller 1 (e.g., the normal to the operation surface has an inward component). Since the finger belly faces outward of the game controller 1 when the user is grasping the grips 5 and 6 (see FIG. 5), by providing the grip buttons so as to face inward, it is easier to operate the grip buttons 41 and 42 with fingers grasping the grips 5 and 6. According to the above description, it is possible to suppress the grip buttons 41 and 42 from being unintentionally operated by the fingers or the palm grasping the grips 5 and 6.

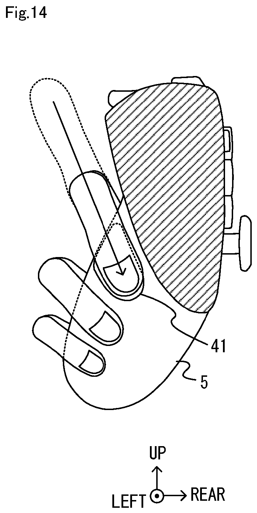

FIG. 14 is a view showing an example of a finger operating the right grip button 41 as viewed from the side. Note that FIG. 14 shows the game controller 1 while cutting away the left half thereof (the cross section is hatched while omitting elements inside the housing 2). FIG. 14 shows only the middle finger, the ring finger and the little finger of the right hand of the user grasping the game controller 1. In the present example, the grip buttons 41 and 42 are each provided on the side facing upward of the grip 5 or 6. That is, at least a portion of the operation surface of the grip buttons 41 and 42 is provided so as to face upward (e.g., the normal to the operation surface has an upward component). As shown in FIG. 14, when bending the fingers grasping the grip of the game controller 1 (the middle finger, the ring finger and the little finger in FIG. 14), the fingertips move in a diagonal downward direction (see the arrow in FIG. 14). Therefore, by providing the operation surfaces of the grip buttons 41 and 42 so as to face upward, as in the present example, the user can press the operation surfaces with a more natural finger movement as compared with a case where the operation surface is not facing upward (e.g., where the normal direction to the operation surface is parallel to the front-rear direction). This can improve the operability of the grip buttons 41 and 42.

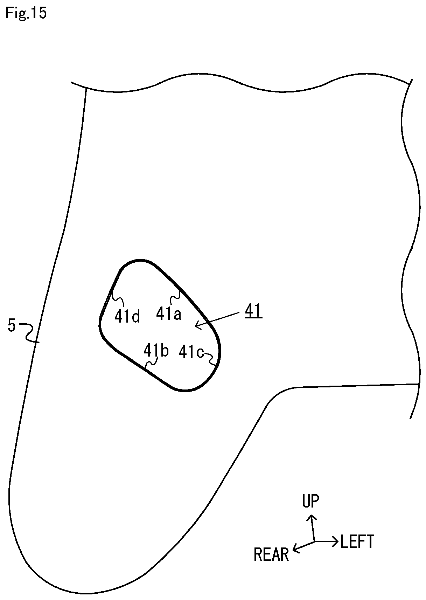

As shown in FIG. 14, the grip buttons 41 and 42 have a line (e.g., an upper line 41a shown in FIG. 15 to be described below) extending along the back surface of the main body back portion 8 as the game controller 1 is viewed from the side surface. This allows the user to press the grip button 41 or 42 by bending the finger along the main body back portion 8, thereby improving the operability of the grip buttons 41 and 42.

In the present example, the left end of the right grip button 41 is located on the right side relative to the left end of the R button 31 (see the back view of FIG. 3). The left end of the right grip button 41 is located on the right side relative to the left end of the ZR button 33 (see the back view of FIG. 3). The right end of the left grip button 42 is located on the left side relative to the right end of the L button 32. The right end of the left grip button 42 is located on the left side relative to the right end of the ZL button 34. Thus, the inner end portions of the grip buttons 41 and 42 for the left-right direction are located on the outer side relative to the inner end portions of the buttons 31 to 34 provided on the upper side of the game controller 1 for the left-right direction. As shown in FIG. 5, the user operates the buttons 31 to 34 provided on the upper side of the game controller 1 with their fingers extended, whereas the user operates the grip buttons 41 and 42 with their fingers bent. Therefore, by arranging the inner end portions of the grip buttons 41 and 42 as described above, it is easier to operate the grip buttons 41 and 42.

In the present example, the rear end of the operation surface of the right grip button 41 is located on the front side relative to the rear end of the right grip 5. The rear end of the operation surface of the left grip button 42 is located on the front side relative to the rear end of the left grip 6. This reduces the possibility of the user unintentionally operating the grip button 41 or 42 with a finger that is used for grasping the grip 5 or 6 but not used for operating the grip button 41 or 42 (e.g., the little finger).

FIG. 15 is an enlarged view of the game controller 1 around the right grip button 41. As shown in FIG. 15, in the present example, the outer shape of the right grip button 41 (specifically, the outer shape of the operation surface of the right grip button 41) includes the upper line 41a extending along the valley bottom formed by the right grip 5 and the main body back portion 8 and a lower line 41b opposite to the upper line 41a. The upper line 41a extends in the same direction as the valley bottom. The operation surface of the right grip button 41 may be said to have a shape that extends along the valley bottom as a whole. According to the above description, even when the user presses a portion of the operation surface of the right grip button 41 that is on the far side from the valley bottom, it is possible to easily operate the right grip button 41 by bending the finger grasping the game controller 1 in the direction along the valley bottom.

In the present example, the lower line 41b extends away from the upper line 41a while extending outward for the left-right direction. That is, the operation surface of the right grip button 41 has a shape such that the width (e.g., the length for the direction perpendicular to the upper line 41a) becomes wider while the upper line 41a extends outward for the left-right direction. Note that while FIG. 15 only shows the right grip button 41, the left grip button 42 is left-right symmetrical with the right grip button 41 in the present example. That is, also the left grip button 42, like the right grip button 41, has a shape that includes an upper line extending along the valley bottom and a lower line that opposes the upper line and extends away from the upper line while extending outward for the left-right direction.

As described above, the operation surfaces of the grip buttons 41 and 42 have a shape such that the width increase while extending outward for the left-right direction. Now, for example, when a user with small hands grasps the game controller 1, the fingertip of the finger operating the grip button 41 or 42 may not reach the inner side portion of the grip button for the left-right direction, but only reach the outer side portion thereof. In this regard, in the present example, since the grip buttons 41 and 42 are wider on the outer side, even a user with small hands can easily operate the grip buttons 41 and 42.

Note that the operation surfaces of the grip buttons 41 and 42 may have a shape whose width is wider on the outer side than on the inner side in the left-right direction (see the back view of FIG. 3 and FIG. 15). The grip buttons 41 and 42 may not include at least one of the upper line 41a and the lower line 41b, or may include further lines. Also in this case, the width may be wider on the outer side than on the inner side. Note that the width of the operation surface may be, for example, the length in a direction orthogonal to the longitudinal direction of the operation surface, and in the present example, may be the length in a direction perpendicular to the upper line.

As shown in FIG. 15, in the present example, the outer shape of the operation surface of the right grip button 41 includes an inner line 41c that connects together the upper line 41a and the lower line 41b on the inner side for the left-right direction (specifically, on the inner side with respect to the center of the operation surface), and an outer line 41d that connects together the upper line 41a and the lower line 41b on the outer side for the left-right direction (specifically, on the outer side with respect to the center of the operation surface). Now, the outer line 41d is curved less than the inner line 41c. Therefore, even when pressing the outer portion of the grip button 41 or 42, it is easier for the user to operate the grip buttons 41 and 42. Note that the curvature of the most curved portion of the outer line 41d may be smaller than the curvature of the most curved portion of the inner line 41c. The outer line 41d may be closer to a straight line as a whole than the inner line 41c. The outer line 41d may be a straight line. The outer line 41d has a straight portion, and also has a curved portion that connects together the straight portion and the upper line 41a and a curved portion that connects together the straight line and the lower line 41b. The inner line 41c may not have a straight portion, and may have a straight portion that is shorter than the straight portion of the outer line 41d where the outer line 41d has a straight portion. In the present example, four corners can be recognized on the operation surface of the right grip button 41. The four corners are, in ascending order of curvature, the corner between the upper line 41a and the inner line 41c, the corner between the lower line 41b and the inner line 41c, the corner between the lower line 41b and the outer line 41d, and the corner between the upper line 41a and the outer line 41d. The four corners are, in ascending order of curvature, the upper inner corner, the lower inner corner, the lower outer corner, and the upper outer corner. Note that "straight line" as used herein is not limited to a straight line in a strict sense, but may include a generally straight line.

In the present example, the difference between the distance on the inner side and the distance on the outer side in the left-right direction for the lower line 41b and the first valley line is greater than the difference between the distance on the inner side and the distance on the outer side in the left-right direction for the upper line 41a and the first valley line. The upper line 41a is longer than the inner line 41c and is longer than the outer line 41d. The lower line 41b is longer than the inner line 41c and is longer than the outer line 41d. The upper line 41a may be longer than the lower line 41b, and the straight portion of the upper line 41a may be longer than the straight portion of the lower line 41b. The outer line 41d may be longer than the inner line 41c. Note that the number, length, and direction of the lines, and the number, curvature, and angle of the corners of the operation surface are not limited to the above.

For example, the operation surfaces of the grip buttons 41 and 42 may be shaped to match the shape of the finger from the first joint up. When the user grasps the game controller 1, the finger of the user from the first joint up is thought to be oriented toward the center side in the left-right direction and toward the lower side in the up-down direction of the game controller 1. In order to match the shape of the finger, where a straight line corresponding to the first joint (e.g., a straight line perpendicular to the direction in which the finger extends) is regarded as the bottom edge, the operation surface, for example, extends from the bottom edge toward the center side in the left-right direction and toward the lower side in the up-down direction of the game controller 1 while the length in the bottom edge length gradually decreases, and the tip has a curved shape that is protruding toward the center side in the left-right direction and toward the lower side in the up-down direction of the game controller 1.

In the present example, the width of the grip buttons 41 and 42 is a length of about one finger (e.g., the middle finger, the ring finger or the little finger) operating the grip button or slightly larger (e.g., 1 to 2 [cm]). This allows the user to reliably operate the grip buttons that are invisible from the front side, and reduces the risk of unintentionally operating the grip button 41 or 42 with a finger different from the finger used to operate the grip button 41 or 42 (e.g., the little finger when the ring finger is used for operation). For example, when the user operates the grip buttons 41 and 42 with the middle fingers, it is possible to suppress the possibility that the grip buttons 41 and 42 are pressed unintentionally by the ring fingers even if the ring fingers are not positioned away from the middle fingers used to operate the grip buttons 41 and 42. Therefore, it is possible to operate the grip buttons 41 and 42 while comfortably grasping the grips 5 and 6.

Note that, in the present example, the interval between the upper line of the grip buttons 41 and 42 and the valley bottom is smaller than the width of the grip buttons 41 and 42. Therefore, the user can easily operate the grip buttons 41 and 42 with the fingers used for grasping the game controller 1 while resting the fingers on the valley bottoms, regardless of the size of the fingers of the user.

In the present example, a portion of the back surface of the grips 5 and 6 around which the grip button 41 or 42 is provided is a curved surface that protrudes outward. The operation surfaces of the grip buttons 41 and 42 are formed by curved surfaces extending along the curved surfaces of the grips 5 and 6. More specifically, the operation surface of the right grip button 41 is a curved surface extending along the curved surface of the right grip 5 around the right grip button 41. The operation surface of the left grip button 42 is a curved surface along the curved surface of the left grip 6 around the left grip button 42. For example, the operation surfaces of the grip buttons 41 and 42 slightly protrude from, or are flush with, the surrounding curved surfaces of the grips 5 and 6. The operation surfaces of the grip buttons 41 and 42 are formed by curved surfaces that protrude toward the front side, where the operation surface is the front side. As described above, as the operation surfaces of the grip buttons 41 and 42 are provided along the curved surfaces of the grips 5 and 6, the presence of the grip buttons 41 and 42 is less noticeable when the grip buttons 41 and 42 are not operated, thereby further improving the comfort of holding the grips 5 and 6. It is possible to reduce the possibility of the user unintentionally operating the grip button 41 or 42.

Note that, in other embodiments, the position and the shape of the buttons provided on the back side of the game controller 1 (the grip buttons in the present example) are arbitrary and are not limited to the position and the shape of the present example. For example, buttons provided on the back side of the game controller 1 may be provided at any position on the grip or on the back side of the main body portion 9. In other embodiments, no buttons may be provided on the back side of the game controller 1.

### [4. Internal configuration of game controller]

Next, an example of the internal configuration of the game controller 1 will be described. **In** the following, the internal configuration will be described in the order of assembly of the game controller 1. Note however that the assembly method described below is an example, and the game controller 1 may be assembled in any order. The internal configuration described below is an example, and the game controller 1 may not include some of the components described below, or may include components different from those described below.

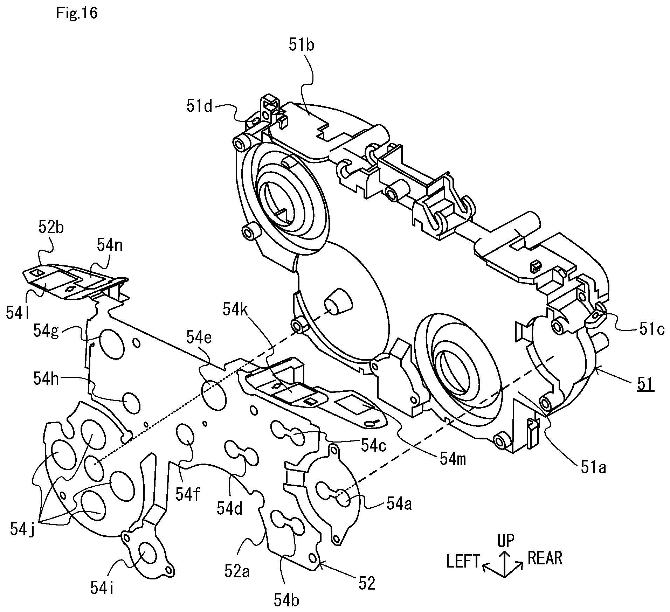

FIG. 16 is an exploded perspective view showing an example of the first frame and the membrane sheet. **In** the present example, the game controller 1 includes the first frame 51 and a membrane sheet 52 shown in FIG. 16 inside the housing 2. In the present example, the membrane sheet 52 is attached to the first frame 51. The first frame 51 has a shape such that the length thereof in the up-down direction and the length thereof in the left-right direction are longer than the thickness thereof in the front-rear direction.

The membrane sheet 52 includes detection sections 54a to 54n for detecting inputs to the buttons 11 to 19 and the directional pad 21 provided on the front side of the game controller 1 and the buttons 31 to 34 provided on the upper side of the game controller 1. In the present example, as the membrane sheet 52 is attached to the first frame 51, the detection sections 54a to 54n included in the membrane sheet 52 are provided on the first frame 51. As shown in FIG. 16, the membrane sheet 52 has a front surface portion 52a, which is a surface facing in the front direction, and an upper surface portion 52b, which is a surface facing in the upward direction. The upper surface portion 52b is provided at a position in the upper right direction of the front surface portion 52a and at a position in the upper left direction of the front surface portion 52a. The membrane sheet 52 is attached to the first frame 51 so that the front surface portion 52a is provided on a front surface portion 51a of the first frame and the upper surface portion 52b is provided on an upper surface portion 51b of the first frame. As described in detail below, when the game controller 1 is assembled, the detection sections 54a to 54n of the membrane sheet 52 are located corresponding to the input sections where inputs are detected by the detection sections. That is, for the input sections 11 to 19 and 21 provided on the front surface of the game controller 1, the detection sections 54a to 54j corresponding to the input sections are located at positions rearward of the input sections on the front side of the front surface portion 52a. For the buttons 31 to 34 provided on the upper side of the game controller 1, the detection sections 54k to 54n corresponding to the input sections are located at positions downward of the buttons on the upper side of the upper surface portion 52b.

The specific configurations of the detection sections 54a to 54n are arbitrary. The detection sections 54a to 54n may each be, for example, a detection circuit in a rubber switch (e.g., the rubber switch may be formed by a detection section and a key rubber) or a tact switch. In the present example, for the buttons 16, 18 and 19, tact switches are attached to the membrane sheet 52 as the detection sections in order to reduce the possibility that when the user unintentionally touches these buttons, the operation may be detected. For the other buttons 11 to 15, 17, 19, 21 and 31 to 34, the detection circuit is formed on the membrane sheet 52 as a detection section in order to improve the operating feel when the user presses these buttons.

As described in detail below, in the present example, the front surface of the first frame 51 has protrusions/recesses and slopes, and the membrane sheet 52 is attached along the protrusions/recesses and slopes. As described above, the membrane sheet 52 is provided so as to span between the front surface portion 51a and the upper surface portion 51b of the first frame 51. Now, in the case where, as in the present example, a plurality of detection sections are provided with different heights (e.g., different positions for the direction perpendicular to the surface on which the detection sections are provided) and different inclinations, if rigid substrates are used, a plurality of rigid substrates and a flexible substrate connecting those substrates are required, which may increase the number of components and the manufacturing cost. In contrast, in the present example, with the membrane sheet 52, it is possible to provide a plurality of detection sections of different heights and/or different inclinations on one first frame 51. Thus, it is possible to reduce the number of components and the manufacturing cost, and also to save the space in the housing 2. Note that, in other embodiments, a rigid substrate and/or a flexible substrate may be used instead of the membrane sheet 52.

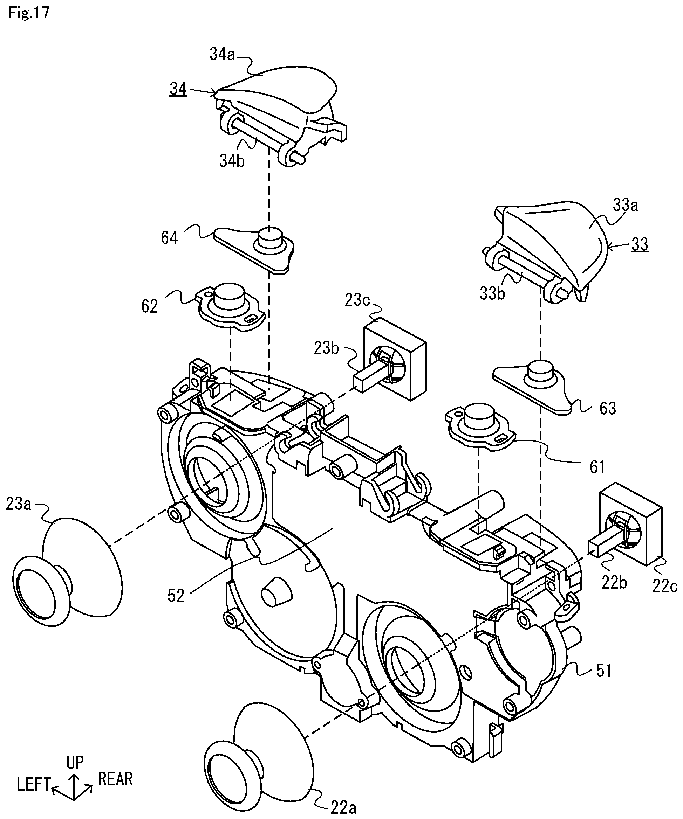

FIG. 17 is an exploded perspective view showing an example of how the analog sticks 22 and 23 and components related to the buttons on the upper side are attached to the first frame 51. As shown in FIG. 17, in the present example, key rubbers 61 to 64 for the buttons on the upper side, the ZR button 33 and the ZL button 34, and the analog sticks 22 and 23 are attached to the first frame 51 to which the membrane sheet 52 is attached.

In FIG. 17, the key rubbers 61 to 64 correspond respectively to the buttons 31 to 34 provided on the upper side of the game controller 1. The key rubber (referred to as the "R button rubber") 61 corresponding to the R button 31 is provided upward of the detection section 54k corresponding to the R button 31 on the membrane sheet 52 attached to the upper side of the first frame 51. The key rubber (referred to as the "L button rubber") 62 corresponding to the L button 32 is provided upward of the detection section 54l corresponding to the L button 32 on the membrane sheet 52. The key rubber (referred to as the "ZR button rubber") 63 corresponding to the ZR button 33 is provided upward of the detection section 54m corresponding to the ZR button 33 on the membrane sheet 52. The key rubber (referred to as the "ZL button rubber") 64 corresponding to the ZL button 34 is provided upward of the detection section 54n corresponding to the ZL button 34 on the membrane sheet 52.

The key rubbers 61 to 64 are pressed by the reverse side of the operation surface of the corresponding buttons 31 to 34 in response to the operation surface of the button being pressed. The key rubbers 61 to 64 are elastically deformed in response to the corresponding buttons 31 to 34 being pressed, thereby contacting the detection sections 54k to 54n underneath. The detection sections 54k to 54n detect that an operation is performed on the corresponding buttons 31 to 34 by detecting the contact of the key rubber. Note that the key rubbers 61 to 64 are biasing the corresponding buttons 31 to 34 in the upward direction, and when the buttons 31 to 34 are not pressed, the key rubbers 61 to 64 are in a normal state with no elastic deformation.

In the present example, in the first frame 51, the positions where the detection sections 54k and 54l for the R button rubber 61 and the L button rubber 62 are provided, and the positions where the detection sections 54m and 54n for the ZR button rubber 63 and the ZL button rubber 64 are provided are at different heights (e.g., different positions for the up-down direction) (see FIG. 17). In the present example, considering the position of the operation surface that is easy for the user to operate and the amount of movement of the operation surface (e.g., the amount of push when performing a push operation) for the button 31 to 34, the detection sections 54m and 54n corresponding to the ZR button rubber 63 and the ZL button rubber 64 are provided at lower positions relative to the detection sections 54k and 54l corresponding to the R button rubber 61 and the L button rubber 62. Now, in the present example, the detection sections 54a to 54n are arranged on the first frame 51 by using the membrane sheet 52, and it is therefore not necessary, for example, to provide rigid substrates at different heights and an FPC (flexible printed circuit) to connect together the substrates, thus enabling a reduction of the number of components.

As shown in FIG. 17, the ZR button 33 is provided upward of the ZR button rubber 63 and the ZL button 34 is provided upward of the ZL button rubber 64. The ZR button 33 is rotatably attached to the first frame 51 by a shaft 33b that is provided forward of an operation surface 33a and extends in the left-right direction. The ZL button 34 is rotatably attached to the first frame 51 by a shaft 34b that is provided forward of an operation surface 34a and extends in the left-right direction. Thus, the buttons 33 and 34 are provided in such a way that the operation surface can move in the up-down direction (more precisely, rotate about the shafts).

Note that in the present example, in the state shown in FIG. 17, the R button 31 and the L button 32 are not yet attached to the first frame 51. As will be described in detail later, in the present example, the R button 31 and the L button 32 are attached to the first frame 51 after the first frame 51 is attached to the housing 2.

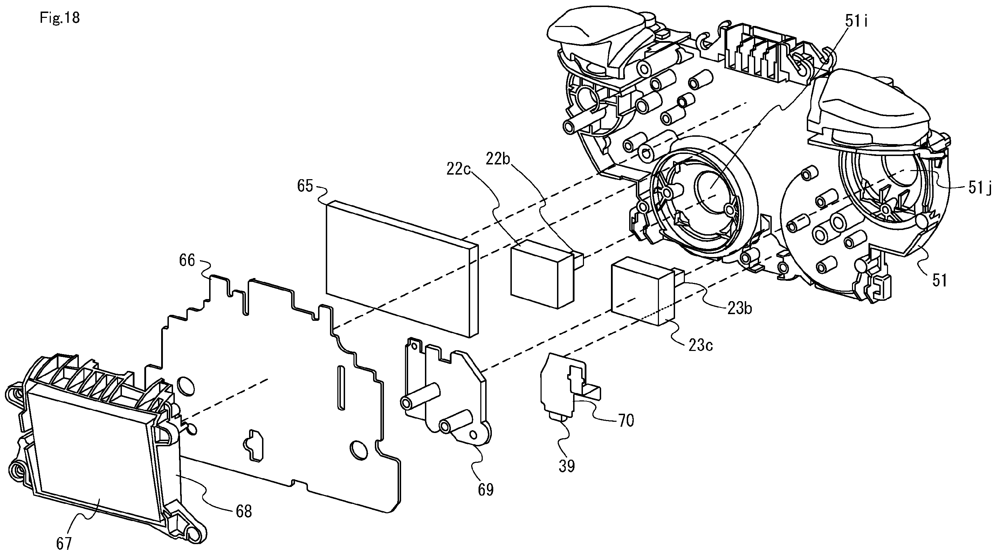

In the present example, the analog sticks 22 and 23 each include a stick top (e.g., a right stick top 22a and a left stick top 23a shown in FIG. 17), a stick shaft (e.g., a right stick shaft 22b and a left stick shaft 23b shown in FIG. 18) and a stick housing (e.g., a right stick housing 22c and a left stick housing 23c shown in FIG. 18). In the present example, components provided on the back side of the first frame 51 are attached before the stick tops 22a and 23a shown in FIG. 17 are attached.

FIG. 18 is an exploded perspective view showing an example of how components provided on the back side of the first frame 51 are attached to the first frame 51. As shown in FIG. 18, the game controller 1 includes an antenna 65, a main body substrate 66, a rechargeable battery 67, a battery box 68, a bearing part 69 and a terminal substrate 70. These components 65 to 70 are provided on the back side of the first frame 51 in the housing 2.

As shown in FIG. 18, the stick shafts 22b and 23b and the stick housings 22c and 23c of the analog sticks 22 and 23 are attached to the reverse side of the first frame 51, for example, by screwing. Now, holes 51i and 51j are provided at positions of the first frame 51 where the analog sticks 22 and 23 are attached (see FIG. 18). The stick housings 22c and 23c are attached to the back surface of the first frame 51 so that the stick shafts 22b and 23b protrude from the back side of the first frame 51 to the front side through the holes 51i or 51j. In the present example, the bearing part 69 is attached to the back side of the left analog stick 23, for example, by screwing. The bearing part 69 is provided so as to cover the reverse side of the left analog stick 23 (specifically, the stick housing 23c). Thus, it is possible to improve durability against the load applied to the left analog stick 23 from the front side to the rear side (e.g., the load applied when an input of pushing the stick top is performed). Note that, in the present example, the main body substrate 66 is arranged rearward of the right analog stick 22. Therefore, the main body substrate 66 plays the same role as a bearing part for the load on the right analog stick 22, and the durability can be improved by the main body substrate 66. Note that, in other embodiments, a bearing part may also be attached to the back side of the right analog stick 22.

The terminal substrate 70 is a substrate on which the audio input terminal 39 described above is provided. The terminal substrate 70 is attached to the reverse side of the first frame 51, for example, by screwing. The terminal board 70 is connected to the main body substrate 66 via an FPC and exchanges signals with the SoC, etc., mounted on the main body substrate 66. The terminal substrate 70 is attached to the lower portion of the first frame 51. **In** the present example, the terminal substrate 70 is attached to the first frame 51 so that the audio input terminal 39 protrudes on the lower side relative to the first frame 51. Note that while the terminal substrate 70 and the main body substrate 66 are formed by separate substrates in the present example, the audio input terminal 39 may be provided on the main body substrate 66 instead of the terminal substrate 70.

The antenna 65 is fixed to the back side of the first frame 51, for example by screwing. The antenna 65 is, for example, an NFC antenna. The antenna 65 may be any type of antenna for the game controller 1 to communicate wirelessly with other devices.

The main body substrate 66 is fixed to the back side of the first frame 51, for example, by screwing. In the present example, the main body substrate 66 is provided on the back side of the antenna 65. The main body substrate 66 is provided with a control circuit that executes various processes of the game controller 1. The control circuit is electrically connected to electronic components housed in the housing 2 (e.g., the detection sections 54a to 54h, the rechargeable battery 67, the terminal substrate 70 and a grip substrate to be described later). The control circuit, for example, performs a process based on signals sent from the processing sections 54a to 54h (e.g., a process of generating operation data indicating an operation on the game controller 1), a process of controlling the exchange of data with other devices, a process of power control related to the rechargeable battery 67 (e.g., a process of controlling the charging of the rechargeable battery 67, and a control of supplying power from the rechargeable battery 67 to electronic components). The main body portion 66 is provided with a connector for electrically connecting some electronic components housed in the housing 2 (e.g., the grip substrate to be described below) with the control circuit, and various electronic components such as an LED of the light-emitting portion.

The rechargeable battery 67 is attached to the battery box 68, for example, by adhesion. The battery box 68 with the rechargeable battery 67 attached thereto is attached to the back side of the main body substrate 66, for example, by screwing.

As shown in FIG. 17, the stick tops 22a and 23a of the analog sticks 22 and 23 are attached to the front side of the first frame 51. Specifically, the stick top 22a is attached to the stick shaft 22b protruding to the front side from the hole 51i of the first frame 51, and the stick top 23a is attached to the stick shaft 23b protruding to the front side from the hole 51j of the first frame 51.

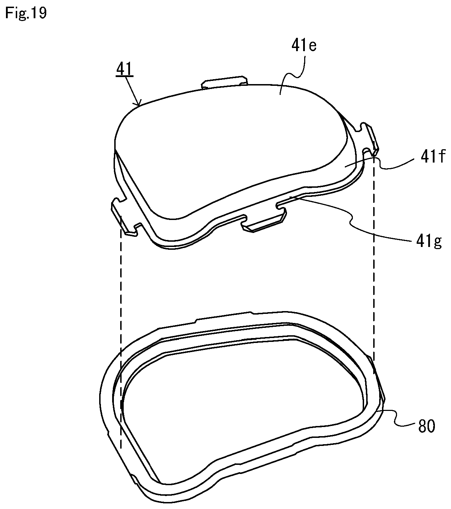

The first frame 51 with the various components attached thereto as described above is attached to the housing 2. Now, in the present example, a grip unit is attached to the inside of the grips 5 and 6 of the housing 2 before the first frame 51 is attached to the housing 2. As described in detail below, the grip unit includes a detection section for detecting inputs to the grip button 41 or 42 described above, and also includes a vibration component. The grip unit will now be described with reference to FIG. 19 to FIG. 28. Note that, in the following, the configuration of the grip unit will be described using the right grip unit provided in the right grip 5 as an example.

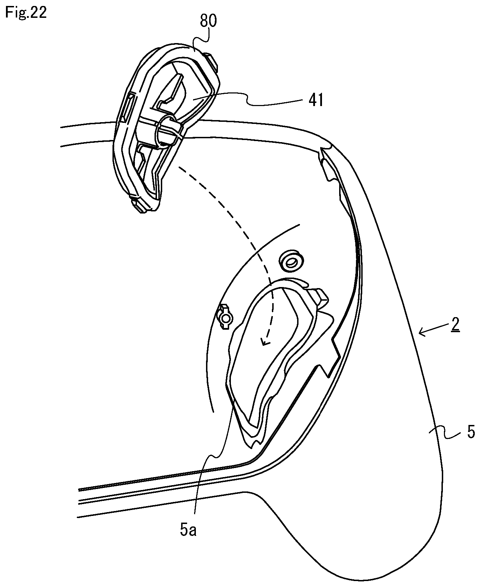

FIG. 19 is an exploded perspective view showing an example of the right grip button and a flange rubber included in the right grip unit. As shown in FIG. 19, the right grip button 41 includes an operation surface 41e, a wall surface 41f and a flange portion 41g. The operation surface 41e is a surface that is exposed to the outside of the housing 2 through the hole of the right grip 5 (see the back view of FIG. 3). Note that in the following description of the right grip unit, the side on which the operation surface 41e faces will be referred to as the front side and the opposite side as the reverse side. Around the operation surface 41e, the wall surface 41f extends toward the reverse side of the operation surface 41e. In the present example, the wall surface 41f is provided along the entire circumference of the operation surface 41e and is ring-shaped. The flange portion 41g extends outward (more specifically, outward in the ring shape of the wall surface 41f) from an end portion of the wall surface 41f on the reverse side. In the present example, the flange portion 41g provided along the entire circumference of the wall surface 41f and is ring-shaped. The right grip button 41 has a size such that the operation surface 41e passes through a hole in the right grip 5 (a hole 5a shown in FIG. 22 to be described below) and the flange portion 41g does not pass through this hole.

As shown in FIG. 19, in the present example, the flange rubber 80 is attached to the right grip button 41. The flange rubber 80 is attached so as to cover the flange portion 41g of the right grip button 41. Specifically, the flange rubber 80 covers the front side and the reverse side of the flange portion 41g. Note that the flange rubber 80 may cover at least the front side of the flange portion 41g. In the present example, the flange rubber 80 is ring-shaped and is provided along the entire circumference of the flange portion 41g.

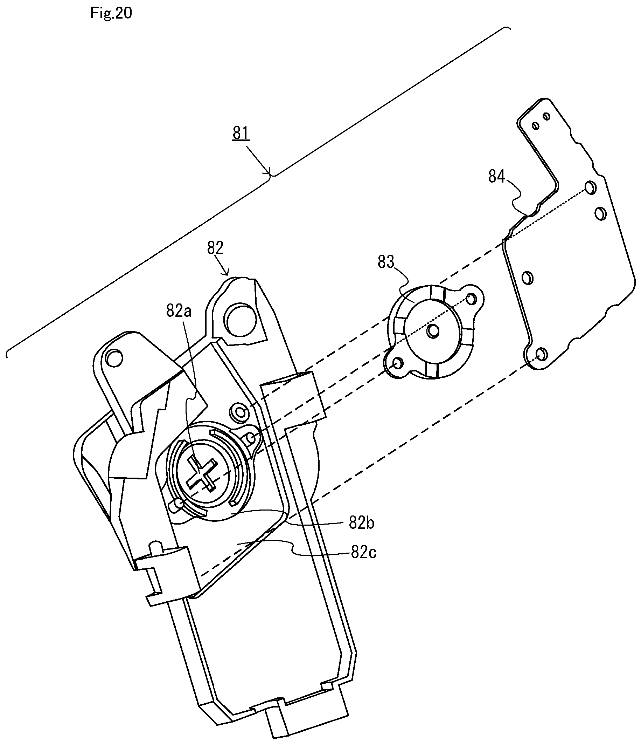

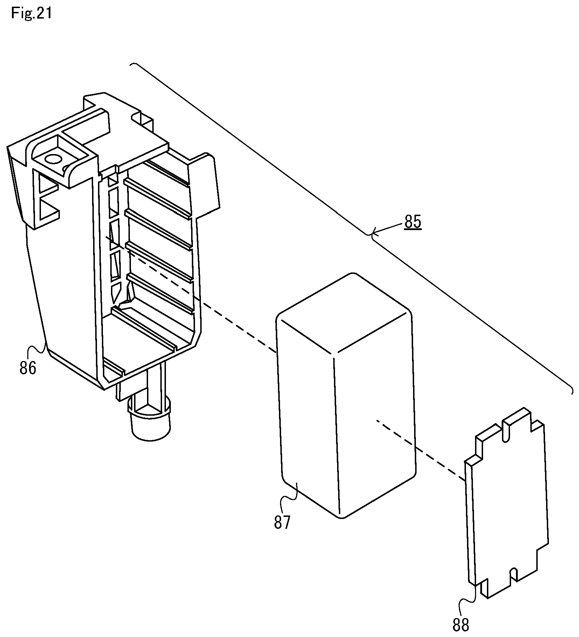

FIG. 20 is an exploded perspective view showing an example of components of a component holder unit of the right grip unit. As shown in FIG. 20, a component holder unit 81 includes a component holder portion 82, a grip button rubber 83 and a grip substrate 84. As shown in FIG. 20, the grip button rubber 83 and the grip substrate 84 are attached to the component holder portion 82. Now, in the present example, the holder of the right grip unit is formed by the component holder portion 82 and a vibration motor holder portion (see FIG. 21) to be described below. The component holder portion 82 is a portion of the holder of the right grip unit to which the grip substrate 84 is attached. The grip button rubber 83 is a key rubber biasing the right grip button 41 in the front side direction. The grip substrate 84 is a substrate on which the detection section corresponding to the right grip button 41 is provided.

The grip button rubber 83 and the grip substrate 84 are attached to the reverse side of the component holder portion 82. Specifically, as shown in FIG. 20, the reverse surface of the component holder portion 82 is provided with a recess 82b having a shape corresponding to the shape of the grip button rubber 83 and a recess 82c having a shape corresponding to the shape of the grip substrate 84. The grip button rubber 83 is provided in the recess 82b. This positions the grip button rubber 83 in the direction horizontal to the reverse surface of the component holder portion 82. The grip substrate 84 is provided in the recess 82c. The grip substrate 84 is provided on the reverse side of the component holder portion 82 so that the grip button rubber 83 is sandwiched between the component holder portion 82 and the grip substrate 84. The grip substrate 84 is fixed to the component holder portion 82 by screwing. As described above, the grip button rubber 83 and the grip substrate 84 are fixed to the component holder portion 82.

FIG. 21 is an exploded perspective view showing an example of components of a vibration holder unit of the right grip unit. As shown in FIG. 21, a vibration holder unit 85 includes a vibration motor holder portion 86, a vibration motor 87 and a cushion member 88. The vibration motor 87 is an example of a vibration component, which vibrates the housing 2 by its own vibration and transmits the vibration to the hand of the user grasping the game controller 1. In the present example, the vibration motor 87 is a rectangular parallelepiped, but the shape of the vibration motor 87 is arbitrary. The vibration motor holder portion 86 is a part of the holder of the right grip unit, and more specifically is a portion of the holder of the right grip unit that holds the vibration motor 87. That is, the vibration motor 87 is fixed to the vibration motor holder portion 86. The vibration motor holder portion 86 has a bottom surface and wall surfaces extending perpendicular to the bottom surface from the four sides of the bottom surface (see FIG. 21). In the present example, one surface of the vibration motor 87 (specifically, a surface parallel to the longitudinal direction of the vibration motor 87) is fixed to the bottom surface of the vibration motor holder portion 86, for example by adhesion. The vibration motor 87 is provided so that the surface that is fixed to the bottom surface of the vibration motor holder portion 86 and the four surfaces adjacent thereto are in contact with (or facing) the wall surfaces of the vibration motor holder portion 86. The cushion member 88 is provided on the surface of the vibration motor 87 that is on the opposite side of the surface fixed to the bottom surface of the vibration motor holder portion 86. The cushion member 88 has a plate shape and is fixed to the vibration motor 87, for example by adhesion, so as to extend along the above surface of the vibration motor 87.

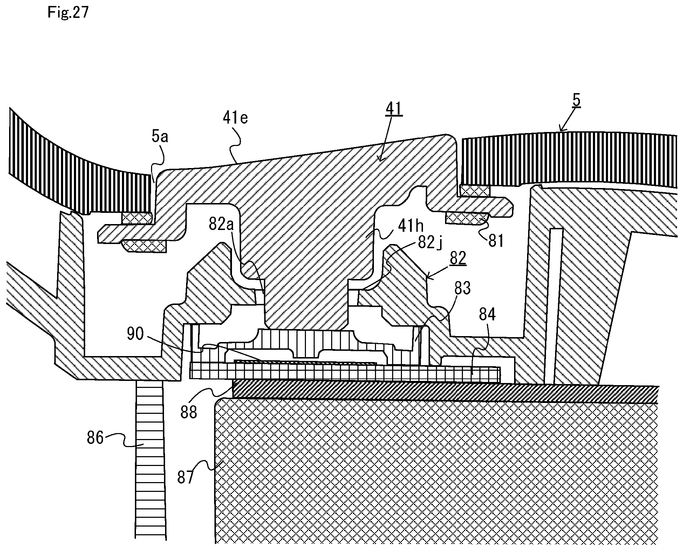

In the present example, the attachment of the grip unit to the housing 2 is done for each of the components shown in FIG. 19 to FIG. 21. FIG. 22 is a view showing an example of how the right grip button 41 shown in FIG. 19 is attached to the housing 2. As shown in FIG. 22, in the present example, the right grip button 41 with the flange rubber 80 attached thereto is attached so that the operation surface 41e is exposed to the outside of the housing 2 through the hole 5a provided in the right grip 5. At this time, the flange rubber 80 is provided between the flange portion 41g of the right grip button 41 and the inner wall of the housing 2 (see FIG. 27 to be described below). Thus, it is possible to make it difficult for vibration of the housing 2 to be transmitted to the right grip button 41. Therefore, when the housing 2 is vibrated by the vibration motor to be described below, it is possible to suppress the generation of chattering noises at the right grip button 41 and to improve the operating feel of the right grip button 41.

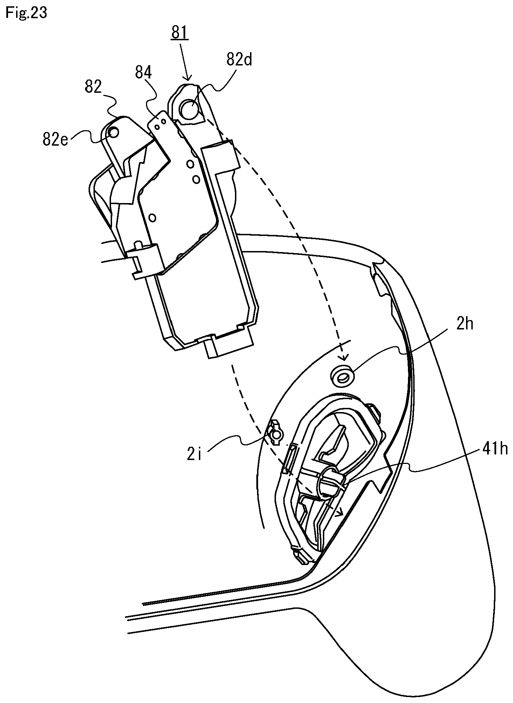

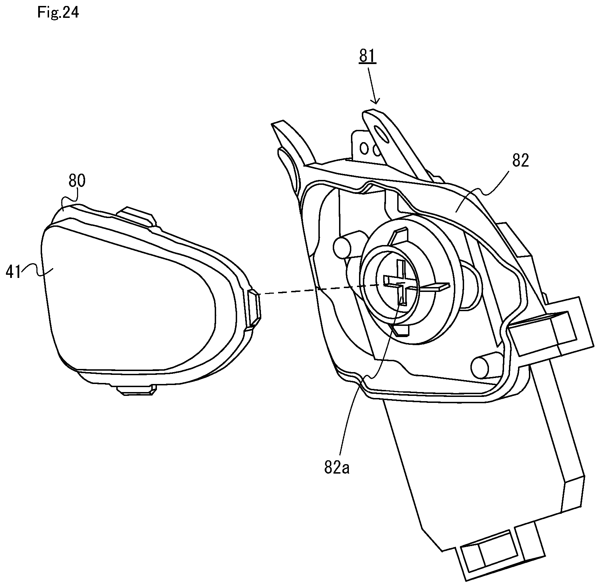

FIG. 23 a view showing an example of how the component holder unit 81 shown in FIG. 20 is attached to the housing 2. FIG. 24 is an exploded perspective view of the right grip button 41 and the component holder unit 81 as viewed from the front side. Note that FIG. 24 only shows the right grip button 41, the flange rubber 80 and the component holder unit 81, while omitting the housing 2. As shown in FIG. 23, the component holder unit 81 is attached to the housing 2 with the right grip button 41 attached thereto. Specifically, the component holder portion 82 is attached to the reverse side of the right grip button 41 inside the housing 2. The component holder portion 82 is attached so as to extend along the reverse surface of the operation surface 41e of the right grip button 41. As shown in FIG. 20 and FIG. 24, the component holder portion 82 is provided with a hole 82a that penetrates from the front side to the reverse side. A shaft portion 41h extending toward the reverse side is provided on the reverse side of the operation surface 41e of the right grip button 41 (see FIG. 23). The component holder portion 82 is fixed to the housing 2 with the shaft portion 41h of the right grip button 41 passing through the hole 82a. When the component holder portion 82 is fixed to the housing 2, the right grip button 41 is movable in the reverse-front direction of the operation surface 41e.

In the present example, the component holder portion 82 is provided with holes 82d and 82e, and the inner wall of the housing 2 (specifically, the inner wall of the right grip 5) is provided with a projecting portion 2h and a screw hole 2i (see FIG. 23). As a screw is screwed into the screw hole 2i passing through the hole 82e, with the projecting portion 2h in engagement with the hole 82d, the component holder portion 82 is fastened to the housing 2. Note that the position at which the component holder portion 82 is fixed to the housing 2 does not need to be the right grip 5 (specifically, the inner wall of the right grip 5). For example, the component holder portion 82 may extend from inside the right grip 5 to the inner wall of the main body portion 9, and the inner wall of the main body portion 9 of the game controller 1 and the component holder portion 82 may be fixed together. By setting the position at which the component holder portion 82 is fixed to the housing 2 to be the position of the inner wall of the main body portion 9 or the position of the inner wall of the right grip 5, it is possible to make it easier to fix the component holder portion 82 to the housing 2 by screwing, or the like. In the present example, the grip 5 or 6 is formed of a single component, but the opening 2a is provided in the front side of the game controller 1, so that the screwing at the position of the inner wall of the main body portion 9 or at the position of the inner wall of the right grip 5 can easily be done via the opening 2a.

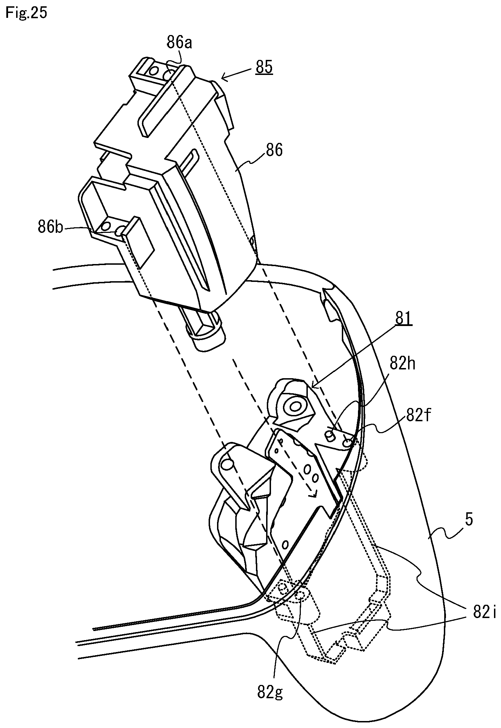

FIG. 25 is a view showing an example of how the vibration holder unit 85 shown in FIG. 21 is attached to the component holder unit 81. As shown in FIG. 25, the vibration holder unit 85 is attached to the component holder unit 81 attached to the housing 2. This means that the entire grip unit is attached to the housing 2. In the present example, the vibration holder unit 85 is attached to the component holder unit 81 by being inserted downward toward the inside of the right grip 5 through the opening on the upper side of the right grip 5 (see the broken line arrow shown in FIG. 25). This allows the vibration holder unit 85 to be easily attached to the right grip 5, which is formed of a single component.

**In** the present example, the component holder portion 82 includes a guide portion 82i. With the component holder unit 81 attached to the right grip 5, the guide portion 82i is a wall that extends along the direction in which the right grip 5 extends (e.g., from the base to the tip of the right grip 5). **In** the present example, the guide portion 82i is provided at both ends of the component holder portion 82 for the direction perpendicular to the above direction. The component holder portion 82 can also be said to have a groove with the two guide portions 82i as side walls. The width of the groove is the same as or slightly longer than the width of the vibration holder portion. When the vibration holder unit 85 is attached to the component holder unit 81, the vibration motor holder portion 86 is guided by the guide portion 82i toward the position of fixation between the component holder portion 82 and the vibration motor holder portion 86. That is, the vibration motor holder portion 86 is inserted into the right grip 5 in the direction toward the tip of the right grip 5, passing between the two guide portions 82i, and is attached to the component holder portion 82 in the inserted state. With the vibration holder unit 85 attached to the component holder unit 81, a part of the side wall of the vibration motor holder portion 86 faces the guide portion 82i. Thus, the guide portion 82i facilitates the attachment of the vibration holder unit 85.

The vibration holder unit 85 (specifically, the vibration motor holder portion 86) is fixed to the component holder portion 82, for example, by screwing. In the present example, screwing for attaching the vibration holder unit 85 to the component holder unit 81 is done by inserting a screw downward toward the inside of the right grip 5 through the opening on the upper side of the right grip 5 (see FIG. 25). This allows for easy screwing when attaching the vibration holder unit 85 in the right grip 5, which is formed of a single part. Note that the component holder portion 82 may be provided with a projecting portion 82h extending toward the opening of the right grip 5. Then, the vibration holder unit 85 may be screwed with the vibration holder unit 85 in engagement with the projecting portion 82h. This allows for fixation while positioning the vibration holder unit 85 and the component holder unit 81.

Note that in the present example, the fastening operation is performed by a fastening member (e.g., a screw) facing in the direction toward the tip of the grip via the opening 2a spanning from the front side to the upper side of the game controller 1. Now, the opening provided in the housing 2 may be provided at least on the upper side or may be provided at least on the front side. When the opening is provided at least on the upper side, the fastening operation described above can be performed through the opening, and the operation can be easily performed as the fastening member is facing in the direction toward the tip of the grip. Even when the opening is provided on the front side, the fastening operation described above can be performed through the opening, and the operation can be easily performed as the fastening member is facing in the direction toward the tip of the grip.

In the present example, the vibration holder unit 85 is attached to the component holder portion 82 so that it is in contact with the inner wall of the housing 2. For example, with the vibration holder unit 85 attached to the component holder portion 82, a part of the reverse side of the vibration motor holder portion 86 is in contact with the inner wall of the housing 2. This allows the vibration by the vibration motor 87 to be efficiently transmitted to the housing 2.

As described above, in the present example, the holder of the right grip unit includes the vibration motor holder portion 86 fixed to the vibration motor 87 and the component holder portion 82 fixed to the grip substrate 84. Thus, when attaching the right grip unit to the housing 2, the vibration motor holder portion 86 can be attached after first attaching the component holder portion 82, thereby facilitating the attachment of the right grip unit. Note that, in other embodiments, the holder of the right grip unit may be formed of a single component.

In the present example, the vibration motor holder portion 86 is provided with holes 86a and 86b (see FIG. 25). The portion of the vibration motor holder portion 86 in which the holes 86a and 86b are provided is an example of the fastened portion to be fastened with the component holder portion 82. Now, the component holder portion 82 is provided with screw holes 82f and 82g at positions corresponding to the holes 86a and 86b of the vibration motor holder portion 86. The vibration motor holder portion 86 is fastened to the component holder portion 82 by screwing a screw into the screw hole 82f or 82g while passing through the hole 86a or 86b. Note that the holes 86a and 86b and the screw holes 82f and 82g are formed to extend along the direction in which the right grip 5 extends from the main body portion 9 of the game controller 1. This makes it easier to perform the screwing operation when attaching the vibration motor holder portion 86 to the component holder portion 82.

In the present example, the holder of the right grip unit holds the grip substrate 84 on one side (e.g., the side of the component holder portion 82) and holds the vibration motor 87 on the other side (e.g., the side of the vibration motor holder portion 86). This makes it possible to reduce the transmission of the vibration caused by the vibration motor 87 to the grip substrate 84, thereby reducing the risk of generating chattering noises in the grip substrate 84.

As described above, in the present example, the grip substrate 84 is provided in the right grip 5 (see FIG. 23). This allows the detection section corresponding to the right grip button 41 to be arranged on the reverse side of the right grip button 41.

Note that, in other embodiments, the detection section may be arranged on the side of the main body portion 9 of the game controller 1 (e.g., the detection section is provided on the main body substrate). With this configuration, for example, a bar-shaped member is provided that extends from the grip button 41 to the main body portion 9 and one end of which is rotatably supported on the main body portion 9, and the detection section is provided at a position such that the bar-shaped member contacts the detection section when rotated in response to a push on the grip button 41, so that the operation on the grip button 41 is detected by the detection section on the main body substrate. Note however that with the configuration described above, since the grip button 41 is away from the axis of rotation, the amount of depression of the grip button 41 required for the pressing to be detected by the detection section is large. Therefore, there is a risk that the responsiveness of the grip button 41 may decrease. With the configuration described above, the amount of depression required for the pressing of the grip button 41 to be detected by the detection section differs depending on whether a position on the operation surface of the grip button 41 that is close to the rotation axis is pressed or a position that is far away from the rotation axis is pressed. Therefore, the operating feel of the grip button 41 may deteriorate.

In contrast, in the present example, by providing the grip substrate 84 in the right grip 5, the detection section can be arranged on the reverse side of the right grip button 41. Thus, it is possible to reduce the risk of reduced responsiveness of the operation on the grip button 41 and the risk that the amount of depression may vary depending on the position where the operation surface is pressed, thus improving the operability of the grip button 41.

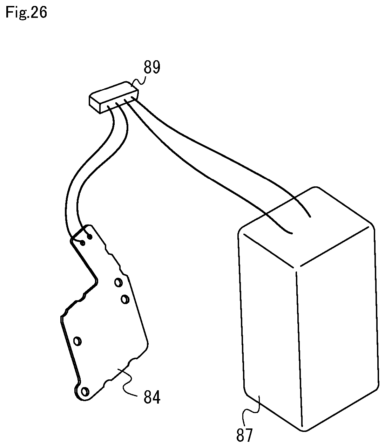

Note that, although not shown in FIG. 20, FIG. 21, FIG. 23 and FIG. 25, the grip substrate 84 and the vibration motor 87 are electrically connected to the main body substrate 66 via a single connector. FIG. 26 is a view showing an example of a connector connected to the grip substrate 84 and the vibration motor 87. As shown in FIG. 26, in the present example, the game controller 1 includes a connector 89. The connector 89 is electrically connected to the wire of the grip substrate 84 and to the wire of the vibration motor 87. Although not shown in the figures, the connector 89 is connected to a connector provided on the main body substrate 66. Thus, the control circuit provided on the main body substrate 66 is electrically connected to the detection section and the vibration motor 87. The control circuit processes signals from the detection section (e.g., generates and transmits the operation data to the game device based on the signals) and also transmits signals for controlling the vibration motor 87 to the vibration motor 87. Note that when manufacturing the game controller 1, the connector 89 may be connected to the connector provided on the main body substrate 66, for example, after the right grip unit is attached to the right grip 5 and the first frame 51 to which the main body substrate 66 is attached is attached to the housing 2. As described above, in the present example, the two electronic components (e.g., the grip substrate 84 and the vibration motor 87) do not need to be individually connected to the main body substrate 66, thus reducing the number of components (e.g., the number of connectors) of the game controller 1 as well as the man-hour required for assembly. Note that, in other embodiments, the connector connected to the wire of the grip substrate 84 and the connector connected to the wire of the vibration motor 87 may be separate, and each of these connectors may be connected to connectors on the main body substrate 66.

FIG. 27 is a view showing an example of a cross section of the game controller 1 near the right grip button 41. As shown in FIG. 27, the grip button rubber 83 is provided in the reverse side direction of the shaft portion 41h of the grip button 41. The shaft portion 41h of the grip button 41 passes through the hole 82a of the component holder portion 82 and contacts the front side of the grip button rubber 83. When no operation is being performed on the grip button 41, the grip button 41 is biased in the front side direction by the grip button rubber 83 so that the operation surface 41e protrudes from, or is flush with, the surface of the right grip 5. The grip substrate 84 is provided on the reverse side of the grip button rubber 83. A detection section 90 of the grip substrate 84 is provided at a position where the grip button rubber 83, which is elastically deformed in response to the right grip button 41 being pressed, contacts the grip substrate 84. In the present example, the grip button rubber 83 is supported directly or indirectly by the grip substrate 84, and the right grip button 41 is pressed in the direction perpendicular to the surface direction of the grip substrate 84. The right grip button may move linearly. Note that depending on how or where it is pressed by the user, the operation surface 41e is allowed to move while being tilted slightly.

Thus, when the operation surface 41e of the right grip button 41 is pressed, the grip button rubber 83 is elastically deformed by being pressed by the shaft portion 41h and contacts the detection section 90. The detection section 90 detects that the right grip button 41 has been operated by detecting the contact or pressing of the grip button rubber 83. Note that since the grip button rubber 83 is biasing the right grip button 41 in the front side direction, when the right grip button 41 is not being pressed, the grip button rubber 83 is in a normal state with no elastic deformation. Note that the specific configuration of the detection section 90 is arbitrary. The detection section 90 may be, for example, a detection circuit of a rubber switch or a detection circuit of a tact switch. Note that the elastic member that biases the right grip button 41 in the front side direction and deforms in response to the pressing of the right grip button 41 is not limited to the grip button rubber 83. For example, if a tact switch is used, the right grip button 41 may be biased by the elastic member of the tact switch.

As shown in FIG. 27, in the present example, the vibration motor 87 is provided on the reverse side of the grip substrate 84. That is, in the present example, the holder of the right grip unit (e.g., the holder portions 82 and 86) is not provided between the grip substrate 84 and the vibration motor 87. Thus, it is possible to reduce the size of the holder of the right grip unit and to make effective use of the space in the right grip 5. For example, a larger vibration motor can be more easily arranged, and the right grip 5 can be made not too large. Note that, in other embodiments, the holder of the right grip unit (e.g., the component holder portion 82 or the vibration motor holder portion 86) may be provided between the grip substrate 84 and the vibration motor 87. For example, the component holder portion 82 may be provided so as to face both the front surface and the reverse surface of the grip substrate 84.

In the present example, the grip substrate 84 is provided on the vibration motor 87 via the cushion member 88 (see FIG. 27). Thus, it is possible to suppress the transmission of the vibration of the vibration motor 87 to the right grip button 41 via the grip substrate 84, and to suppress the generation of chattering noises in the right grip button 41 due to the vibration of the vibration motor 87. Note that, in other embodiments, the grip substrate 84 and the cushion member 88 may not be in contact with each other. In other embodiments, the cushion member 88 may not be provided, and the vibration motor 87 may be provided on the reverse side of the grip substrate 84 without the cushion member 88 therebetween. In this case, the grip substrate 84 and the vibration motor 87 may or may not be in contact with each other.

As described above, the grip substrate 84 is fixed to the holder of the right grip unit (specifically, the component holder portion 82) by screwing. Therefore, the grip substrate 84 is fixed to the holder with its front side surface pressed against the holder. The holder (specifically, the component holder portion 82) is fixed to the right grip 5. Therefore, the distance from the hole 5a of the right grip 5 to the detection section 90 on the front side of the grip substrate 84 is determined by the component holder portion 82 and is not affected by the thickness of the grip substrate 84. Therefore, even if the thickness of the grip substrate 84 varies, it does not affect this distance, thereby reducing the risk of variations in operating feel of the grip button 41.

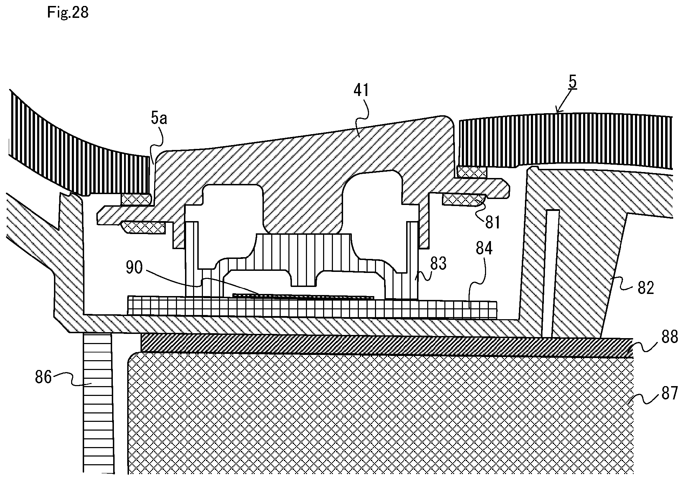

FIG. 28 is a view showing a variation of the right grip unit. FIG. 28 is a cross-sectional view of the game controller near the right grip unit according to the variation. In other embodiments, as shown in FIG. 28, the component holder portion 82 may be provided on the reverse side of the grip substrate 84 and fixed to the reverse surface of the grip substrate 84. Note that in the example shown in FIG. 28, the component holder portion 82 is not provided on the front side of the grip button rubber 83, and the grip button rubber 83 is positioned by the right grip button 41. Note however that, in other examples, even in an embodiment where the component holder portion 82 is fixed to the reverse surface of the grip substrate 84, the component holder portion 82 may extend to the front side of the grip button rubber 83 and the grip button rubber 83 may be positioned by the component holder portion 82, as in the configuration shown in FIG. 27. The method for fixing together the component holder portion 82 and the grip button rubber 83 may be, for example, via an adhesive, or may be by screwing.

As shown in FIG. 27, in the present example, the grip button rubber 83 is provided between the component holder portion 82 and the detection section 90.

Note that, in other embodiments, as shown in FIG. 28, the grip button rubber 83 may not be arranged between the component holder portion 82 and the detection section 90. In other embodiments, for example, the component holder portion 82 may not be provided on the front side of the grip button rubber 83, and the grip substrate 84 may be fixed around the grip button rubber 83. For example, the grip button rubber 83 may be provided on the front side of the component holder portion 82. In this case, instead of the shaft portion 41h of the grip button 41 passing through the hole 82a of the component holder portion 82, a protruding portion provided on the reverse surface of the grip button rubber 83 is provided to pass through the hole 82a. When the right grip button 41 is pressed, the grip button rubber 83 is elastically deformed and the protruding portion contacts the detection section 90.

As shown in FIG. 27, the shaft portion 41h of the grip button 41 includes a first shaft portion that is larger than the hole 82a of the component holder portion 82 and a second shaft portion that is provided more on the side of the tip (e.g., the end in the reverse side direction) than the first shaft portion and is smaller than the hole 82a. Note that the phrase "the first shaft portion is larger than the hole" means that the first shaft portion has a size such that the first shaft portion does not pass through the hole and that, for example, the length of the first shaft portion is longer than the length of the hole in at least one of the directions perpendicular to the direction of movement of the shaft portion 41h. The above phrase "the second shaft portion is smaller than the hole" means that the second shaft portion has a size such that the second shaft portion can pass through the hole and that, for example, the length of the second shaft portion is shorter than the length of the hole in all directions perpendicular to the direction of movement of the shaft portion 41h. According to the above description, when the grip button 41 is pressed, a receiving surface 82j of the component holder portion 82, which faces toward the side of the grip button 41, contacts a part on the inner side of the grip button 41 (specifically, the first shaft portion). In this case, the second shaft portion protrudes to the reverse side of the component holder portion 82 while passing through the hole 82a to press on the grip button rubber or the detection section, and the first shaft portion does not pass through the hole 82a, so that the movement of the grip button 41 in the reverse side direction can be restricted by the component holder portion 82. Therefore, it is possible to reduce the risk of excessive force being applied to the grip substrate 84 by the pressed grip button 41. Note that, in other embodiments, the shaft portion 41h does not need to have a portion that is larger than the hole 82a of the component holder portion 82, and may be entirely sized so as to pass through the hole 82a.

In the present example, the left grip 6 is provided with a left grip unit that is left-right symmetrical with the right grip unit of the right grip 5. Specifically, the left grip unit has the left grip button 42, a grip substrate that includes a detection section that detects input operations on the left grip button 42, and a vibration motor arranged in the left grip 6. The detection section and the vibration motor operate in the same manner as the detection section and the vibration motor arranged in the right grip 5. Therefore, the left grip 6 can also achieve the same effects as described above for the right grip 5.

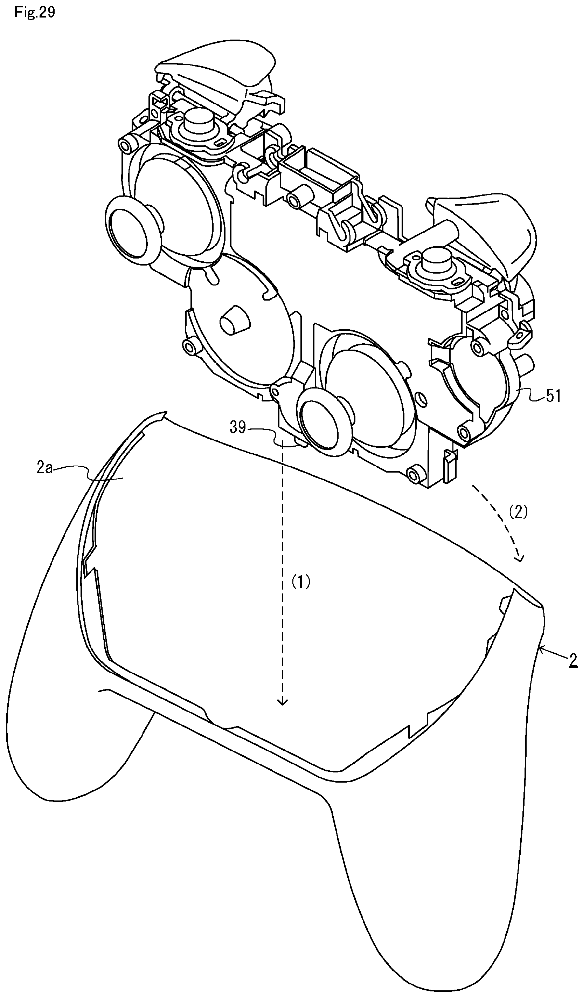

After the right grip unit and the left grip unit are attached to the housing 2, the first frame 51 is attached to the housing 2. FIG. 29 is a view showing an example of how the first frame is attached to the housing. The first frame 51 is attached to the housing 2 with the main body substrate 66, the analog sticks 22 and 23, etc., attached as described above (see FIG. 18). In the present example, since the opening 2a is provided spanning from the front side to the upper side of the housing 2, the first frame 51 can be easily placed inside the housing 2 through the opening 2a when assembling the game controller 1.

For example, the lower portion of the first frame 51 is first inserted into the housing 2 (see arrow (1) in FIG. 29), and with the lower portion inserted into the housing 2, the first frame 51 is rotated so that the upper portion is inserted into the housing 2 (see arrow (2) in FIG. 29), thus housing the entire first frame 51 in the housing 2. Now, in the present example, the audio terminal 39 attached to the main body substrate 66 protrudes downward relative to the lower end of the first frame 51. The audio terminal 39 is provided so as to be exposed to the outside of the housing 2 through a hole provided in the lower side of the housing 2. Therefore, when housing the first frame 51 in the housing 2, it is easier to arrange the first frame 51 at an appropriate position in the housing 2 by inserting the audio terminal 39 into the hole of the housing 2 when inserting the lower portion into the housing 2. Thus, in the present example, the audio terminal 39 can be used for positioning the first frame 51 during the assembly operation.

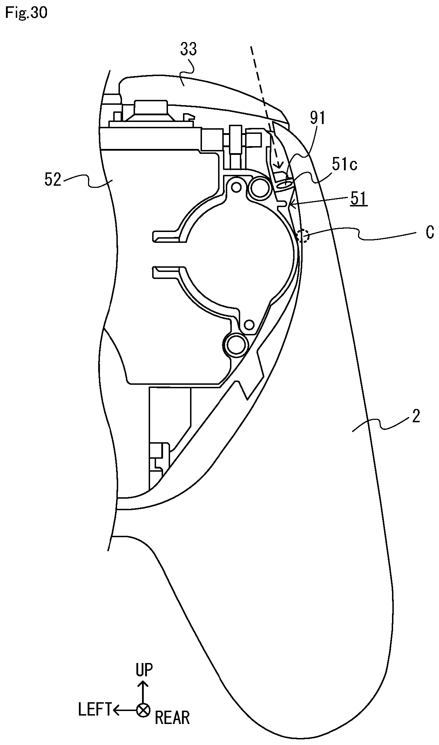

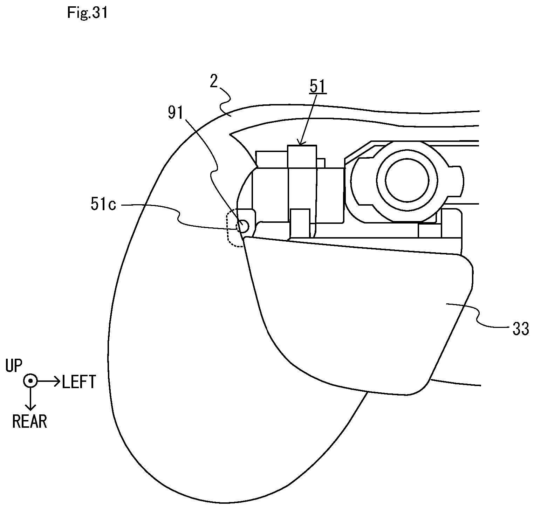

The first frame 51 housed in the housing 2 is fixed to the housing 2, for example, by screwing. Now, in the present example, at least the left and right sides of the first frame 51 and the inner walls of the side surfaces of the housing 2 (e.g., wall surfaces of the side surfaces on the reverse side) are fixed together. FIG. 30 and FIG. 31 are views each showing an example of a state in which the first frame 51 is fixed to the housing 2. FIG. 30 is a view of the game controller 1 in this state as viewed from the front side, and FIG. 31 is a view of the game controller 1 in this state as viewed from above. In the present example, the first frame 51 is provided with holes 51c and 51d at portions that are in contact with the inner walls of the side surfaces of the housing 2 on both the left and right sides (see FIG. 16). The holes 51c and 51d are located left-right symmetrical. As shown in FIG. 30 and FIG. 31, the first frame 51 is fastened to the housing 2 by screwing a screw 91 through the hole 51c into the hole provided in the inner wall of the side surface of the housing 2. Note that in FIG. 30 and FIG. 31, only the right side portion of the first frame 51 is shown, but the first frame 51 is fastened to the housing 2 by screwing a screw through the hole 51d also for the left side portion of the first frame 51 in the same manner as for the right side portion.

Now, in the present example, since the housing 2 is provided with the opening 2a spanning from the front side to the upper side, the housing 2 may deform around the opening 2a when a force is applied to the housing 2. Specifically, when a force is applied to the two grips 5 and 6 to twist them in different directions, the housing 2 may deform so that the width (e.g., the length in the left-right direction) of the opening 2a changes, or the left side edge of the opening 2a and the right side edge of the opening 2a become misaligned in the front-rear direction. **In** contrast, in the present example, the left and right side surfaces of the housing 2 are fixed by the first frame 51, allowing the rigidity of the game controller 1 to improve, thereby reducing the risk of deformation of the housing 2. Note that the first frame 51 may have the same or greater rigidity than the housing 2.

**In** the present example, the position where the first frame 51 and the housing 2 are fixed together is a position that is at the inner wall of the side surface of the housing 2, and that is on the upper side relative to the center of the opening 2a in the up-down direction as the game controller 1 is viewed from the front side (see FIG. 30). **In** the present example, since the opening 2a is provided spanning from the front side to the upper side of the housing 2, the housing 2 is easily deformed in the area on the upper side relative to the center of the opening 2a. Therefore, by fixing the first frame 51 and the housing 2 together at the position described above, it is possible to efficiently suppress the deformation of the housing 2. Note that while the position at which the first frame 51 and the housing 2 are fixed together is a position on the upper side relative to the left end and the right end of the opening 2a (the position C shown in FIG. 30) in the present example, the first frame 51 and the housing 2 may be fixed together at the left end and the right end or at a position on the lower side relative to this position.

In the present example, the holes 51c and 51d provided in the first frame 51 for fastening together the first frame 51 and the housing 2 extend in the up-down direction. In the present example, the opening 2a is provided on the upper side of the housing 2. Therefore, in the present example, the screwing operation to the holes 51c and 51d can be easily performed from the upper portion of the opening 2a.

As shown in FIG. 31, in the present example, the hole 51c is at a position not overlapping with the ZR button 33 as the game controller 1 is viewed from the upper side. Specifically, the position of the hole 51c for the front-rear direction is on the front side relative to the ZR button 33. At the time of attaching the first frame 51 to the housing 2, the R button 31 and the L button 32 are not yet attached to the first frame 51 (see FIG. 30). Therefore, in the present example, the screwing operation to the holes 51c and 51d can be more easily performed.

Note that, in the present example, the hole 51c is at a position overlapping with the right bridge portion 4b of the upper lid 4 as the game controller 1 is viewed from the upper side. That is, the hole 51c is at a position between the R button 31 and the ZR button 33 as the game controller 1 is viewed from the upper side. Therefore, the R button 31 and the L button 32 may be attached to the first frame 51 before the first frame 51 is attached to the housing 2. In this case, the screwing operation to the hole 51c can be performed by inserting the screws 91 between the R button 31 and the ZR button 33.

As shown in FIG. 31, in the present example, as the game controller 1 is viewed from the upper side, the hole 51c (more specifically, a portion of the hole 51c) is at a position overlapping with the housing 2. Now, in the present example, as shown in FIG. 30, the hole 51c faces in a direction slightly inclined inward (e.g., the leftward direction) for the left-right direction with respect to the upward direction of the game controller 1. Therefore, since the screwing operation can be performed along the direction described above, the screwing operation can be made easier even when the hole 51c is at a position overlapping with the housing 2.

While the first frame 51 is fixed to the inner wall of the side surface of the housing 2 at one location on each of the left side surface and the right side surface in the present example, the first frame 51 may be fixed at a plurality of locations for each side surface.

Although not shown in FIG. 29, in the present example, the first frame 51 is fixed also to the inner wall of the back surface of the housing 2 in addition to the inner walls of the side surfaces of the housing 2. Specifically, the first frame 51 and the housing 2 are fastened together by screwing a screw into a hole provided in the inner wall of the back surface of the housing 2 while passing through a hole that runs from the front side to the back side of the first frame 51. This allows the first frame 51 to be more firmly fixed to the housing 2.

**In** other embodiments, the position at which the first frame 51 and the housing 2 are fixed together is arbitrary. For example, in other embodiments, the first frame 51 may be fixed to the back surface of the housing 2 and not fixed to the side surface of the housing 2, or may be fixed to the side surface of the housing 2 and not fixed to the back surface of the housing 2.

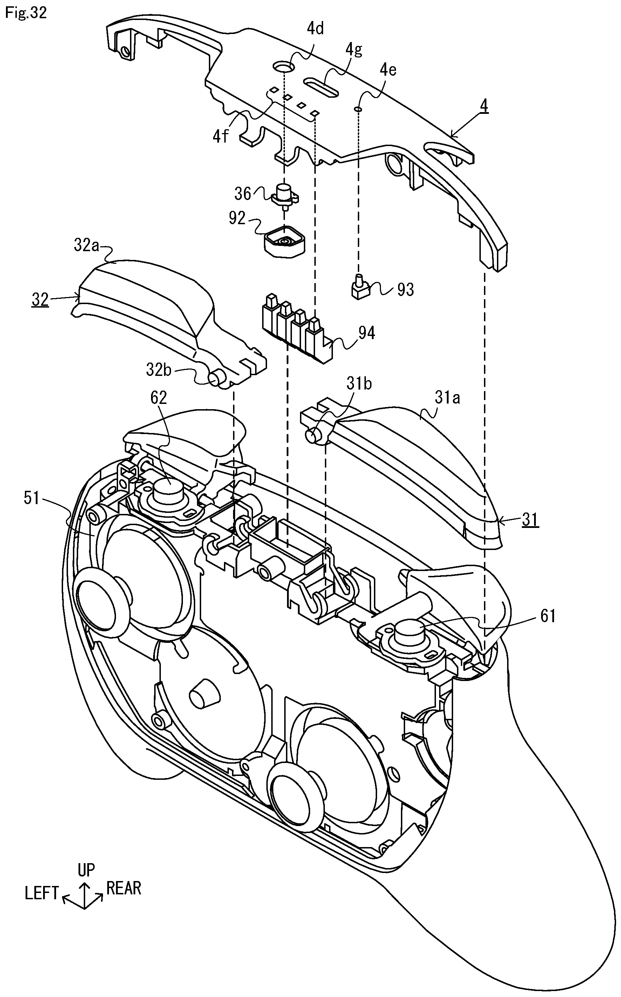

After the first frame 51 is attached to the housing 2, the upper lid 4, etc., are attached to the first frame 51. FIG. 32 is an exploded perspective view showing an example of how the upper lid 4, etc., are attached to the first frame 51. In the present example, the opening 2a also extends to the upper side of the housing 2, making it easier to attach components to be attached to the upper side of the first frame 51 as shown in FIG. 32.

As shown in FIG. 32, the R button 31 and the L button 32 are attached to the first frame 51. The R button 31 is provided upward of the R button rubber 61, and the L button 32 is provided upward of the L button rubber 62. In the present example, the R button 31 is rotatably attached to the first frame 51 by a shaft 31b that is provided leftward of an operation surface 31a and extends in the front-rear direction. The L button 32 is rotatably attached to the first frame 51 by a shaft 32b that is provided rightward of an operation surface 32a and extends in the front-rear direction. Thus, the buttons 31 and 32 are provided so that the operation surface can move in the up-down direction (more precisely, rotate about the shaft).

Note that, in the present example, the shafts 31b to 34b of the buttons 31 to 34 are provided at positions overlapping with the upper lid 4 in the up-down direction (e.g., at positions that are hidden by the upper lid 4 as the game controller 1 is viewed from the upper side). Specifically, the shafts 32b and 32b of the buttons 31 and 32 are provided downward of the central portion 4a of the upper lid 4. The shaft 33b of the ZR button 33 is provided downward of the right bridge portion 4b of the upper lid 4, and the shaft 34b of the ZL button 34 is provided downward of the left bridge portion 4c of the upper lid 4. According to the above description, the entire operation surfaces of the buttons 31 to 34 can be moved downward. As a result, the user can operate the buttons 31 to 34 by pressing any position on the operation surface of the buttons 31 to 34, and it is possible to improve the operability of the buttons 31 to 34.

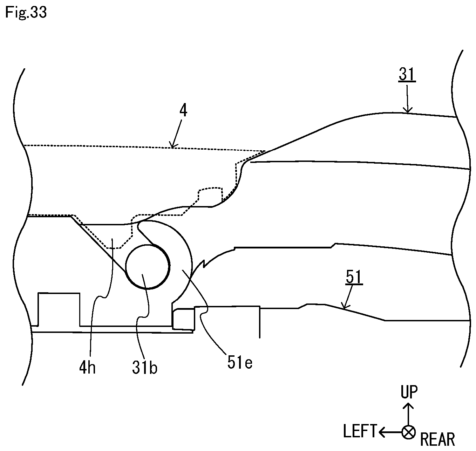

FIG. 33 is a view showing an example of a configuration around the rotation axis of the R button. In the present example, the R button 31 is rotatably attached to the first frame 51 by inserting the shaft 31b of the R button 31 into a bearing portion 51e provided on the first frame 51. The bearing portion 51e has a shape with an opening on the upper side as viewed from the front side. Now, the upper lid 4 includes, on the lower side, a protruding portion 4h protruding downward. The upper lid 4 is attached to the first frame 51 so that the protruding portion 4h is inserted into the opening of the bearing portion 51e. Note that the upper lid 4 is indicated by a dotted line in FIG. 33. According to the above description, it is possible to reduce the possibility of the shaft 31b of the R button 31 coming off the bearing portion 51e. Note that in the present example, the structure by which the L button 32 is attached to the first frame 51 is left-right symmetrical with the structure by which the R button 31 is attached to the first frame 51. With the upper lid 4 attached to the first frame 51, the protruding portion of the upper lid 4 is inserted into the bearing portion corresponding to the shaft 32b of the L button 32. Thus, it is possible to reduce the possibility of the shaft 31b of the L button 32 coming off the bearing portion.

Note that a cushioning material may be provided at an appropriate position between the upper lid 4 and each of the buttons 31 to 34 to absorb the shock when the button hits the upper lid 4 when the pressed operation surface returns to the normal state, or to reduce chattering noises due to the vibration to be described below. For example, with the R button 31 and the L button 32, a cushioning material may be provided between an arm portion connecting the operation surface 31a or 32a and the shaft 31b or 32b and the upper lid 4. The cushioning material may be attached to the upper lid 4 or to each of the buttons 31 to 34.

As shown in FIG. 32, the button 36 and a key rubber 92 corresponding to the button 36 are provided on the upper side of the first frame 51. The key rubber 92 is provided upward of a detection section (e.g., a tact switch) provided on the main body portion 66. The button 36 is provided at a position exposed through a hole 4d of the upper lid 4 and upward of the key rubber 92. The key rubber 92 elastically deforms in response to the button 36 being pressed and contacts the detection section underneath. The detection section detects that an operation is performed on the button 36 by detecting that the detection section itself is pressed by the key rubber 92.

As shown in FIG. 32, a first lens 93, which is a part of the first light-emitting portion 37 described above, and a second lens 94, which is a part of the second light-emitting portion 38 described above are provided on the upper side of the first frame 51. The first lens 93 is provided at a position exposed through a hole 4e of the upper lid 4. Note that the main body portion 66 is provided with an LED of the first light-emitting portion 37 at a position downward of the first lens 93. Thus, when the LED of the first light-emitting portion 37 is lit, the light from the LED is emitted to the outside of the game controller 1 through the first lens 93 and the hole 4e.

The second lens 94 includes four lenses formed as an integral piece in the present example, and the upper surfaces of the four lenses are provided at positions exposed through the four holes 4f of the upper lid 4. The second lens 94 is attached to the upper surface of the first frame 51. Each of the four lenses of the second lens 94 includes a rearward-facing incident surface on the lower portion, and the four LEDs of the second light-emitting portion 38 are provided at positions in the vicinity of the respective incident surfaces. Thus, when an LED of the second light-emitting portion 38 is lit, light from the LED is emitted to the outside of the game controller 1 through the lens and the hole corresponding to this LED among the second lens 94 and the holes 4f.

As shown in FIG. 32, the upper lid 4 described above is provided on the upper side of the first frame 51. The upper lid 4 is fixed to the frame 1 51 by screwing. Note that the upper lid 4 is attached to the first frame 51 with the button 36, the key rubber 92 and the first lens 93 described above temporarily fixed to the upper lid 4. Thus, the button 36, the key rubber 92 and the first lens 93 are fixed between the first frame 51 and the upper lid 4. Although not shown in FIG. 32, the connector 35 described above is attached to the main body substrate 66 so as to be exposed through the hole 4g of the upper lid 4.

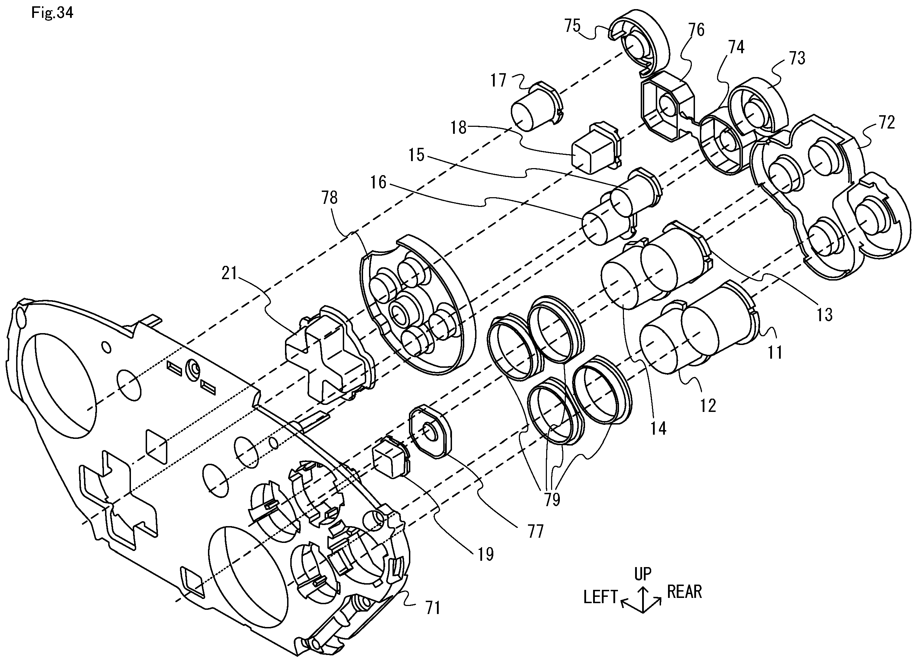

Next, a second frame attached to the first frame 51 will be described. The second frame is a component that holds the buttons 11 to 19, the directional pad 21 and the key rubbers (key rubbers 72 to 78 shown in FIG. 34) provided on the front side of the first frame 51. FIG. 34 is an exploded perspective view showing an example of the second frame and the components held by the second frame.

As shown in FIG. 34, a second frame 71 has a shape such that the length in the up-down direction and the length in the left-right direction are longer than the thickness in the front-rear direction. The second frame 71 is provided with holes at positions corresponding to the positions of the buttons 11 to 19 and the directional pad 21 on the front side of the game controller 1. The buttons 11 to 19 and the directional pad 21 each have a protruding portion including an operation surface and a flange portion. Each protruding portion extends in the front-rear direction and is provided to pass through a hole of the second frame 71. The flange portion extends from the rear end of the protruding portion in the up-down direction and the left-right direction. The flange portion is provided in a ring shape extending around the entire circumference of the protruding portion (note however that a notch for positioning with respect to the second frame 71 may be provided in a part of the ring shape). The buttons 11 to 19 and the directional pad 21 are provided at positions where their operation surfaces protrude on the front side through the holes of the second frame 71. As described above, the buttons 11 to 19 and the directional pad 21 are provided to be movable in the front-rear direction while being positioned by the second frame 71 for the up-down direction and the front-rear direction. In the present example, for the buttons 11 to 14, a silent rubber 79 is provided between the flange portion of each of the buttons 11 to 14 and the second frame 71 to absorb the shock when the buttons 11 to 14 contact the second frame 71.

As shown in FIG. 34, the key rubbers 72 to 78 corresponding to the buttons 11 to 19 and the directional pad 21, which are key tops, are provided rearward of the buttons 11 to 19 and the directional pad 21. The 4-button rubber 72 is a key rubber corresponding to the four buttons 11 to 14. The 4-button rubber 72 includes contact portions provided at positions rearward of the buttons 11 to 14, and flange portions extending from the rear ends of the contact portions in the up-down direction and the left-right direction. The contact portions of the 4-button rubber 72 contact the reverse side of the operation surfaces of the buttons 1 1 to 14, thereby biasing the buttons 1 1 to 14 in the front direction. The key rubbers 73 to 77 corresponding to the buttons 15 to 19 each include a contact portion provided at a position rearward of the corresponding button, a flange portion extending from the rear end of the contact portion in the up-down direction and the left-right direction, and a wall portion extending from the outer circumference of the flange portion in the front direction. With the key rubbers 73 to 77 corresponding to the buttons 15 to 19, the reverse side of the operation surface of the corresponding button and the contact portion come into contact with each other, thereby biasing the button in the front direction. The directional pad rubber 78 corresponding to the directional pad 21 includes a contact portion provided at each of positions rearward of the four, up, down, left and right, operation surfaces of the directional pad 21, and a flange portion extending from the rear end of the protruding portion in the up-down direction and the left-right direction. The contact portions of the directional pad rubber 78 contact the reverse side of the four operation surfaces of the directional pad 21, thereby biasing the directional pad 21 (specifically, the four operation surfaces) in the front direction. Note that, although not shown in the figures, in the present example, the back surface (also referred to as the reverse surface) of the second frame 71 is provided with a protruding portion that is surrounded by the wall portions of the key rubbers 72 to 78. The key rubbers 72 to 78 are positioned for the up-down direction and the left-right direction with respect to the second frame 71 as the wall portion and the protruding portion are fitted together.

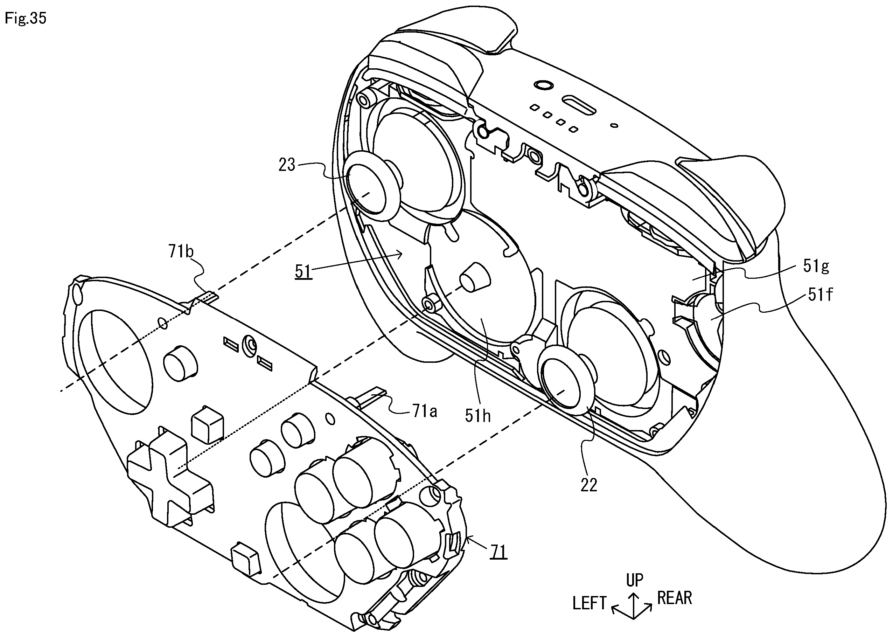

The second frame 71 is attached to the first frame 51 after the upper lid 4 is attached to the first frame 51 (see FIG. 32). FIG. 35 is a view showing an example of how the second frame 71 is attached to the first frame 51. As shown in FIG. 35, the second frame 71 is attached to the first frame 51 with the components shown in FIG. 34 temporarily fixed. Note that the second frame 71 is provided with holes at positions corresponding to the analog sticks 22 and 23 attached to the first frame 51. The second frame 71 is attached to the first frame 51 so that the analog sticks 22 and 23 pass through these holes. The second frame 71 is fixed to the first frame 51, for example, by screwing. The key rubbers 72 to 78 are fixed to the frames 51 and 71 by being sandwiched between the first frame 51 and the second frame 71. In the present example, the opening 2a is provided in the front side of the housing 2, so that operations such as screwing can be easily performed from the front side, making it easier to perform the operation of attaching the second frame 71.

As described above, on the membrane sheet 52 attached to the front side of the first frame 51, the detection sections 54a to 54j are provided at positions corresponding to the buttons 11 to 19 and the directional pad 21 provided on the front side of the game controller 1 (e.g., at positions rearward of the buttons 11 to 19 and the directional pad 21) (see FIG. 16). Thus, in response to the buttons 11 to 19 and directional pad 21 being pressed, the corresponding key rubber elastically deforms to contact or press the detection section 54a to 54j rearward thereof. The detection sections 54a to 54j detect that an operation has been performed on the corresponding button by detecting the contact or pressing of the key rubber. Note that each key rubber is biasing the corresponding key top (e.g., the buttons 11 to 19 and the directional pad 21) in the front direction, and when the corresponding key top is not being pressed, the key rubber is in a normal state with no elastic deformation.

Now, as described above, the front lid 3 is inclined so as to extend rearward while extending outward for the up-down direction and the left-right direction. Therefore, the present example employs a configuration to be described below for the buttons and the directional pad provided on the front lid 3.

First, for the button 11, the operation surface is arranged so as to be located rearward relative to the operation surfaces of the other three buttons 12 to 14. Thus, the operation surfaces of the four buttons 11 to 14 are arranged along the inclination of the front lid 3, making it easier to operate these buttons 11 to 14.

Now, if the surfaces on which the detection sections 54a to 54d corresponding to the four buttons 11 to 14 are provided are made to be flush, as the operation surface of the button 11 is arranged at a position rearward relative to the operation surfaces of the buttons 12 to 14 in conformity to the inclination of the front lid 3, the distance from the operation surface of the button 11 to the detection section 54a is shorter than that for the other three buttons 12 to 14. Then, the feel of operating the button 11 may be different from the other three buttons 12 to 14, and there is a risk that the four buttons 11 to 14 may vary in operating feel.

Therefore, in the present example, the first frame 51 is formed so that a surface 51f corresponding to the button 11 (e.g., the surface on which the detection section 54a corresponding to the button 11 is provided) is located rearward relative to the surface 51g corresponding to the other three buttons 12 to 14 (see FIG. 35). Thus, it is possible to reduce the difference between distances from the buttons 11 to 14 to the detection sections 54a to 54d, and it is possible to suppress the variation among the buttons 11 to 14 in operating feel.

Note that in the present example, in conformity to the surface 51f being located rearward relative to the surface 51g, the four-button rubber 72 is also shaped so that the flange portion corresponding to the button 11 is positioned rearward relative to the flange portions corresponding to the other three buttons 12 to 14 (see FIG. 34). In the present example, the key rubber corresponding to the button 11 (e.g., the contact portion and the flange portion corresponding to the button 11) is integrated with the key rubbers corresponding to the other three buttons 12 to 14 (see FIG. 34). If these two key rubbers were separate, there is a possibility that the key rubber corresponding to the button 11 would shift as if to rotate around the contact portion, but in the present example, this possibility is reduced by these key rubbers an integral piece.

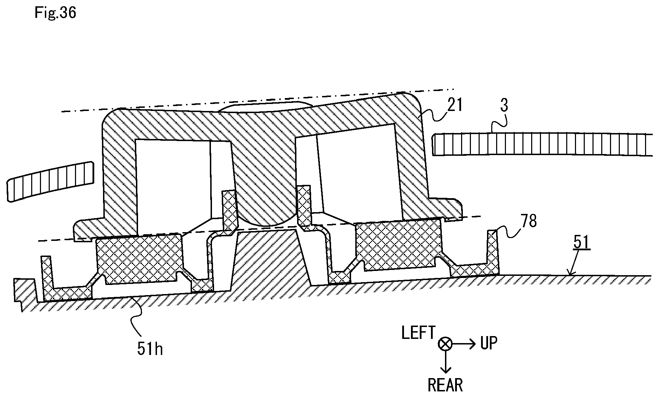

The directional pad 21 is provided on a surface of the front lid 3 that is inclined to extend rearward while extending downward. FIG. 36 is a cross-sectional view of the game controller 1 along a plane that is perpendicular to the left-right direction and passes through the position of the directional pad. Note that FIG. 36 does not show elements not relevant to the description (e.g., the second frame, etc.).

As shown in FIG. 36, in the present example, the directional pad 21 is provided so that the operation surface thereof is inclined in conformity to the inclination of the front lid 3 (see the one-dot-chain line shown in FIG. 36). Specifically, the directional pad 21 is provided inclined downward from the front direction. This improves the operating feel of the directional pad 21. The operation surface of the directional pad 21 may face more downward relative to the direction in which the operation surfaces of the buttons 11 to 18 (which are buttons arranged on the upper side relative to the directional pad 21) face.

Now, if a portion 51h of the first frame 51 in which each detection section 54j corresponding to the directional pad 21 is provided were perpendicular to the front-rear direction of the game controller 1, the difference between the distance from a lower side operation surface of the directional pad 21 to the detection section 54j and the distance from an upper side operation surface of the directional pad 21 to the detection section 54j would be large. Then, since the feel when pressing a lower side operation surface of the directional pad 21 and the feel when pressing an upper side operation surface may be different, thereby deteriorating the operating feel of the directional pad 21.

Therefore, in the present example, the first frame 51 is formed so that the portion (e.g., the surface on which the detection section 54j corresponding to the directional pad 21 is provided) 51h corresponding to the directional pad 21 is inclined downward from the front-rear direction of the game controller 1 (see FIG. 36). That is, the normal direction to the surface 51h corresponding to the directional pad 21 faces more downward relative to the front-rear direction of the game controller 1. The rubber surface of the key rubber 78 corresponding to the directional pad 21 (see the broken line shown in FIG. 36) also faces more downward relative to the front-rear direction of the game controller 1. The surface 51h faces more downward relative to the surface on which the detection sections 54a to 54h of the buttons 11 to 18 are provided. Note that the surface 51h, the rubber surface of the key rubber 78 and the operation surface of the directional pad 21 (see the one-dot-chain line shown in FIG. 36) may be arranged to be parallel to each other.

Thus, in the present example, for the four operation surfaces of the directional pad 21, the distance to the detection section 54j may be made equal, or the difference in the distance may be reduced. This allows the feel when pressing the four operation surfaces of the directional pad 21 can be brought closer to uniformity, thereby improving the operating feel of the directional pad 21.

Since the present example employs a configuration where the detection sections 54a to 54j are arranged on the first frame 51 using the membrane sheet 52, it is easier to arrange the detection sections on surfaces at different positions in the front-rear direction or arrange the detection sections on an inclined surface as described above.

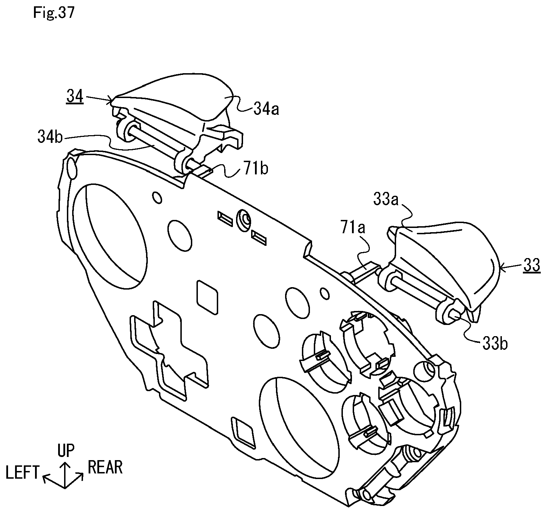

As shown in FIG. 35, the second frame 71 includes protruding portions 71a and 71b extending rearward from the back surface. FIG. 37 a view showing an example of the positional relationship between protruding portions of the second frame and shafts of the ZR button and the ZL button. FIG. 37 shows only the second frame 71, the ZR button 33 and the ZL button 34 for the purpose of clearly illustrating the positional relationship. In the present example, the shaft 33b of the ZR button 33 is formed as a separate part from the key top portion including the operation surface 33a of the ZR button 33. The ZR button 33 is attached to the first frame 51 by inserting the shaft 33b into the bearing portion provided in the right side portion of the first frame 51 with the shaft 33b inserted into the hole in the key top portion. At this time, the shaft 33b is inserted into the bearing portion of the first frame 51 so that the shaft 33b moves from the inner side to the outer side for the left-right direction (e.g., rightward), and the end portion on the outer side contacts the first frame 51 so that the shaft 33b does not move to the outer side more than a certain amount. Now, the protruding portion 71a extending rearward from the right side area of the back surface of the second frame 71 is provided to extend to the left side of the shaft 33b. Specifically, the protruding portion 71a is provided so as to be located leftward of the end portion on the inner side of the shaft 33b. That is, by attaching the second frame 71 to the first frame 51 after attaching the ZR button 33 to the first frame 51, it is possible to suppress the shaft 33b inserted into the hole in the key top portion from moving in the inner side direction (e.g., leftward) to slip out of the bearing portion. Note that the bearing portion provided in the left side portion of the first frame 51, the protruding portion 71b extending rearward from the left side area of the back surface of the second frame 71 and the ZL button 34 are configured to be left-right symmetrical with the bearing portion provided in the right side portion of the first frame 51, the protruding portion 71a and the ZR button 33. Therefore, the protruding portion 71b extending rearward from the left side area of the back surface of the second frame 71 is provided so as to extend to the side of the shaft 34b of the ZL button 34 attached to the first frame 51. Thus, it is possible to suppress the shaft 34b from slipping out of the bearing portion of the first frame 51.

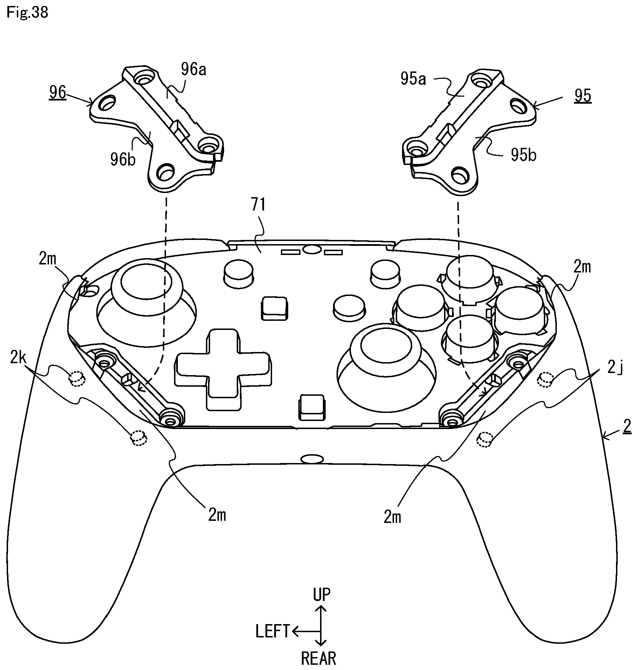

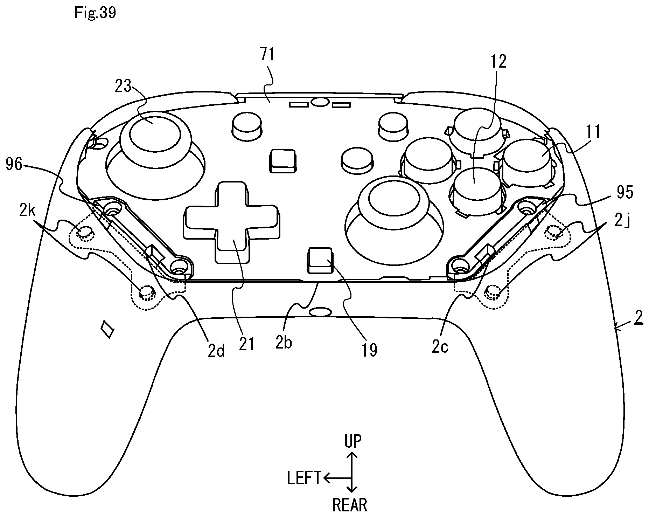

In the present example, the second frame 71 attached to the first frame 51 is fixed also to the housing 2. In the present example, the second frame 71 is fixed to the housing 2 using locking parts, which are an example of the fixing member. FIG. 38 is a view showing an example of the game controller before the locking parts are attached. FIG. 39 is a view showing an example of the game controller after the locking parts are attached.

As shown in FIG. 38, the game controller 1 includes a right locking part 95 and a left locking part 96. The right locking part 95 is provided so as to extend across a front right side edge of the opening 2a, and fixes together the right side portion of the second frame 71 and the right side portion of the housing 2. The left locking part 96 is provided so as to extend across a front left side edge of the opening 2a, and fixes together the left side portion of the second frame 71 and the left side portion of the housing 2.

The right locking part 95 includes a second frame opposing portion 95a and a housing opposing portion 95b. The second frame opposing portion 95a is a portion that opposes the second frame 71 when the right locking part 95 is attached. The housing opposing portion 95b is a portion that opposes the housing 2 when the right locking part 95 is attached. The housing opposing portion 95b is located on the back side relative to the second frame opposing portion 95a. Specifically, the front surface of the second frame opposing portion 95a is located on the front side of the game controller 1 relative to the front surface of the housing opposing portion 95b. The second frame opposing portion 95a is provided with holes through which screws for fastening together the second frame 71 and the right locking part 95 pass. That is, the second frame opposing portion 95a includes a fastened portion that is fastened to the second frame 71 via a fastening member. In the present example, the holes are provided near the opposite ends of the second frame opposing portion 95a in the longitudinal direction. The housing opposing portion 95b is provided with holes for engaging with projecting portions 2j of the housing 2. In the present example, the holes are provided near the opposite ends of the housing opposing portion 95b in the longitudinal direction. The two projecting portions 2j are provided on the inner wall of the housing 2 at positions corresponding to the holes in the housing opposing portion 95b. The projecting portions 2j are provided in the vicinity of the edge of the opening 2a of the housing 2. Note that the left locking part 96 has a shape that is left-right symmetric with the right locking part 95, and includes a second frame opposing portion 96a and a housing opposing portion 96b similar to the right locking part 95. The inner wall of the housing 2 is provided with two projecting portions 2k at positions left-right symmetric with the two projecting portions 2j.

When attaching the right locking part 95 to the housing 2 and the second frame 71, the right locking part 95 is first inserted into the gap between the housing 2 and the second frame 71 at the edge of the opening 2a (see the broken line arrow shown in FIG. 38), and the holes of the inserted housing-opposing portion 95b engage with the projecting portions 2j of the housing 2 (see FIG. 39). At this time, as shown in FIG. 39, the screw holes provided in the second frame 71 and the holes of the second frame opposing portion 95a are at the same positions as seen from the front side. In this state, the right locking part 95 is fixed to the housing 2 and the second frame 71 by screwing screws into the screw holes of the second frame 71 while passing through the holes of the second frame opposing portion 95a. Thus, the housing 2 and the second frame 71 are fixed together by the right locking part 95. Since the opening 2a is provided on the front side of the controller, it is easier to perform the screwing operation in the holes of the second frame opposing portion 95a and the screw holes of the second frame 71.

Note that the left locking part 96 is also fixed to the housing 2 and the second frame 71 in the same manner as the right locking part 95. That is, the left locking part 96 is fixed to the housing 2 and the second frame 71 by screwing a screw into the screw hole of the second frame 71 that passes through the hole of the second frame opposing portion 96a, with the hole of the housing opposing portion 96b in engagement with the projecting portion 2k of the housing 2.

As described above, in the present example, the locking parts 95 and 96 are provided so as to extend across the edge of the opening 2a in the front side of the housing 2 to fix together the housing 2 and the second frame 71. This allows the housing 2 and the second frame 71 to be fixed together at the edge portion of the opening 2a. Now, as described above, in the present example, the housing 2 is provided with the opening 2a spanning from the front side of the housing 2 to the upper side of the housing 2, so that the housing 2 may deform near the opening 2a when a force is applied to the housing 2. In this regard, it is possible to suppress deformation of the housing 2 by fixing together the housing 2 and the second frame 71 at the edge portion of the opening 2a by the locking parts 95 and 96 as described above. Note that, in other embodiments, the housing 2 and the second frame 71 may be directly fixed together without using the locking parts. For example, the housing 2 and the second frame 71 may be directly fastened together by screwing.

The locking parts 95 and 96 each have a portion with holes into which the projecting portions 2j and 2k projecting from the inner wall of the housing 2 are inserted (e.g., the housing opposing portions 95b and 96b) and a portion that is fastened to the second frame 71 via a fastening member (e.g., the second frame opposing portions 95a and 96a). Thus, since there is no need to provide projecting portions or holes on the surface of the housing 2 because the housing 2 and the second frame 71 are fixed together by the locking parts 95 and 96, it is possible to suppress the feel of holding the housing 2 from being deteriorated by projecting portions and holes. By fixing together the locking parts 95 and 96 and the housing 2 by engagement, the assembly work of the game controller 1 can be made easier. Moreover, by fixing together the locking parts 95 and 96 and the second frame 71 by fastening, these members can be fixed firmly. Note that the method of fixing together the locking parts 95 and 96 and the housing 2 and the method of fixing together the locking parts 95 and 96 and the second frame 71 are arbitrary. For example, in other embodiments, the locking parts 95 and 96 and the housing 2 may be fixed together by fastening, and the locking parts 95 and 96 and the second frame 71 may be fixed together by engagement.

Note that, in other embodiments, the number of holes provided in the second frame opposing portions 95a and 96a and the housing opposing portions 95b and 96b of each of the locking parts 95 and 96 is not limited to two, but may be one or may be three or more.

In the present example, the locking parts 95 and 96 are provided so as to extend across the front right edge portion 2c and the front left edge portion 2d of the edge of the opening 2a of the housing 2, extending upward from the ends of the lower edge portion 2b extending in the left-right direction on the front side (see FIG. 39). From a different point of view, the locking parts 95 and 96 are provided upward of the grips 5 and 6, respectively. Here, the portions 2c and 2d (or the positions upward of the grips 5 and 6) are portions of the housing 2 that are likely to deform when a force is applied to the grips 5 and 6. In the present example, as the locking parts 95 and 96 are provided in the portions 2c and 2d, respectively, it is possible to effectively suppress the occurrence of the deformation.

Note that the positions at which the locking parts are provided are arbitrary. For example, in the present example, the locking parts 95 and 96 are provided at portions of the front right edge portion 2c and the front left edge portion 2d, respectively, that are on the lower side relative to the center in the up-down direction, but in other embodiments, they may be provided at portions of the front right edge portion 2c and the front left edge portion 2d that are on the upper side relative to the center in the up-down direction. For example, the locking parts may be provided on the lower edge portion 2b of the edge of the opening 2a of the housing 2.

As shown in FIG. 39, in the present example, the right locking part 95 is provided at a position overlapping with the button 11 and the button 12 for the left-right direction. The right locking part 95 is provided at a position overlapping with the button 12 for the up-down direction. The right locking part 95 is provided at a position overlapping with the button 19 for the up-down direction. The left locking part 96 is provided on the lower side relative to the lower end of the left analog stick 23. The left locking part 96 is provided on the lower side relative to the lower end of the hole through which the left analog stick 23 passes. The left locking part 96 is provided on the left side relative to the lower side key portion of the directional pad 21. The left locking part 96 is provided at a position overlapping with the directional pad 21 (more specifically, the left side key portion of the directional pad 21) for the left-right direction. As the locking parts 95 and 96 are arranged as described above, the locking parts 95 and 96 can be arranged in the limited space of the second frame 71 to fix together the second frame 71 and the housing 2.

In the present example, the locking parts 95 and 96 each have a shape having a second frame opposing portion and a housing opposing portion (e.g., a shape with a portion opposing the second frame 71 is located on the front side and a portion opposing the housing 2 is located on the rear side). The front surface of the second frame 71 has a shape such that the area where the second frame opposing portion is provided is recessed (see FIG. 38). This allows the distance from the front surface of the second frame 71 (excluding, however, the area where the second frame opposing portion is provided) to the front surface of the housing 2 for the front-rear direction to be shortened, thereby reducing the thickness of the game controller 1. As the area described above is formed at an edge portion of the second frame 71, a gap is formed between the second frame 71 and the housing 2. By inserting the housing opposing portion of the locking part into the housing 2 through this gap (see arrow shown in FIG. 38), the attachment of the locking part can be made easy. Note that, in other embodiments, the shape of the locking parts is arbitrary, and it may be a flat shape, for example.

In the present example, the method of fixing together the inner walls of the side surfaces of the housing 2 and the first frame 51 (see FIG. 30 and FIG. 31) is used as well as the method of fixing together the housing 2 and the second frame 71 by the locking parts. Thus, it is possible to effectively suppress deformation of the housing 2. That is, by using these two types of fixing methods in the present example, it is possible to effectively suppress deformation of the housing 2 without increasing the portion of the edge of the opening 2a of the housing 2 where the locking parts are provided. Therefore, it is possible to reduce the limitation on the arrangement of input sections, screw holes, etc., on the second frame 71 due to the arrangement of the locking parts.

In the present example, the positions where the inner walls of the side surfaces of the housing 2 and the first frame 51 are fixed together (e.g., the positions of the screws 91 shown in FIG. 30 and FIG. 31) are on the upper side relative to the locking parts 95 for the up-down direction. Thus, it is possible to more effectively suppress deformation of the housing 2. Note that, in other embodiments, only one of these two methods may be used. Deformation of the housing 2 can be suppressed also by using only one of these two methods.

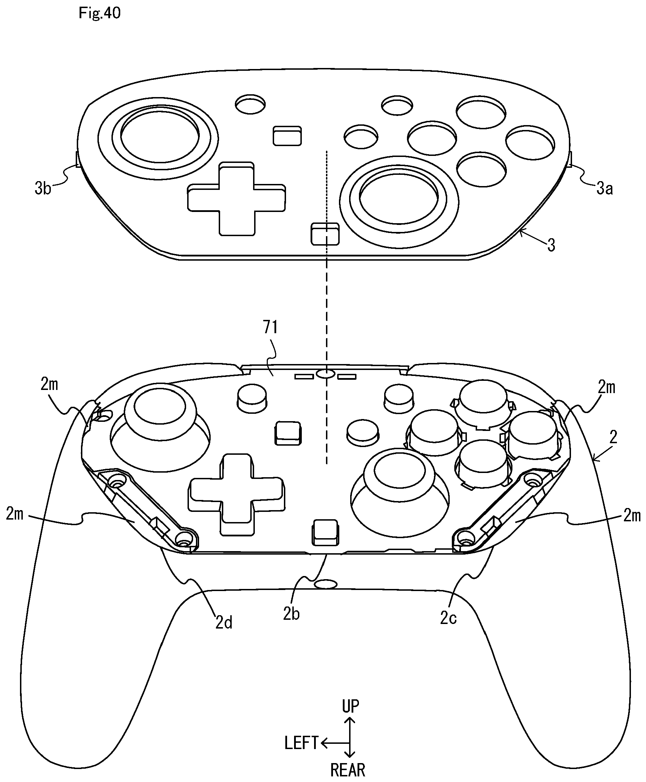

After the second frame 71 is attached in the housing 2, the front lid 3 is attached to the housing 2. FIG. 40 is a view showing an example of how the front lid 3 is attached to the housing 2. In the present example, the front lid 3 is fixed to the second frame 71 in the housing 2. For example, the front surface of the second frame 71 and the back surface of the front lid 3 are fixed together by adhesion. Note that the front lid 3 is provided with holes at positions corresponding to input sections (e.g., the buttons 11 to 19, the directional pad 21 and the analog sticks 22 and 23) arranged on the front surface of the game controller 1. The front lid 3 is attached to the housing 2 so that the input sections pass through the corresponding holes. Thus, the input sections are provided while protruding from the front surface of the front lid 3.

As described above, in the present example, the front lid 3 is provided so as to cover the front surface of the second frame 71, which is provided on the front side of the first frame 51. By covering the front surface of the second frame with the lid, it is possible to protect the second frame. Note that, in other embodiments, the game controller 1 does not need to include the second frame 71 and the front lid 3 separately, but may only include the second frame 71. In this case, the second frame 71 may have the function of covering at least a part of the opening 2a (e.g., the second frame 71 may have the function of the front lid 3).

Note that with the front lid 3 not attached, fixing members (specifically, screws) for fixing the second frame 71 to the first frame 51 are exposed on the front side of the second frame 71. In this present example, the front lid 3 is arranged to cover the fixing member. Therefore, in the present example, since the hands of the user grasping the game controller 1 do not contact the fixing members, it is possible to improve the feel of using and the comfort of holding the game controller 1.

The front lid 3 is provided so as to cover the locking parts 95 and 96 described above. Therefore, since the hands of the user grasping the game controller 1 do not contact the locking parts 95 and 96, it is possible to improve the feel of using and the comfort of holding the game controller 1. It is possible to suppress dust, etc., from entering the housing 2 through the gap between the locking parts 95 and 96 and the housing 2 or the second frame 71.

Note that the front lid 3 does not need to cover the entire second frame 71. For example, in other embodiments, the front lid 3 may be shaped so as not to cover the positions of the fixing members for fixing the second frame 71 to the first frame 51, or may be shaped so as not to cover the positions of the locking parts 95 and 96.

In the present example, the front lid 3 is fixed to the housing 2 in addition to being fixed to the second frame 71. As shown in FIG. 2 and FIG. 40, in the present example, the front lid 3 includes first engagement portions 3a and 3b on the outer edge of the back surface. In the present example, the front lid 3 includes the first engagement portion 3a in the upper right portion and the first engagement portion 3b in the upper left portion. The first engagement portions 3a and 3b are, for example, claw-shaped members protruding in the back direction. The housing 2 also includes a second engagement portion that engages with the first engagement portion 3a or 3b at the position of engaging with the first engagement portion 3a or 3b with the front lid 3 fixed to the second frame 71. The second engagement portion is, for example, a portion of the housing 2 in which a recess is formed where the claw-shaped first engagement portions 3a and 3b of the front lid 3 engage. Thus, the front lid 3 is fixed to the housing 2 as the first engagement portions 3a and 3b engage with the second engagement portion of the housing 2. According to the above description, since the front lid 3 can be attached without using fastening members such as screws, there is no need to provide protrusions/recesses of screws and screw holes for fixing the front lid 3 to the housing 2 on the surface of the game controller 1. Therefore, since these protrusions/recesses do not contact the hands of the user grasping the game controller 1, it is possible to improve the feel of using and the comfort of holding the game controller 1. Thus, the front lid 3 is assembled directly or indirectly to the housing 2. That is, the front lid 3 is not attachable/detachable to/from the housing 2. Note that attachable/detachable means that the structure is intended to be attached/detached to/from the housing multiple times by the user. For example, attachable/detachable means that it can be attached/detached without using a tool or applying a very large force. Note that the front lid 3 may be attachable/detachable.

In the present example, the first engagement portions 3a and 3b are provided at different positions from the locking parts 95 and 96 described above. Specifically, the locking parts 95 and 96 are provided on the lower side relative to the center for the up-down direction of the front right edge portion 2c or the front left edge portion 2d of the housing 2, and the first engagement portions 3a and 3b are provided on the upper side relative to the center for the up-down direction of the front right edge portion 2c or the front left edge portion 2d. Thus, since the edge of the opening 2a can be fixed at a plurality of locations, it is possible to reduce the risk of deformation of the housing 2.

As shown in FIG. 40, in the present example, near the edge of the opening 2a, the housing 2 includes a protruding portion 2m extending in the inward direction of the opening 2a as the housing 2 is viewed from the front side. The protruding portion 2m protrudes so as to extend in the inward direction of the opening 2a from a position that is on the back side relative to the front surface of the housing 2 at the edge of the opening 2a. The front lid 3 may be fixed to the housing 2 also by being fixed to the protruding portion 2m. For example, the back surface of the front lid 3 and the front surface of the protruding portion 2m may be bonded together. Thus, it is possible to firmly fix together the front lid 3 and the housing 2, and reduce the risk of a gap being formed between the housing 2 and the front lid 3. Note that the distance for the front-rear direction from the front surface of the housing 2 to the front surface of the protruding portion 2m at the edge of the opening 2a may be set equal to the thickness of the front lid 3. Thus, since the front surface of the housing 2 and the front surface of the front lid 3 can be made flush with each other, it is possible to improve the comfort of holding the game controller 1.

Note that the position and the number of protruding portions 2m are arbitrary, and the protruding portion 2m may be provided in at least a part of the lower edge portion 2b, the front right edge portion 2c and the front left edge portion 2d of the opening 2a, or in all of these portions 2b to 2d. The housing 2 may include no protruding portion 2m.

Note that, in other embodiments, the front lid 3 may be fixed to only one of the second frame 71 and the housing 2. The method of fixing together the front lid 3 and the second frame 71 and the method of fixing together the front lid 3 and the housing 2 are arbitrary. For example, in other embodiments, the front lid 3 and the second frame 71 may be fastened together by screws. Also, for example, the front lid 3 and the housing 2 may be fastened together by screws.

In one aspect, the embodiment described above discloses a game controller including the following elements.
· at least one operation section positioned to be accessible from a front side of the game controller and operable by a user.
· a body.
· a first grip button and a second grip button.
· the body seamlessly includes a rear portion, a first grip portion that extends from a left side of the body and is formed so as to cover periphery of an internal space, and a second grip portion that extends from a right side of the body and is formed so as to cover the periphery of the internal space.
· the first grip button is on the first grip portion, and the second grip button is on the second grip portion.
· a first groove is formed in a transition portion from the rear portion of the body to a rear portion of the first grip portion, wherein the first groove has a bottom portion that extends along a curved path extending from a lower side of the rear portion of the body close to a central axis of the game controller toward a left side of the game controller.
· a second groove is formed in a transition portion from the rear portion of the body to a rear portion of the second grip portion, wherein the second groove has a bottom portion that extends along a curved path extending from a lower side of the rear portion of the body close to a central axis of the game controller toward a right side of the game controller.
· the first grip button is located closer to the bottom portion of the first groove, between an end portion of the first grip portion and the bottom portion of the first groove.
· the second grip button is located closer to the bottom portion of the second groove, between an end portion of the second grip portion and the bottom portion of the second groove.
- one edge of the first grip button on a side of the bottom portion of the first groove is curved as is the bottom portion of the first groove.
· one edge of the second grip button on a side of the bottom portion of the second groove is curved as is the bottom portion of the second groove.

In one aspect, the embodiment described above discloses a game controller including the following elements.
· a faceplate.
· an upper lid.
· a body.
· the body includes a rear portion, a first grip portion formed so as to cover periphery of an internal space, and a second grip portion formed so as to cover the periphery of the internal space.
· the first grip portion and the second grip portion extend from opposite sides of the rear portion, and the rear portion, the first grip portion and the second grip portion are formed seamlessly.
· a first valley is formed in a transition portion from the rear portion of the body to a rear portion of the first grip portion.
· the first valley has a first valley bottom that at least partly extends upward in an up-down direction and at least partly extends leftward in a left-right direction.
· a second valley is formed in a transition portion from the rear portion of the body to a rear portion of the second grip portion.
· the second valley has a second valley bottom that at least partly extends upward in the up-down direction and at least partly extends rightward in the left-right direction.
· the game controller includes an operation section that is located on a front side of the game controller, is operable by a user, and includes at least one of a button and a directional input section.

In one aspect, the embodiment described above discloses the following configurations.
(A-1)
   An example of a game controller described herein is a game controller configured to be grasped by a user to provide an input. The game controller comprises a main body portion, an input section, a left grip, a right grip, a first button, and a second button. The input section is at a front side of the main body portion. The left grip protrudes at least partly downward and at least partly in a back direction from a left side of the main body portion, the left grip and the main body portion at least partly forming a first valley on a back side of the game controller, and the first valley having a first valley bottom extends upward and toward the side of the edge of the game controller. The right grip protrudes at least partly downward and at least partly in the back direction from a right side of the main body portion, the right grip and the main body portion at least partly forming a second valley on a back side of the game controller, and the second valley having a second valley bottom extends upward and toward the side of the edge of the game controller. The first button is positioned at the left grip extending along the first valley bottom while being spaced apart from the first valley bottom. The second button is positioned at the right grip extending along the second valley bottom while being spaced apart from the second valley bottom. An operation surface of the first button and an operation surface of the second button each have a width that is wider at a side of an edge of the game controller than at a side of a center of the game controller in a left-right direction.
(A-2)
   In configuration (A-1) described above, a width of the operation surfaces of the first button and the second button may increase in a direction from the center of the game controller toward the edge of the game controller in the left-right direction, respectively.
(A-3)
   In configuration (A-1) or (A-2) described above, outer edges of the operation surfaces of the first button and the second button may each include a first side that extends upward and toward the side of the edge of the game controller in the left-right direction and extends along the first valley bottom and the second valley bottom, respectively, and a second side that opposes the first side and is more spaced apart than the first side from the first valley bottom and the second valley bottom, respectively. A distance between the first side and the second side may be larger at the side of the edge of the game controller than at the side of the center of the game controller in the left-right direction.
(A-4)
   In configuration (A-1) or (A-2) described above, outer edges of the operation surfaces of the first button and the second button may each include a first side that extends upward and toward the side of the edge of the game controller in the left-right direction and extends along the first valley bottom and the second valley bottom, respectively, and a second side that opposes the first side and is more spaced apart than the first side from the first valley bottom and the second valley bottom, respectively. A distance between the first side and the second side may gradually increase toward the side of the edge of the game controller in the left-right direction.
(A-5)
   In configuration (A-1) or (A-2) described above, outer edges of the operation surfaces of the first button and the second button may include a first side that extends upward and toward the side of the edge of the game controller in the left-right direction and extends along the first valley bottom and the second valley bottom, respectively, and a second side that opposes the first side and is more spaced apart than the first side from the first valley bottom and the second valley bottom, respectively. A difference between a first distance and a second distance is smaller than a difference between a third distance and a fourth distance, wherein: the first distance is a distance between each first side at the side of the center of the game controller in the left-right direction and the first valley bottom or the second valley bottom corresponding to the first side; the second distance is a distance between each first side at the side of the edge of the game controller in the left-right direction and the first valley bottom or the second valley bottom corresponding to the first side; the third distance is a distance between each second side at the side of the center of the game controller in the left-right direction and the first valley bottom or the second valley bottom corresponding to the second side; and the fourth distance is a distance between each second side at the side of the edge of the game controller in the left-right direction and the first valley bottom or the second valley bottom corresponding to the second side.
(A-6)
   In any of configurations (A-3) to (A-5) described above, the outer edges of the operation surfaces of the first button and the second button may each include a third side and a fourth side, the third side connecting together center-side end portions of the first side and the second side in the left-right direction of the game controller, and the fourth side connecting together end portions of the first side and the second side opposite to the center-side end portions.
(A-7)
   In configuration (A-6) described above, the fourth side may be longer than the third side.
(A-8)
   In configuration (A-6) or (A-7) described above, the first side and the second side may be longer than the fourth side.
(A-9)
   In any of configurations (A-3) to (A-8) described above, the first side may be longer than the second side.
(A-10)
   In any of configurations (A-6) to (A-8) described above, the fourth side is a straight line or a curved line that is gentler than the third side.
(A-11)
   In any of configurations (A-1) to (A-10) described above, a curvature of a first corner of the operation surfaces of the first button and the second button may be smaller than a curvature of a second corner of the operation surfaces of the first button and the second button; the first corner may be a corner that is at the side of the center of the game controller in the left-right direction and is at an upper side; and the second corner may be a corner that is at the side of the center of the game controller in the left-right direction and is at a lower side.
(A-12)
   In any of configurations (A-1) to (A-11) described above, the operation surfaces of the first button and the second button may be shaped to match a shape of a finger from a first joint up as the finger is oriented toward the side of the center of the game controller in the left-right direction and toward a lower side of the game controller in an up-down direction.
(A-13)
   In any of configurations (A-1) to (A-12) described above, the left grip and the right grip may be part of a single-component housing having an opening that spans between the front side and an upper side of the game controller. The game controller may comprise a first lid at least partly covering the opening of the front side of the game controller.
(A-14)
   In any of configurations (A-1) to (A-13) described above, the game controller may comprise: a first holder, a first substrate, and a first vibrator in the left grip. The first substrate is fixed to the first holder and having a first detection section configured to detect an input operation on the first button. The first vibrator is fixed to the first holder. The game controller may comprise: a second holder, a second substrate, and a second vibrator in the right grip. The second substrate is fixed to the second holder and having a second detection section configured to detect an input operation on the second button. The second vibrator is fixed to the second holder.
(A-15)
   Another example of a game controller described herein is a game controller configured to be grasped by a user to provide an input. The game controller comprises a main body portion, an input section, a left grip, a right grip, a first button, and a second button. The input section is positioned at a front side of the main body portion. The left grip protrudes at least partly downward and at least partly in a back direction from a left side of the main body portion, the left grip and the main body portion at least partly forming a first valley on a back side of the game controller, and the first valley having a first valley bottom extends upward and toward the side of the edge of the game controller. The right grip protrudes at least partly downward and at least partly in the back direction from a right side of the main body portion, the right grip and the main body portion at least partly forming a second valley on a back side of the game controller, and the second valley having a second valley bottom extends upward and toward the side of the edge of the game controller. The first button is positioned on the left grip in vicinity of the first valley bottom and opposite the main body portion. The second button is positioned on the right grip in vicinity of the second valley bottom and opposite the main body portion. Outer edges of operation surfaces of the first button and the second button each includes: a first side that extends upward and toward the side of the edge of the game controller in the left-right direction and extends along the first valley bottom and the second valley bottom, respectively; a second side that opposes the first side and is more spaced apart than the first side from the first valley bottom and the second valley bottom, respectively; the third side connecting together center-side end portions of the first side and the second side in the left-right direction of the game controller; and a fourth side connecting together end portions of the first side and the second side opposite to the center-side end portions. The first side and the second side may be longer than the third side and the fourth side, respectively.
(A-16)
   In configuration (A-15) described above, the fourth side may be longer than the third side.
(A-17)
   In configuration (A-15) or (A-16) described above, the first side may be longer than the second side.
(A-18)
   In any of configurations (A-15) to (A-17) described above, the second side may extend gradually away from the first valley bottom or the second valley bottom corresponding to the second side and gradually away from the first side while extending toward the side of the edge of the game controller from the side of the center of the game controller in the left-right direction.
(A-19)
   In any of configurations (A-1) to (A-18) described above, a rearwardmost side of the operation surface of the first button may be located at a front side relative to a rear end of the left grip, and a rearwardmost side of the operation surface of the second button may be located at a front side relative to a rear end of the right grip.
(A-20)
   In any of configurations (A-1) to (A-19) described above, the first button and the second button may be located to be visible when a back side of the game controller is viewed and hidden by the game controller when a front side, the left side, or the right side of the game controller is viewed .
(A-21)
   In any of configurations (A-1) to (A-20) described above, the operation surface of the first button may be curved along a curved surfaces of the left grip around the first button. The operation surface of the second button may be curved along a curved surfaces of the right grip around the second button.
(A-22)
   In any of configurations (A-1) to (A-21) described above, the game controller may comprise a first substrate, a second substrate, and a third substrate. The first substrate is at least partly inside the main body portion. The second substrate is at least partly inside the left grip and includes a first detection section configured to output a signal in response to the first button being pressed. The third substrate is at least partly inside the right grip and includes a second detection section configured to output a signal in response to the second button being pressed. The second substrate and the third substrate may be electrically connected to the first substrate.
(A-23)
   In configuration (A-22) described above, the game controller may comprise a first holder, and a second holder. The first holder is at least partly inside the left grip, and the second substrate and a first vibrator are fixed thereto. The second holder is at least partly inside the right grip, and the third substrate and a second vibrator are fixed thereto.
(A-24)
   In any of configurations (A-1) to (A-23) described above, a back surface of the game controller above the first valley bottom and the second valley bottom may be curved toward a front side while extending toward the side of the edge of the game controller from the side of the center of the game controller in the left-right direction.
(A-25)
   Another example of a game controller described herein is a game controller including: at least one operation section , a body and a first grip button and a second grip button. The at least one operation section is positioned to be accessible from a front side of the game controller and configured to be operable by a user. The body includes a rear portion, a first grip portion, and a second grip portion, wherein the rear portion, the first grip portion, and the second grip portion are seamlessly constructed together, and wherein the first grip portion extends from a left side of the body and is formed so as to cover periphery of a first internal space, and the second grip portion extends from a right side of the body and is formed so as to cover the periphery of a second internal space. The first grip button is at the first grip portion, and the second grip button is at the second grip portion. A first groove is formed in a transition portion from the rear portion of the body to the first grip portion, wherein the first groove has a first bottom portion that extends along a curved path extending from a lower side of the rear portion of the body close to a central axis of the game controller toward a left side of the game controller. A second groove is formed in a transition portion from the rear portion of the body to the second grip portion, wherein the second groove has a second bottom portion that extends along a curved path extending from a lower side of the rear portion of the body close to a central axis of the game controller toward a right side of the game controller. The first grip button is located closer to the first bottom portion of the first groove, between an end portion of the first grip portion and the first bottom portion of the first groove. The second grip button is located closer to the second bottom portion of the second groove, between an end portion of the second grip portion and the second bottom portion of the second groove. One edge of the first grip button on a side of the first bottom portion of the first groove is curved as is the first bottom portion of the first groove. One edge of the second grip button on a side of the second bottom portion of the second groove is curved as is the second bottom portion of the second groove.

In one aspect, the embodiment described above discloses the following configurations.
(B-1)
   An example of a game controller described herein includes a main body portion, a first grip and a second grip, a first button, a second button, a first holder, a first substrate, a first vibrator, a second holder, a second substrate and a second vibrator. An input section is arranged at a front side of the main body portion. The first grip and the second grip protrude downward from a left side and a right side of the main body portion respectively and are configured to be grasped by a user. The first button is at the first grip. The second button is at the second grip. The first holder is in the first grip. The first substrate is in the first grip, fixed to the first holder, and has a first detection section configured to detect an input operation on the first button. The first vibrator is in the first grip and fixed to the first holder. The second holder is in the second grip. The second substrate is in the second grip, fixed to the second holder, and has a second detection section configured to that detect an input operation on the second button. The second vibrator is in the second grip and fixed to the second holder.
(B-2)
   In configuration (B-1) described above, the game controller may include a third substrate, a first connector and a second connector. The third substrate is arranged in the main body portion configured to process a signal from the first detection section. The first connector is with a wire connected to the first substrate and a wire connected to the first vibrator. The second connector is on the third substrate and electrically connected to the first connector.
(B-3)
   In configuration (B-1) or (B-2) described above, a cushion member may locate between the first substrate and the first vibrator.
(B-4)
   In any one of configurations (B-1) to (B-3), the game controller may include a key rubber. The key rubber between the first holder and the first detection section is configured to biase the first button toward an outer side of the game controller and is configured to deform and contact the first detection section in response to the first button being pressed.
(B-5)
   In configuration (B-4), the first holder includes a receiving surface at a side of the first button, wherein the receiving surface is configured to contact an inner side of the first button in response to the first button being pressed.
(B-6)
   In configuration (B-5) described above, the first button may include an operation surface and a protruding portion protruding from a reverse side of the operation surface. A part with a hole of the first holder may be located between the key rubber and the operation surface. The protruding portion may include a first portion sized not to pass through the hole, and a second portion at a tip side relative to the first portion sized and configured to pass through the hole. The key rubber may be configured to deform by being pressed by the second portion in response to the operation surface being pressed. The first portion may be configured to contact the receiving surface after the key rubber is deformed by the second portion in response to the operation surface being pressed.
(B-7)
   In any one of configurations (B-1) to (B-3), the first holder may have a hole located between the operation surface of the first button at one side of the first holder and the first substrate at the other side of the holder. The first button may include a protruding portion that extends from a reverse side of the operation surface and configured to pass through the hole. The game controller may include an elastic member. The elastic member is configured to be deformed by being pressed by the protruding portion in response to the first button being pressed so that the elastic member contacts the first detection section.
(B-8)
   In any one of configuration (B-1) to (B-7), the first holder may include a first holder portion and a second holder portion. The first substrate is fixed to the first holder portion, and the first holder portion is fixed to an inner wall of the first grip. The first vibrator is fixed to the second holder portion, and the second holder portion is fixed to the first holder portion.
(B-9)
   In configuration (B-8) described above, the first holder portion may include a guide portion. The guide portion is configured to guide the second holder portion toward a fixation position with the first holder portion.
(B-10)
   In configuration (B-9) described above, the game controller may include a housing. The housing is a single-component housing having the first grip and the second grip and having an opening at least at an upper side of the game controller. The guide portion is configured to guide the second holder portion toward a tip direction of the first grip relative to the first holder portion fixed to an inner side of the first grip.
(B-11)
   In any one of configurations (B-8) to (B-10), the game controller may include a housing. The housing is a single-component housing having the first grip and the second grip and having an opening at least at an upper side of the game controller. The first holder portion fixed to an inner side of the first grip and the second holder portion may be fixed together by a fastening member facing toward a tip direction of the first grip.

The configurations described above are illustrative. In each of the configurations, one or more elements may be omitted. Some of the elements may be combined together.

### [Configuration of variation]

The embodiment described above is merely an example, and the individual elements may be deleted or replaced as needed. For example, while the embodiment described above has disclosed a single-component housing, a grip button, and a holder in a grip, the controller does not need to include all of these, and the individual structures may be modified.

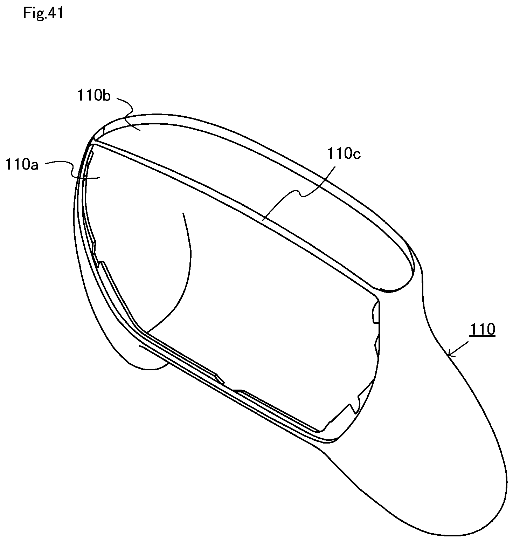

FIG. 41 is a view showing an example of the housing of the game controller according to a variation of the embodiment described above. As shown in FIG. 41, in other embodiments, instead of the configuration in which the opening is provided spanning from the front side of the game controller to the upper side of the game controller, a housing 110 may have a configuration separately having an opening 110a provided on the front side and an opening 110b provided on the upper side. In other words, the housing 110 may have a configuration having an edge 110c that divides between the upper opening 110b and the lower opening 110a so that the opening 110a provided on the front side and the opening 110b provided on the upper side are provided separately. Also with such a configuration, it is possible to ensure that no seam is formed on the side surface of the controller.

The controller may include a lid that covers the back surface, the side surface and the opening of the grip. The controller may not include a lid.

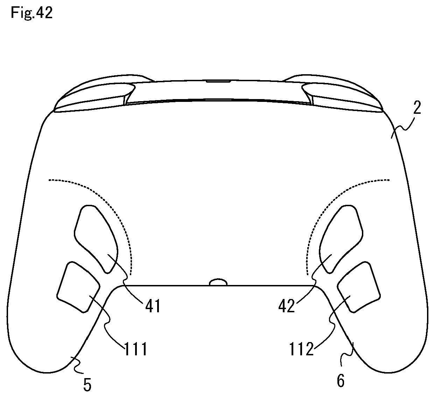

FIG. 42 is a view showing an example of the game controller according to a variation of the embodiment described above. FIG. 42 is a view of the game controller as viewed from the back side. As shown in FIG. 42, the game controller includes additional grip buttons 111 and 112 on the grips 5 and 6 in addition to the grip buttons 41 and 42 described above. Thus, the game controller 1 may be configured to include a plurality of grip buttons on one grip. In this case, at least one grip button may be provided along the valley bottom (the dotted line shown in FIG. 42) formed by the grip, and the grip buttons do not all have to be provided along the valley bottom. For example, the grip buttons 41, 42, 111 and 112 may be provided so that the edge of their respective operation surfaces that is closest to the valley bottom is along the valley bottom. Note that the operation surface of the grip button 41 or 42 arranged on the upper side on the grip 5 or 6 is larger than the operation surface of the grip button 111 or 112 arranged on the lower side, but the area of each operation surface is arbitrary. For example, in other embodiments, the operation surface of the grip button 111 or 112 may be larger than the operation surface of the grip button 41 or 42.

Note that in the configuration shown in FIG. 42, there may be one grip unit holder per grip. That is, two detection sections corresponding to two grip buttons provided on one grip may be held by one holder. These two detection sections may be provided on one substrate, or they may be provided on different substrates and the substrates may be held by a single holder. In other embodiments, one grip holder may be provided per grip button.

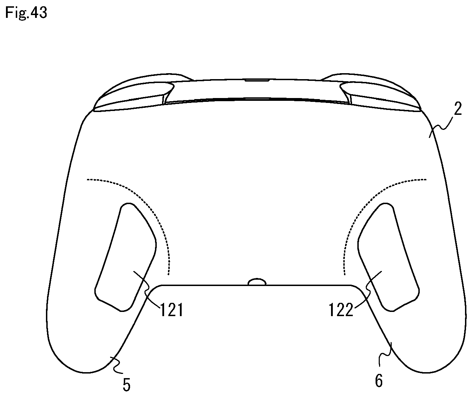

FIG. 43 is a view showing an example of the game controller according to a variation of the embodiment described above. FIG. 43 is a view of the game controller as viewed from the back side. The game controller may include a right grip button 121 and a left grip button 122 shown in FIG. 43 instead of the grip buttons 41 and 42 described above. The grip buttons 121 and 122 are shaped with a length in the direction in which the grip 5 or 6 extends that is longer than the grip buttons 41 and 42 described above. Note that also in the example shown in FIG. 43, as in the embodiment described above, the grip buttons 121 and 122 are provided along the valley bottom (the dotted line shown in FIG. 43). As shown in FIG. 43, by providing a grip button that extends long in the direction in which the grip extends, it is possible to increase the number of locations where the grip button can be operated.

Note that, in the configuration shown in FIG. 43, the game controller may include a plurality of (e.g., two) detection sections per grip button. Specifically, the game controller may include a first key rubber and a first detection section on the reverse side of the upper side portion of the operation surface of the grip button, and a second key rubber and a second detection section on the reverse side of the lower side portion of the operation surface. In this case, the first key rubber elastically deforms in response to the upper side portion of the operation surface being pressed by the user to contact the first detection section on the reverse side. The first detection section detects that an operation has been performed on the upper side portion of the operation surface by detecting the contact of the first key rubber. The second key rubber elastically deforms in response to the lower side portion of the operation surface being pressed by the user to contact the second detection section on the reverse side. The second detection section detects that an operation has been performed on the lower side portion of the operation surface by detecting the contact of the second key rubber. As described above, the grip buttons 121 and 122 may each have operation surfaces corresponding to two different operation inputs.

The controller may include any detection section as the detection section (specifically, an element in the housing) for detecting an operation on the grip button. For example, the controller may not include a grip substrate, and detection sections corresponding to grip buttons may be provided on the main body substrate.

The controller may include a housing of any shape having a grip. For example, the controller may include a single-component housing having steps or grooves with which the user may feel the texture on the grip or the side surface of the controller. The controller may have a housing that is formed by a combination of a plurality of housings. For example, the controller may have a housing including a front-side housing and a rear-side housing assembled together. The controller may include a grip cover that covers the grip portion of the assembled housing. The controller may have a housing including a housing forming the main body portion and another housing forming the grip assembled together. The controller may have a housing including a housing forming the main body portion and portions of the grip and another housing forming the remaining portions of the grips assembled together.

The controller may include a button at any location on the back side of the controller. For example, the operation surface of a grip button may not extend along the valley bottom. For example, the operation surface of the grip button may have a corner protruding toward the valley bottom. For example, a button may be provided on the back side of the main body portion. For example, the button may be provided to extend from the back side of the main body portion to the back side of the grip.

The number of grips included in the controller may be any number. The holder of the embodiment described above may be provided inside at least one grip.

The controller may be shaped to be grasped and operated with one hand. For example, the controller may be a left controller to be grasped by the left hand whose whole shape is the shape of the left half of the controller as shown in FIG. 1, a right controller to be grasped by the right hand whose whole shape is the shape of the right half of the controller as shown in FIG. 1, or a set of these left and right controllers. Note that at least one of the right side of the left controller or the left side of the right controller may have an attachment structure, and the left controller or the right controller may be capable of being attached/detached to/from a game device, a peripheral device, or each other by means of the attachment structure. The attachment structure is not limited and may be, for example, at least one of an engagement structure, a locking structure, a press-fit structure, or a magnetic adsorption structure. At least one of the left controller and the right controller may have a grip button. For example, at least one of the position and the shape of the grip button of the left controller may be in accordance with that of the left grip button of the controller of the present example. At least one of the position and the shape of the grip button of the right controller may be in accordance with that of the right grip button of the controller of the present example. As an example of the position of the grip button of the left controller, the left controller may have a grip protruding at least partly downward and at least partly in the back direction so as to at least partly form, together with the main body portion, on the back surface, a valley including a valley bottom extending toward the left side surface while extending upward, and may have a grip button at a position on the grip along the valley bottom while being spaced apart from the valley bottom. This similarly applies to the right controller. Note that the shape of the left controller and the right controller is not limited. The shape and number of housings for the left controller and the right controller are not limited.

The method of fastening various members is an example. The fastening member of the embodiment described above is an example. The fastening member may be, for example, screws, rivets, bolts, clips, pins, hooks, etc.

The game controller in the embodiment described above may, for example, be usable for a game application executed on any information processing device, such as a personal computer, a smartphone, a tablet device, or the like. That is, the game controller in the embodiment described above may be used by the user to give instructions to any information processing device that executes a game application.

While a game controller for giving instructions to a game application has been described in the embodiment described above, the game controller of the embodiment described above may be applicable, for example, as a controller for giving instructions to applications other than games.

Note that an information processing system may not include some of the elements of the embodiment described above or may not execute some of the processes executed in the embodiment described above. For example, in order to achieve some specific effects of the embodiment described above, the information processing system only needs to include elements for achieving these effects and execute processes for achieving these effects, and does not need to include other elements and execute other processes.

## Claims

1. A game controller (1) configured to be grasped by a user to provide an input, the game controller comprising:
a first input section (11-19, 21-23) at a front side of the game controller;
a single-component housing (2) comprising a first grip portion (5) and a second grip portion (6) and having an opening that spans between the front side and an upper side of the game controller, wherein the first grip portion and the second grip portion extend at least partly downward at a left side and at a right side, respectively, of the housing; and
a first lid (3) at least partly covering the opening of the front side of the game controller.

2. The game controller according to claim 1, wherein the housing forms a left side surface and a right side surface of the game controller and a part of the front surface of the game controller, spanning from the back side of the game controller to left edge and right edge of the opening at the front side of the game controller.

3. The game controller according to claim 1, wherein:
the first lid has a first hole through which the first input section passes; and
the game controller further comprises a second lid (4) that at least partly covers the opening of the upper side of the game controller.

4. The game controller according to claim 3, wherein:
the second lid is shaped to divide the opening of the upper side of the game controller in a forward-rearward direction and a left-right direction;
at a right side of the upper surface of the game controller, a right front side opening is formed by the second lid, the first lid and the housing, and a right rear side opening rearward of the right front side opening is formed by the second lid and the housing;
at a left side of the upper surface of the game controller, a left front side opening is formed by the second lid, the first lid and the housing, and a left rear side opening rearward of the left front side opening is formed by the second lid and the housing;
the game controller comprises:
a second input section (31) at the right front side opening;
a third input section (32) at the left front side opening;
a fourth input section (33) at the right rear side opening; and
a fifth input section (34) at the left rear side opening.

5. The game controller according to claim 1, wherein:
the first lid has a first hole through which the first input section passes; and
a detection circuit configured to detect an input to the first input section is housed in a cavity formed by at least the housing and the first lid,
the game controller comprises:
a first frame (51) on which the detection circuit is positioned; and
a second frame (71) having a second hole, the first input section passing through the second hole, the first input section being positioned at the second frame, and the second frame at least partly covering a front surface of the first frame; and
the first lid at least partly covers a front surface of the second frame.

6. The game controller according to claim 5, comprising a second fixing member (95, 96) that extends across an edge of the opening at the front side of the game controller and joins an inner surface of the housing and the second frame.

7. The game controller according to claim 6, wherein:
the second fixing member includes a housing opposing portion (95b, 96b) that opposes the inner surface of the housing and a second frame opposing portion (95a, 96a) that opposes the second frame;
the housing opposing portion has an opening into which a projecting portion that projects from the inner surface of the housing is inserted; and
the second frame opposing portion includes a fastened portion that is fastened to the second frame with a fastener.

8. The game controller according to claim 6, wherein:
the edge of the opening at the front side of the game controller includes a first edge portion extending in a left-right direction and a second edge portion extending upward from an end of the first edge portion; and
the second fixing member extends across the second edge portion.

9. The game controller according to claim 1, wherein:
the edge of the opening includes:
a first edge portion extending upward and rightward on the front side and on a left side of the game controller;
a second edge portion extending rearward and leftward from an upper end of the first edge portion on the upper side and on the left side of the game controller;
a third edge portion extending upward and leftward on the front side and on a right side of the game controller; and
a fourth edge portion extending rearward and rightward from the upper end of the third edge portion on the upper side and on the right side of the game controller.

10. The game controller according to claim 9, wherein:
on the front side of the game controller, the edge of the opening includes:
a fifth edge portion extending in a left-right direction;
a sixth edge portion extending upward and leftward from a left end of the fifth edge portion; and
a seventh edge portion extending upward and rightward from a right end of the fifth edge portion;
the first edge portion extends upward and rightward from an upper end of the sixth edge portion; and
the third edge portion extends upward and leftward from an upper end of the seventh edge portion.

11. The game controller according to claim 9, further comprising:
a second lid (4) that at least partly covers the opening and is shaped to divide, left and right, the opening at the upper side of the game controller, wherein:
the second lid is shaped to divide the opening of the upper side of the game controller in a left-right direction;
at a left side of the upper surface of the game controller, a left side opening is formed by the second lid, the first lid and the second edge portion of the housing; and
at a right side of the upper surface of the game controller, a right side opening is formed by the second lid, the first lid and the fourth edge portion of the housing;
the game controller comprises:
a second input section (32) positioned in the left side opening; and
a third input section (31) positioned in the right side opening;
the upper end of the first edge portion is located forward relative to a left end of the second input section; and
the upper end of the third edge portion is located forward relative to a right end of the third input section.

12. The game controller according to claim 1, wherein:
the edge of the opening includes:
a front left edge portion extending in an up-down direction on a left side of the front side of the game controller;
an upper left edge portion extending in a front-rear direction on a left side of the upper side of the game controller so as to form, together with the front left edge portion, a first corner that protrudes toward an inner side of the game controller in a left-right direction;
a front right edge portion extending in the up-down direction on a right side of the front side of the game controller; and
an upper right edge portion extending in the front-rear direction on a right side of the upper side of the game controller so as to form, together with the front right edge portion, a second corner that protrudes toward the inner side of the game controller in the left-right direction.

13. The game controller according to claim 12, further comprising:
a second lid (4) that at least partly covers the opening and is shaped to divide, left and right, the opening at the upper side of the game controller, wherein:
the second lid is shaped to divide the opening of the upper side of the game controller in a left-right direction;
at a left side of the upper surface of the game controller, a left side opening is formed by the second lid, the first lid and the upper left edge portion; and
at a right side of the upper surface of the game controller, a right side opening is formed by the second lid, the first lid and the upper right edge portion;
the game controller comprises:
a second input section (32) positioned in the left side opening; and
a third input section (31) positioned in the right side opening;
the first corner is located forward relative to a left end of the second input section; and
the second corner is located forward relative to a right end of the third input section.

14. The game controller according to claim 1, wherein:
the edge of the opening includes:
an upper left edge portion extending in a front-rear direction on a left side of the upper side of the game controller from an upper end of a first seam located between the housing and a front left portion of the first lid, wherein the front left portion is on the front side and on a left side of the game controller; and
an upper right edge portion extending in the front-rear direction on a right side of the upper side of the game controller from an upper end of a second seam located between the housing and a front right portion of the first lid, the front right portion is on the front side and on a right side of the game controller.

15. The game controller according to claim 14, further comprising:
a second lid (4) that at least partly covers the opening and is shaped to divide, left and right, the opening at the upper side of the game controller, wherein:
the second lid is shaped to divide the opening of the upper side of the game controller in a left-right direction;
at a left side of the upper surface of the game controller, a left side opening is formed by the second lid, an upper edge left portion extending in a right direction from the upper end of the first seam of the first lid and the upper left edge portion of the housing; and
at a right side of the upper surface of the game controller, a right side opening is formed by the second lid, an upper edge right portion extending in a left direction from the upper end of the second seam of the first lid and the upper right edge portion of the housing;
the game controller comprises:
a second input section (32) positioned in the left side opening; and
a third input section (31) positioned in the right side opening;
the upper end of the first seam is located forward relative to a left end of the second input section; and
the upper end of the second seam is located forward relative to a right end of the third input section.
